(19) Europäisches Patentamt
European Patent Office
Office européen des brevets

(11) EP 1 845 573 A1

(12) **EUROPEAN PATENT APPLICATION**
published in accordance with Art. 158(3) EPC

(43) Date of publication:
**17.10.2007 Bulletin 2007/42**

(21) Application number: **06702027.1**

(22) Date of filing: **04.01.2006**

(51) Int Cl.:
***H01M 8/02*** (2006.01) ***H01B 1/06*** (2006.01)
***H01B 13/00*** (2006.01) ***H01M 8/10*** (2006.01)

(86) International application number:
**PCT/JP2006/300007**

(87) International publication number:
**WO 2006/073146 (13.07.2006 Gazette 2006/28)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **04.01.2005 JP 2005000046**

(71) Applicant: **Hitachi Chemical Co., Ltd.**
**Tokyo 163-0449 (JP)**

(72) Inventors:
- **FUKUCHI, Iwao,**
**Hitachi Chemical Company, Ltd.**
**Hitachi-shi, Ibaraki 3178555 (JP)**
- **KAMIJIMA, Kouichi,**
**Hitachi Chemical Company, Ltd.**
**Hitachi-shi, Ibaraki 3178555 (JP)**
- **SASAKI, Shoichi,**
**Hitachi Chemical Company, Ltd.**
**Hitachi-shi, Ibaraki 3178555 (JP)**
- **NAKAZAWA, Satoshi,**
**Hitachi Chemical Company, Ltd.**
**Hitachi-shi, Ibaraki 3178555 (JP)**
- **ORITA, Akihiro,**
**Hitachi Chemical Company, Ltd.**
**Hitachi-shi, Ibaraki 3178555 (JP)**
- **TAKEDA, Shinji,**
**Hitachi Chemical Company, Ltd.**
**Hitachi-shi, Ibaraki 3178555 (JP)**

(74) Representative: **HOFFMANN EITLE**
**Patent- und Rechtsanwälte**
**Arabellastrasse 4**
**81925 München (DE)**

(54) **PHASE SEPARATION TYPE POLYMER ELECTROLYTE FILM, ELECTRODE/PHASE SEPARATION TYPE POLYMER ELECTROLYTE FILM ASSEMBLY EMPLOYING THE SAME, PROCESSES FOR PRODUCING THE SAME, AND FUEL CELL EMPLOYING THE SAME**

(57) A phase-separated polymer electrolyte membrane is provided which has a low degree of swelling in water and methanol, excels in resistance to water and methanol, and has high methanol barrier property and a low membrane resistance. An electrode - phase-separated polymer electrolyte membrane joint using the membrane, a method for manufacturing the membrane and joint, and a fuel cell using them are also provided. There is provided a polymer electrolyte membrane having two phases: a domain phase comprising an electrolyte polymer (a) and a matrix phase comprising a polymer (b) that inhibits swelling of component (a), the membrane also having a three-dimensional structure that can conduct protons and substantially connects the domains of (a).



Printed by Jouve, 75001 PARIS (FR)

**Description**

TECHNICAL FIELD

The present invention relates to a phase-separated polymer electrolyte membrane, an electrode - phase-separated polymer electrolyte membrane joint, a method for manufacturing the membrane and the joint, and a fuel cell using same.

BACKGROUND ART

Fuel cells have high power generation efficiency and excellent environmental friendliness and they are expected to become power generation devices of next generation that are capable of making contribution to resolution of environmental and energy problems that are presently of major importance. Among fuel cells, polymer fuel cells have smaller size and higher output than fuel cells of other systems, and polymer fuel cells will play a major role as next-generation small-scale onsite fuel cells for movable objects (vehicles) and portable devices.
At present, polymer fuel cells have not yet reached a stage of practical use, but Nafion® and Flemion® are known as fluorine-containing polymer electrolyte membranes having a perfluoroalkylene group as the main skeleton and an ion-exchange group such as a sulfonic acid group and a carboxylic acid group at the ends of some of perfluorovinyl ether side chains, and these polymer electrolyte membranes for fuel cells are used at an experimental and test stages.
However, the problems associated with Nafion®, which is a polymer electrolyte membrane, are that where a fuel cell is to be operated under conditions in excess of 100°C, the content of water in the polymer electrolyte membrane rapidly decreases and softening of the polymer electrolyte membrane becomes significant. Further, when a conventional fluorine-containing proton-conducting polymer material such as Nafion® is used as an electrolyte in a fuel cell of a direct methanol type, which is expected to be widely used in the future, methanol that penetrates through an anode diffuses in the electrolyte membrane and reaches a cathode, causing a short circuiting effect (crossover) that is a direct reaction with an oxidizing agent ($O_2$) on the cathode catalyst. The resultant problem is that fuel cell performance is greatly degraded and sufficient performance level cannot be demonstrated. This methanol crossover becomes more significant with increase in concentration of methanol that is a fuel and increase in temperature at which the catalytic action of electrode is triggered.
In addition to fluorine-containing proton-conducting polymer materials, hydrocarbon-type proton-conducting polymer materials such as sulfonated aromatic polyether ketones (Patent Document 1) have also been investigated as polymer electrolyte membranes. Such polymer electrolyte membranes can increase proton conductivity and methanol barrier property with respect to those of polymer electrolyte membranes of fluorine-containing proton-conducting polymer materials, but the target levels are yet to be reached, and such materials are still unsuitable for use as polymer electrolyte membranes. A method that uses a polyimide having a specific protonic acid group as an electrolyte membrane to demonstrate higher proton conductivity and better methanol barrier property has been suggested (Patent Document 2), but the drawback of this method is that drop in output voltage increases with the increase in current density in actual applications to fuel cells.
The drop in output voltage caused by the rise in current density becomes more significant with increase in electrolyte membrane resistance. Generally, the membrane resistance tends to decrease as the membrane thickness decreases, but an electrolyte membrane of reduced thickness cannot serve as a barrier for methanol, the above-described crossover is initiated, and fuel cell performance decreases significantly.
Further, an attempt has also been made to reduce crossover by inhibiting swelling of the electrolyte polymer. For example, in Patent Document 3 and Patent Document 4, a microporous filling-type electrolyte membrane in which a porous substrate is filled with an electrolyte polymer is investigated. This microporous filling-type electrolyte membrane is described to have high methanol barrier property superior to that of Nafion even in a high-temperature range because the porous substrate inhibits swelling of the electrolyte filler. However, with the microporous filling membrane, the pores of the porous substrate cannot be filled with a sufficient amount of electrolyte.
Filling operations have to be repeated to increase the electrolyte filling ratio, and the production cost can be raised.
In Patent Document 5, blending of a polymer having a basic functional group with an electrolyte polymer having an acidic functional group with the object of introducing a pseudo-crosslinked structure created by an acid-base reaction in the system is investigated as a method for inhibiting electrolyte swelling. However, because the number of acidic functional groups is substantially reduced by reaction with the base, there is a risk of decreasing proton conductivity. Furthermore, when an electrolyte membrane is produced by coating the blended polymer solution and drying, the pseudo-crosslinked structure created by the acid-base reaction can decrease flowability of the blended polymer solution and degrade coatability thereof.
A three-component polymer blend electrolyte membrane comprising an acidic polymer, a basic polymer, and an elastic polymer has also been investigated (Patent Document 6). Here, the basic polymer demonstrates an effect of

inhibiting electrolyte swelling by pseudo-crosslinking based on the acid-base reaction in the same manner as in Patent Document 5, but similarly to the results described in Patent Document 5, the decrease in proton conductivity and degradation of coatability cause concerns.
Further, a polyacrylonitrile-containing polymer is indicated as the elastic polymer, and the improvement of mechanical properties of the electrolyte membrane and improvement of methanol barrier efficiency are described. It is also described that the elastic polymer is desired to assume a semi-interpenetration polymer network (semi-IPN) that is different from the phase-separated structure of the present patent. A method, by which a polymer blend membrane comprising an acidic polymer and a basics polymer is swelled by a monomer serving as an elastic polymer precursor and then the elastic polymer precursor monomer is polymerized, is described as a method for manufacturing an electrolyte membrane having the semi-interpenetration polymer network (semi-IPN), but the problem is that the manufacturing process includes many stages and the production cost is high.

[Patent Document 1] Japanese Patent Application Laid-open No. H6-93114
[Patent Document 2] Japanese Patent Application Laid-open No. 2003-338298
[Patent Document 3] Japanese Patent Application Laid-open No. 2002-83612
[Patent Document 4] International Patent Application No. 00/54351 (Pamphlet)
[Patent Document 5] International Patent Application No. 99/54389 (Pamphlet)
[Patent Document 6] Japanese Patent Publication Tokuhyo 2003-535940

DISCLOSURE OF THE INVENTION

PROBLEMS TO BE SOLVED BY THE INVENTION

With the foregoing in view it is an object of the present invention to provide a polymer electrolyte membrane that has small swelling by water and methanol, excellent resistance to water and resistance to methanol, high methanol barrier property, and low membrane resistance, and also to provide an electrode - phase-separated polymer electrolyte membrane joint using the polymer electrolyte membrane, a method for manufacturing the membrane and the joint, and a fuel cell using same.

MEANS FOR SOLVING THE PROBLEMS

The inventors have discovered that by drying and solidifying a polymer mixed liquid simultaneously comprising an electrolyte polymer (a) and a polymer (b) capable of inhibiting swelling of the electrolyte polymer, it is possible to obtain a polymer electrolyte membrane in which the electrolyte polymer (a) is inserted in pores of the polymer (b). This finding led to the creation of the present invention.
Thus, the present invention relates to:

[1] A polymer electrolyte membrane comprising two phases: a domain phase comprising an electrolyte polymer (a) and a matrix phase comprising a polymer (b) that inhibits swelling of the component (a), wherein the membrane has a substantially continuous three-dimensional structure in the domains of (a).
[2] The polymer electrolyte membrane according to [1], wherein the component (b) comprises a resin having resistance to methanol and/or resistance to water.
[3] The polymer electrolyte membrane according to [1], wherein the component (b) comprises a resin having a glass transition temperature (Tg) and/or a melting point of -30°C to 400°C.
[4] The polymer electrolyte membrane according to [1], wherein the component (b) comprises at least one selected from the group consisting of polyimides, polyamides, polyesters, polyurethanes, polycarbonates, polyethers, polyphenylenes, polybenzimidazoles, polyetherketones, polyethersulfones, silicone resins, fluororesins, poly(vinylidene fluoride), phenolic resins, epoxy resins, melamine resins, urea resins, furan resins, alkyd resins, acrylic resins, polyethylene, polypropylene, polystyrene, and/or copolymers thereof.

[5] The polymer electrolyte membrane according to [1], wherein the component (b) comprises poly(meth)acrylonitrile and/or reaction products obtained by heating poly(meth)acrylonitrile.
[6] The polymer electrolyte membrane according to [1], wherein the component (b) comprises poly(meth)acrylonitrile and/or resins having a cyclic structure obtained by heating poly(meth)acrylonitrile.
[7] The polymer electrolyte membrane according to [1], wherein the component (a) is a polymer comprising a sulfonic

acid group and/or a phosphoric acid group and/or a carboxyl group.
[8] The polymer electrolyte membrane according to [1], further comprising an additive.
[9] The polymer electrolyte membrane according to claim 8, wherein the additive is a silane coupling agent or a crosslinking agent.
[10] The polymer electrolyte membrane according to [1], wherein a weight-average molecular weight of the component (a) is 1000 to 1,000,000, and a weight-average molecular weight of the component (b) is 1000 to 5,000,000.
[11] The polymer electrolyte membrane according to [1], wherein a membrane thickness is 1 to 200 μm.
[12] The polymer electrolyte membrane according to [1], wherein a size of the domain phase appearing on a surface of the polymer electrolyte membrane is 0.05 to 30 μm, as an average value of diameter thereof.
[13] The polymer electrolyte membrane according to [1], wherein a content ratio of the component (b) to the component (a) is 1 to 500%.

[14] The polymer electrolyte membrane according to [1], wherein ion-exchange equivalent weight (EW value) of the component (a) is 300 to 1500.
[15] A method for manufacturing the polymer electrolyte membrane according to [1], comprising the steps of:

(1) preparing a polymer mixed liquid by melting the component (a) and the component (b) or dissolving the two components in a solvent; and
(2) producing a polymer electrolyte membrane by coating the polymer mixed liquid on a substrate and then drying.

[16] A multilayer polymer electrolyte membrane comprising two or more layers of the electrolyte membrane for a fuel cell according to [1].
[17] An electrode - polymer electrolyte membrane joint comprising an electrode and the polymer electrolyte membrane according to [1] that is disposed on the electrode.
[18] A fuel cell using the electrode - polymer electrolyte membrane joint according to claim [17].
[19] A polymer electrolyte membrane having a plurality of domain phases comprising an electrolyte polymer (a) and a matrix phase comprising a polymer (b) that inhibits swelling of the electrolyte polymer, wherein at the surface of the polymer electrolyte membrane, the domain phases are separated from each other and dispersed in the matrix phase, and the domain phases are present so as to link one surface of the polymer electrolyte membrane with another surface thereof.

EFFECT OF THE INVENTION

With the polymer electrolyte membrane in accordance with the present invention, an electrode - polymer electrolyte membrane joint that combines high methanol barrier property with low membrane resistance and a fuel cell using such joint can be provided. Further, because the polymer electrolyte membrane in accordance with the present invention can be manufactured by a simple process, the membrane has stable quality and a low production cost.

BEST MODE FOR CARRYING OUT THE INVENTION

The present invention will be described below in greater detail.

<Structure of polymer electrolyte membrane in accordance with the present invention>

The polymer electrolyte membrane in accordance with the present invention has the so-called phase-separated structure. A phase-separated structure is a structure in which polymer phases formed when two or more mutually insoluble polymers are blended are separated from each other, and examples of such structure include the so-called sea-island structure and continuous structure. More specifically the polymer electrolyte membrane in accordance with the present invention comprises a domain phase comprising an electrolyte polymer (a) and a matrix phase comprising a polymer (b) that inhibits swelling of the component (a). Thus, the polymer electrolyte membrane in accordance with the present invention has a structure in which the matrix phase serves as a substrate, and a plurality of domain phases are dispersed in the matrix phase. At this time, at the surface of the polymer electrolyte membrane, a plurality of domain phases are separated from each other and dispersed in the matrix phase. Further, the domain phases are present so as to link together one surface of the polymer electrolyte membrane and another surface thereof. Since the domain phases are present so as to link the two surfaces, protons can be conducted between the two surfaces. Further, since the domain phases are surrounded by the matrix phase, swelling of the electrolyte polymer (a) forming the domain phase under the

effect of water or alcohol can be effectively inhibited.

The size of domain phases appearing on the surface of polymer electrolyte membrane is, for example, 0.05 to 30 μm, preferably 0.08 to 20 μm, more preferably 0.1 to 15 μm, and even more preferably 0.31 to 10 μm, as an average value of diameter. Where the size of domains is 0.05 μm or more, a sufficient proton conductivity can be demonstrated, and where the size is 30 μm or less, methanol barrier property is not decreased. The average value of diameter as referred to herein means an average value of maximum diameter and minimum diameter of pores of a porous membrane from which the domain phase of the polymer electrolyte membrane has been removed by etching.

The phase-separated structure of the polymer electrolyte membrane in accordance with the present invention may be a co-continuous structure in which the electrolyte polymer (a) and the polymer (b) that inhibits swelling of the component (a) are three-dimensionally intertwined in a complex matter.

Further, the polymer electrolyte membrane in accordance with the present invention has a substantially continuous three-dimensional structure that can conduct protons in domains comprising the electrolyte polymer (a). At least two of the domains adjacent in the membrane thickness direction are preferably joined so as to link together one surface of the polymer electrolyte membrane with another surface thereof. When the circumference of domain is completely covered with the matrix, there is a risk of decreasing proton conductivity. Further, when joints between the domains are formed only in the planar direction of the membrane, there is a risk of decreasing proton conductivity in the membrane thickness direction.

The phase-separated structure of the polymer electrolyte membrane in accordance with the present invention can be confirmed by shape observations performed using a scanning electronic microscope (SEM) or atomic force microscope (AFM). For example, where domains of the electrolyte polymer (a) are removed by etching, only the matrix phase of polymer (b) having a porous structure remains. This phase-separated structure can be observed by observing this matrix phase by using the SEM and AFM.

Examples of suitable etching methods include a method using a hydrogen peroxide - iron (II) sulfate mixed solution (Fenton reagent) and a method of.extraction with a solvent that dissolves the electrolyte polymer (a).

Further, it is desirable that the structure of component (b) in accordance with the present invention be not fractured, for example, by an etching method (see the below-described Reference Example 1) in which immersion is performed in a solution (Fenton reagent) prepared by adding 5 ppm $FeSO_4$ to 3% aqueous solution of hydrogen peroxide. Where the structure is fractured by etching, cracks appear in the etched membrane and the membrane is fractured (fragmented). The membrane fragmented by etching can have degraded resistance to water and methanol.

The ratio of pores (porosity) that appeared in etching is preferably within a range from 15 vol.% to 99 vol.%, wherein the volume found from outer dimensions (length, width, thickness of the membrane) of the etched membrane is taken as 100 vol.%. Where the porosity is 15 vol.% or more, good proton conductivity of membrane can be maintained, and where the porosity is 99 vol.% or less, good water resistance and methanol barrier property of membrane can be maintained.

The phase-separated structure of the polymer electrolyte membrane in accordance with the present invention can be arbitrarily changed by controlling the composition ratio of the electrolyte polymer (a) and polymer (b), solubility parameter (SP value), surface energy, contact angle, and the like.

When the polymer electrolyte membrane in accordance with the present invention is manufactured using a solution comprising the polymers (a) and (b), the phase separation shape can be arbitrarily changed also by varying the type of solvent, concentration of solution, method for removing the solvent, and drying conditions of the membrane (temperature, time, humidity, pressure, dryer type, air flow rate, etc.).

< Polymer of component (b)>

No specific limitation is placed on the component (b) in accordance with the present invention, provided that it is a polymer inhibiting swelling of the component (a), but it is desirable that a resin be used that has resistance to methanol and/or resistance to water and/or a glass transition temperature (Tg) of preferably from -30°C to 400°C, more preferably from -10°C to 300°C, and even more preferably from 0°C to 250°C.

Examples of polymers (b) that inhibit swelling of the component (a) include resins comprising at least one from the group consisting of polyimides, polyamides, polyesters, polyurethanes, polycarbonates, polyethers, polyphenylenes, polybenzimidazoles, polyether ketones, polyether sulfones, silicone resins, fluororesins, poly(vinylidene fluoride), phenolic resins, epoxy resins, melamine resins, urea resins, furan resins, alkyd resins, acrylic resins, polyethylene, polypropylene, polystyrene, and/or copolymers thereof.

Further, a resin comprising poly(meth)acrylonitrile and/or reaction products obtained by heating poly(meth)acrylonitrile can be also advantageously used as the component (b) because of high strength, resistance to water, and methanol barrier property of the membrane. The reaction products are compounds (resins) having a nitrogen-containing heterostructure such as imine skeleton and pyridine skeleton. In particular, a resin having a nitrogen-containing heterostructure obtained by heating polyacrylonitrile is an orthocondensed polyimine.

A heating temperature employed when a structure cyclized by heating poly(meth)acrylonitrile is introduced in the component (b) in accordance with the present invention is preferably 100°C or more to less than 300°C. Where the heating temperature is 100°C or more, the cyclization reaction proceeds rapidly, and where the heating temperature is less than 300°C, the cyclization reaction does not proceed excessively.
In order to enhance the cyclization reaction of poly(meth)acrylonitrile, it is preferred that a compound having an acidic functional group such as a sulfonic acid group, a phosphoric acid group, and a carboxylic group be present in the reaction system. Acrylic acid is an example of such compound.
When a compound having an acidic functional group is present, the reaction temperature can be suppressed.

When polymers derived from radical-polymerizable monomers, such as acrylic resins, polyethylene, polypropylene, polystyrene, and poly(meth)acrylonitrile are used as the component (b), then copolymers of the monomers that are structural units thereof and other radical-polymerizable monomers that are different from these monomers may be used as the component (b).
Examples of such other radical-polymerizable monomers include alkyl (meth)acrylic acid esters such as methyl (meth) acrylate, ethyl (meth) acrylate, n-propyl (meth) acrylate, isopropyl (meth)acrylate, n-butyl (meth)acrylate, isobutyl (meth) acrylate, t-butyl (meth) acrylate, amyl (meth)acrylate, isoamyl (meth)acrylate, hexyl (meth)acrylate, heptyl (meth) acrylate, octyl (meth)acrylate, 2-ethylhexyl (meth)acrylate, nonyl (meth)acrylate, decyl (meth)acrylate, isodecyl (meth)acrylate, lauryl (meth)acrylate, tridecyl (meth)acrylate, hexadecyl (meth)acrylate, stearyl (meth) acrylate, isostearyl (meth)acrylate, cyclohexyl (meth)acrylate, and isobornyl (meth)acrylate.

Other examples include (meth)acrylic acid esters having an oxyethylene chain, such as ethoxydiethylene glycol acrylate (trade name: Light Acrylate EC-A, product of Kyoeisha Chemical Co., Ltd.,), methoxytriethylene glycol acrylate (trade name: Light Acrylate MTG-A, product of Kyoeisha Chemical Co., Ltd.; trade name: NK Ester AM-30G, product of Shin-Nakamura Chemical Co., Ltd.), methoxypoly (n = 9) ethylene glycol acrylate (trade name: Light Acrylate 130-A, product of Kyoeisha Chemical Co., Ltd.; trade name: NK Ester AM-90G, product of Shin-Nakamura Chemical Co., Ltd.,), methoxypoly (n = 13) ethylene glycol acrylate (trade name: NK Ester AM-130G), methoxypoly (n = 23) ethylene glycol acrylate (trade name: NK Ester AM-230G, product of Shin-Nakamura Chemical Co., Ltd.), octoxypoly (n = 18) ethylene glycol acrylate (trade name: NK Ester A-OC-18E, product, of Shin-Nakamura Chemical Co., Ltd.), phenoxypolydiethylene glycol acrylate (trade name: Light Acrylate P-200A, product of Kyoeisha Chemical Co., Ltd.; trade name: NK Ester AMP-20GY, product of Shin-Nakamura Chemical Co., Ltd.), phenoxypoly (n = 6) ethylene glycol acrylate (trade name: NK Ester AMP-60G, product of Shin-Nakamura Chemical Co., Ltd.), nonylphenol EO adduct (n = 4) acrylate (trade name: Light Acrylate NP-4EA, product of Kyoeisha Chemical Co., Ltd.), nonylphenol EO adduct (n = 8) acrylate (trade name: Light Acrylate NP-8EA, product of Kyoeisha Chemical Co., Ltd.), methoxydiethylene glycol methacrylate (trade name: Light Ester MC, product of Kyoeisha Chemical Co., Ltd.; trade name: NK Ester M-20G, product of Shin-Nakamura Chemical Co., Ltd.), methoxytriethylene glycol methacrylate (trade name: Light Ester MTG, product of Kyoeisha Chemical Co., Ltd.), methoxypoly (n = 9) ethylene glycol methacrylate (trade name: Light Ester 130MA, product of Kyoeisha Chemical Co., Ltd.; trade name: NK Ester M-90G, product of Shin-Nakamura Chemical Co., Ltd.), methoxypoly (n = 23) ethylene glycol methacrylate (trade name: NK Ester M-230G, product of Shin-Nakamura Chemical Co., Ltd.), and methoxypoly (n = 30) ethylene glycol methacrylate (trade name: Light Ester 041MA, product of Kyoeisha Chemical Co., Ltd.).

Other examples include acrylic carboxyl group-containing monomers such as acrylic acid and methacrylic acid, crotonic carboxyl group-containing monomers such as crotonic acid, maleic carboxyl group-containing monomers such as maleic acid and anhydride thereof, itaconic carboxyl group-containing monomers such as itaconic acid and anhydride thereof, citraconic carboxyl group-containing monomers such as citraconic acid and anhydride thereof, phosphoric acid group-containing monomers such as acid phosphoxyethyl methacrylate (trade name: Phosmer M, product of Unichemical Co., Ltd.), 3-chloro-2-acidophosphoxy propyl methacrylate (trade name: Phosmer CL, product of Unichemical Co., Ltd.), acid phosphoxy polyoxyethylene glycol monomethacrylate (trade name: Phosmer PE, product of Unichemical Co., Ltd.), and methacroyloxyethyl acid phosphate monoethanolamine half salt (trade name: Phosmer MH, product of Unichemical Co., Ltd.), and sulfonic acid group-containing monomers such as 3-sulfonic acid propylene methacrylate and salts thereof, 2-acrylamide-2-methylpropane sulfonic acid and salts thereof, and styrenesulfonic acid and salts thereof. Other examples include polyfunctional (meth)acrylic acid esters such as triethylene glycol diacrylate (trade name: Light Acrylate 3EG-A, product of Kyoeisha Chemical Co., Ltd.), polyethylene glycol glycol diacrylates (trade name: NK Ester A-200, NK Ester A-400, NK Ester A-600, NK Ester A-1000, products of Shin-Nakamura Chemical Co., Ltd.; trade name: Light Acrylate 4EG-A, Light Acrylate 9EG-A, Light Acrylate 14EG-A, products of Kyoeisha Chemical Co., Ltd.), ethoxylated bisphenol A diacrylate (trade name: NK Ester ABE-300, NK Ester A-BPE-4, NK Ester A-BPE-10, NK Ester A-BPE-20, NK Ester A-BPE-30, products of Shin-Nakamura Chemical Co., Ltd.; trade name: Light Acrylate BP-4EA, Light Acrylate BP-10EA, products of Kyoeisha Chemical Co., Ltd.), propoxylated bisphenol A diacrylate (trade name: NK Ester A-BPP-3, product of Shin-Nakamura Chemical Co., Ltd.; trade name: Light Acrylate BP-4PA, product of Kyoeisha Chemical Co., Ltd.),

1,10-decanediol diacrylate (trade name: NK Ester A-DOD, product of Shin-Nakamura Chemical Co., Ltd.), tricyclodecane dimethanol diacrylate (trade name: NK Ester A-DCP, product of Shin-Nakamura Chemical Co., Ltd.), ethoxylated 2-methyl-1,3-propanediol diacrylate (trade name: NK Ester A-IBD-2E, product of Shin-Nakamura Chemical

Co., Ltd.), neopentylglycol diacrylate (trade name: NK Ester A-NPG, product of Shin-Nakamura Chemical Co., Ltd.; trade name: Light Acrylate NP-A, product of Kyoeisha Chemical Co., Ltd.,), 3-methyl-1.5-pentanediol diacrylate (trade name: Light Acrylate MDP-A, product of Kyoeisha Chemical Co., Ltd.), 2-hydroxy-3-acryloyloxypropyl methacrylate (trade name: NK Ester 701A, product of Shin-Nakamura Chemical Co., Ltd.), propoxylated ethoxylated bisphenol A diacrylate (trade name: NK Ester A-B1206PE, product of Shin-Nakamura Chemical Co., Ltd.), 1,6-hexanediol diacrylate (trade name: NK Ester A-HD-N, product of Shin-Nakamura Chemical Co., Ltd.; trade name: Light Acrylate 1.6HX-A, product of Kyoeisha Chemical Co., Ltd.), 2-butyl-2-ethyl-1.3-propoxydiol diacrylate (trade name: Light Acrylate BEPG-A, product of Kyoeisha Chemical Co., Ltd.), 1,9-nonanediol diacrylate (trade name: NK Ester A-NOD-N, product of Shin-Nakamura Chemical Co., Ltd.; trade name: Light Acrylate 1.9ND-A, product of Kyoeisha Chemical Co., Ltd.),

2-methyl-1.8-octanediol diacrylate and 1,9-nonanediol diacrylate mixture (trade name: Light Acrylate MOD-A, product of Kyoeisha Chemical Co., Ltd.), dimethylol tricyclodecane diacrylate (trade name: Light Acrylate DCP-A, product of Kyoeisha Chemical Co., Ltd.), dipropylene glycol diacrylate (trade name: NK Ester APG-100, product of Shin-Nakamura Chemical Co., Ltd.), tripropylene glycol diacrylate (trade name: NK Ester APG-200, product of Shin-Nakamura Chemical Co., Ltd.), polypropylene glycol diacrylate (trade name: NK Ester APG-400, NK Ester APG-700, products of Shin-Nakamura Chemical Co., Ltd.), 2-acryloyloxy ethyl acid phosphate (trade name: Light Acrylate P-2A, product of Kyoeisha Chemical Co., Ltd.), trimethylol propane acrylic acid benzoic acid ester (trade name: Light Acrylate BA-134, product of Kyoeisha Chemical Co., Ltd.), 2-hydroxy-3-acryloyloxypropyl methacrylate (trade name: Light Acrylate G-201P, product of Kyoeisha Chemical Co., Ltd.), ethoxylated isocyanuric acid triacrylate (trade name: NK Ester A-9300, product of Shin-Nakamura Chemical Co., Ltd.), ethoxylated trimethylol propane triacrylate (trade name: NK Ester AT-30E, NK Ester A-TMPT-3EO, NK Ester A-TMPT-9EO products of Shin-Nakamura Chemical Co., Ltd.; trade name: Light Acrylate TMP-6EO-3A, product of Kyoeisha Chemical Co., Ltd.), trimethylolpropane triacrylate (trade name: NK Ester A-TMPT, product of Shin-Nakamura Chemical Co., Ltd.; trade name: Light Acrylate TMP-A, product of Kyoeisha Chemical Co., Ltd.), propoxylated trimethylol propane triacrylate (trade name: NK Ester A-TMPT-3PO, product of Shin-Nakamura Chemical Co., Ltd.), pentaerythritol triacrylate (trade name: NK Ester A-TMM-3, NK Ester A-TMM-3L, NK Ester A-TMM-3LM-N, products of Shin-Nakamura Chemical Co., Ltd.; trade name: Light Acrylate PE-3A, product of Kyoeisha Chemical Co., Ltd.), ethoxylated pentaerythritol tetraacrylate (trade name: NK Ester ATM-35E, NK Ester ATM-4E, products of Shin-Nakamura Chemical Co., Ltd.; trade name: Light Acrylate PE-4A, product of Kyoeisha Chemical Co., Ltd.),

ditrimethylol propane tetraacrylate (trade name: NK Ester AD-TMP, NK Ester AD-TMP-L, products of Shin-Nakamura Chemical Co., Ltd.), propoxylated pentaerythritol acrylate (trade name: NK Ester ATM-4P, product of Shin-Nakamura Chemical Co., Ltd.), pentaerythritol tetraacrylate (trade name: NK Ester A-TMMT, product of Shin-Nakamura Chemical Co., Ltd.), dipentaerythritol hexaacrylate (trade name: NK Ester A-DPH, product of Shin-Nakamura Chemical Co., Ltd.; trade name: Light Acrylate DPE-6A, product of Kyoeisha Chemical Co., Ltd.), ethylene glycol dimethacrylate (trade name: NK Ester 1G, product of Shin-Nakamura Chemical Co., Ltd.; trade name: Light Ester EG, product of Kyoeisha Chemical Co., Ltd.), diethylene glycol dimethacrylate (trade name: NK Ester 2G, product of Shin-Nakamura Chemical Co., Ltd.; trade name: Light Ester 2EG, product of Kyoeisha Chemical Co., Ltd.), triethylene glycol dimethacrylate (trade name: NK Ester 3G, product of Shin-Nakamura Chemical Co., Ltd.; trade name: Light Ester 3EG, product of Kyoeisha Chemical Co., Ltd.), tetraethylene glycol dimethacrylate (trade name: NK Ester 4G, product of Shin-Nakamura Chemical Co., Ltd.; trade name: Light Ester 4EG, product of Kyoeisha Chemical Co., Ltd.), polyethylene glycol dimethacrylate (trade name: NK Ester 9G, NK Ester 14G, NK Ester 23G, products of Shin-Nakamura Chemical Co., Ltd.; trade name: Light Ester 9EG, Light Ester 14EG, products of Kyoeisha Chemical Co., Ltd.), 1,3-butanediol dimethacrylate (trade name: NK Ester BG, product of Shin-Nakamura Chemical Co., Ltd.), 1,4-butanediol dimethacrylate (trade name: NK Ester BD, product of Shin-Nakamura Chemical Co., Ltd.; trade name: Light Ester 1.4BG, product of Kyoeisha Chemical Co., Ltd.), 1,6-hexanediol dimethacrylate (trade name: NK Ester HD-N, product of Shin-Nakamura Chemical Co., Ltd.; trade name: Light Ester 1.6HX, product of Kyoeisha Chemical Co., Ltd.), 1,9-nonanediol dimethacrylate (trade name: NK Ester NOD, product of Shin-Nakamura Chemical Co., Ltd.; trade name: Light Ester 1.9ND, product of Kyoeisha Chemical Co., Ltd.), 2-methyl-1,8-octanediol dimethacrylate (dimethacrylate (trade name: NK Ester IND, product of Shin-Nakamura Chemical Co., Ltd.),

1,10-decanediol dimethacrylate (Light Ester 1.10DC, product of Kyoeisha Chemical Co., Ltd.), ethoxylated bisphenol A dimethacrylate (trade name: NK Ester BPE-100, NK Ester BPE-200, NK Ester BPE-300, NK Ester BPE-500, NK Ester BPE-900, NK Ester BPE-1300N, products of Shin-Nakamura Chemical Co., Ltd.; trade name: Light Ester BP-2EM, Light Ester BP-4EM, Light Ester BP-6EM, products of Kyoeisha Chemical Co., Ltd.), neopentyl glycol dimethacrylate (trade name: NK Ester NPG, product of Shin-Nakamura Chemical Co., Ltd.; trade name: Light Ester NP, product of Kyoeisha Chemical Co., Ltd.), tricyclodecane dimethanol dimethacrylate (trade name: NK Ester DCP, product of Shin-Nakamura Chemical Co., Ltd.), ethoxylated polypropylene glycol dimethacrylate (trade name: NK Ester 1206PE, product of Shin-Nakamura Chemical Co., Ltd.), glycerin dimethacrylate (trade name: NK Ester 701, product of Shin-Nakamura Chemical Co., Ltd.; trade name: Light Ester G-101P, product of Kyoeisha Chemical Co., Ltd.), 2-hydroxy-3-acryloyloxypropyl methacrylate (trade name: Light Ester G-201P, product of Kyoeisha Chemical Co., Ltd.), tripropylene glycol dimethacrylate (trade name: NK Ester 3PG, product of Shin-Nakamura Chemical Co., Ltd.), polypropylene glycol dimethacrylate (trade name: NK Ester 9PG, product of Shin-Nakamura Chemical Co., Ltd.), 2-methacryloyloxyethyl acid phosphate (trade name: Light Ester P-2M, product of Kyoeisha Chemical Co., Ltd.), trimethylolpropane trimethacrylate (trade name: NK Ester TMPT, product of Shin-Nakamura Chemical Co., Ltd.; trade name: Light Ester TMP, product of Kyoeisha Chemical Co., Ltd.), and ethoxylated trimethylol propane trimethacrylate (trade name: NK Ester TMPT-9EO, product of Shin-Nakamura Chemical Co., Ltd.).

Examples of other radical-polymerizable monomers include vinyl monomers such as styrene, divinyl benzene, N-vinyl pyrrolidone, vinyl ethers, and vinyl acetate. These can be used individually and/or in combinations of two or more thereof. Among them, from the standpoint of polymerization ability with (meth)acrylonitrile, copolymers with methyl (meth) acrylate, ethyl (meth)acrylate, n-propyl (meth)acrylate, isopropyl (meth)acrylate, n-butyl (meth)acrylate, isobutyl (meth) acrylate, t-butyl (meth)acrylate, amyl (meth)acrylate, isoamyl (meth)acrylate, hexyl (meth)acrylate, heptyl (meth)acrylate, octyl (meth)acrylate, 2-ethylhexyl (meth) acrylate, methoxytriethylene glycol acrylate, acrylic acid, styrene, N-vinyl pyrrolidone, vinyl ethers, and vinyl acetates are preferred and copolymers with methoxytriethylene glycol acrylate and acrylic acid are especially preferred as resins comprising poly(meth)acrylonitrile and/or a structure in which poly(meth)acrylonitrile are cyclized under heating.

<Method for synthesizing a polymer derived from radical-polymerizable monomers for use in component (b)>

No specific limitation is placed on a polymerization scheme for synthesizing a polymer derived from radical-polymerizable monomers for use in component (b) in accordance with the present invention, and lump polymerization, suspension polymerization, emulsion polymerization, and solution polymerization can be used. From the standpoint of easiness of resin synthesis and easiness of after-processing such as recovery and refining, suspension polymerization in water is preferred. Solvents and additives such as polymerization initiators and chain transfer agents can be used at random during polymerization.

From the standpoint of polymerization initiation efficiency, water-soluble types of polymerization initiators are preferred for suspension polymerization in water. Examples of water soluble polymerization initiators include persulfates such as ammonium persulfate, potassium persulfate, and sodium persulfate, water-soluble peroxides such as hydrogen peroxide, water-soluble azo compounds such as 2,2'-azobis(2-methylpropyonamidine hydrochloride), and redox-type initiators combining oxidizing agents such as persulfates, reducing agents such as sodium hydrogen sulfite, ammonium hydrogen sulfite, sodium thiosuflate, and hydrosulfite, and polymerization enhancers such as sulfuric acid, iron sulfate, and copper sulfate. Among them, from the standpoint of easiness of synthesizing the polymer of component (b), persulfates and water-soluble azo compounds are preferred. Among persulfates, potassium persulfate is especially preferred. When acrylonitrile is selected as a radical-polymerizable monomer, acrylic acid and methoxythoxy ethylene glycol acrylate are selected as copolymerizable components therefor, and suspension polymerization is carried out in water, because acrylonitrile, acrylic acid, and methoxythoxy ethylene glycol acrylate are all soluble in water in a monomer state thereof, the water-soluble polymerization initiator has high efficiency and polymerization starts smoothly. Because the polymer precipitates as the polymerization proceeds, the reaction system assumes a state of suspension, and finally a polymer of component (b) with a small content of unreacted matter is obtained with a high yield. The polymerization initiator is preferably used within a range of 0.001 to 5 mol%, more preferably within a range of 0.01 to 2 mol%, based on the total weight of the monomers used in the polymer of component (b).

A chain transfer agent can be used with the object of adjusting a molecular weigh or the like when performing water-suspension polymerization of a polymer derived from the radical-polymerizable monomer used for the component (b) in accordance with the present invention. Examples of suitable chain transfer agents include mercaptan compounds, thioglycols, carbon tetrachloride, and α-methyl styrene dimer. From the standpoint of a low level of odor, α-methyl styrene dimer is preferred.

Further, when water-suspension polymerization is carried out, a solvent other than water can be also added, as necessary, to regulate the particle size of the suspension. Examples of solvents other than water include amides such as N-methyl-2-pyrrolidone, N,N-dimethylacenamide, and N,N-dimethylformamide, ureas such as N,N-dimethyl ethylene urea, N,N-dimethyl propylene urea, and tetramethyl urea, lactones such as γ-butyrolactone and ε-caprolactone, carbonates such as propylene carbonate, ketones such as acetone, methyl ethyl ketone, methyl isobutyl ketone, and cyclohexanone, esters such as methyl acetate, ethyl acetate, n-butyl acetate, butyl cellosolve acetate, butyl carbitol acetate, ethyl cellosolve acetate, and ethyl carbitol acetate, glymes such as diglyme, triglyme, and tetraglyme, hydrocarbons such as toluene, xylene, and cyclohexane, sulfoxides such as dimethyl sulfoxide, sulfones such as sulfolan, and alcohols such as methanol, isopropanol, and n-butanol. These solvents can be used individually or in combinations of two or more thereof.

Polymerization of the polymer derived from the radical-polymerizable monomer used for the component (b) in accordance with the present invention is carried out, for example, by introducing monomers into a solvent and maintaining the polymerization temperature at 0 to 100°C, preferably at 30 to 90°C for 1 to 50 h, preferably 2 to 12 h. Where the polymerization temperature is 0°C or higher, polymerization easily proceeds, and where the polymerization temperature

is 100°C or less, even when water is used as a solvent, the water is not completely evaporated and the solvent is not eliminated.
When polymerization is carried out by using (meth)acrylonitrile nitrile as the radical-polymerizable monomer, the heat of polymerization is especially high. Therefore, the polymerization is preferably carried out by dropwise adding the monomer to the solvents.

<Electrolyte polymer (a)>

The electrolyte polymer (a) in accordance with the present invention plays a role of conducting protons from one surface to the other surface of the polymer electrolyte membrane. No specific limitation is placed on the electrolyte polymer (a) in accordance with the present invention, but resins having an aromatic hydrocarbon in a main chain, resins having an aliphatic hydrocarbon in a main chain, and resins having a perfluoroalkylene chain in a main chain are preferred. Further, from the standpoint of proton conductivity, resins in which an acid-generating group is bonded to the main chain are preferred. Examples of preferred acid-generating groups include sulfonic acid, phosphoric acid, and carboxylic acids, and sulfonic acid and phosphoric acid are especially preferred.
Examples of the electrolyte polymer (a) in accordance with the present invention include perfluorocarbonsulfonic acid resins, sulfonated polyesters, phosphonated polyesters, sulfonated polyamides, phosphonated polyamides, sulfonated polyimides, phosphonated polyimides, sulfonated polyurethanes, phosphonated polyurethanes, sulfonated polysulfones, phosphonated polysulfones, sulfonated polyarylene ether sulfones, phosphonated polyarylene ether sulfones, sulfonated polyether ether ketones, phosphonated polyether ether ketones, sulfonated polyphenylene, phosphonated polyphenylene, sulfonated polyphenylene oxide, phosphonated polyphenylene oxide, sulfonated polyvinyl, phosphonated polyvinyl, sulfonated acrylates, and phosphonated acrylates. These polymers can be used individually or in combinations of two or more thereof.
Among them, from the standpoint of heat resistance and proton conductivity, sulfonated polyarylene ether sulfone and/or phosphonated polyarylene ether sulfone are preferred.
Examples of preferred structures of the electrolyte polymer (a) in accordance with the present invention include a structure comprising repeating units represented by Formula (1) below and repeating units represented by Formula (2) below, and/or a structure comprising repeating units represented by Formula (1) below and repeating units represented by Formula (3) below, and/or a structure comprising repeating units represented by Formula (2) below and repeating units represented by Formula (3) below, and/or a structure comprising repeating units represented by Formula (1) below, repeating units represented by Formula (2) below, and repeating units represented by Formula (3) below.

$-Ar_1-$ Formula (1)

[in Formula (1), $Ar_1$ denotes a structural unit represented by at least one formula selected from the group consisting of Formulas (4), (5), and (6) below]

$-Ar_2-$ Formula (2)

[in Formula (2), $Ar_2$ denotes a structural unit represented by at least one formula selected from the group consisting of Formulas (7) and (8) below]

$-Ar_3-$ Formula (3)

[in Formula (3), $Ar_3$ denotes a structural unit represented by at least one formula selected from the group consisting of Formulas (9) and (10) below]
Structural units represented by Formulas (4) to (10) will be described below in greater detail.
Formula (4)

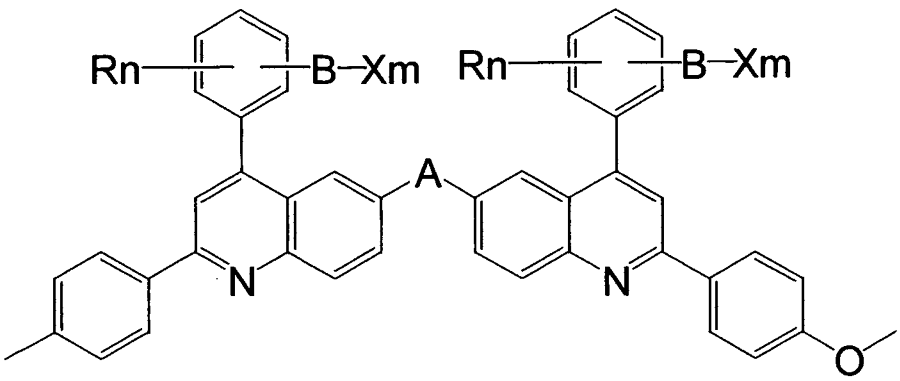

[In this formula, A is a direct bond, -O-, -S-, -S(O) -, $-S(O)_2-$, -C(O) -, $-P(O)(C_6H_5)$ -, $-C(CH_3)_2-$, $-C(CF_3)_2-$, $-C_6H_4CC_6H_4-$ or a $C_{1-6}$ alkylidene group. B is a direct bond or a methylene group. R is hydrogen or a $C_{1-6}$ aliphatic group, a phenyl group, a nitro group, a cyano group, an alkoxy group, chlorine, bromine, and iodine; X is a protonic acid group selected from $SO_3H$, COOH, and $PO_3H_2$. n represents the number of substituents, it is from 1 to 5; m represents the number of substituents, it is from 0 to (5-n)].

Examples of Formula (4) include:

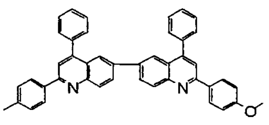 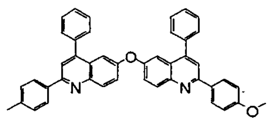 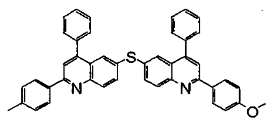 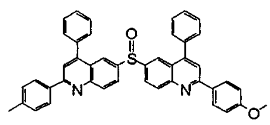

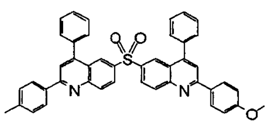 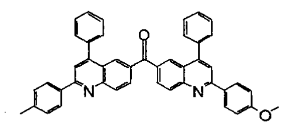 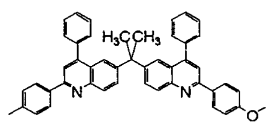 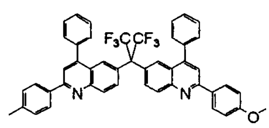

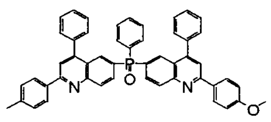 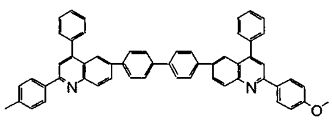 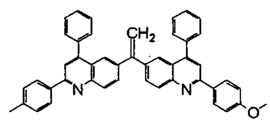 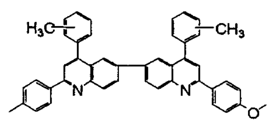

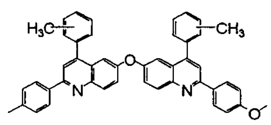 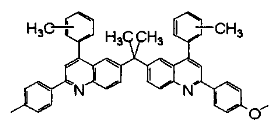 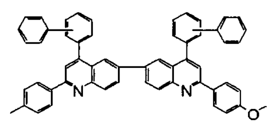 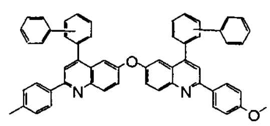

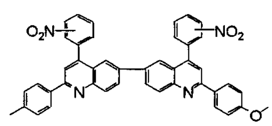 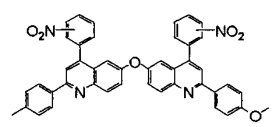 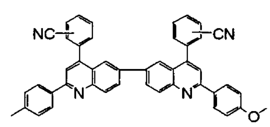 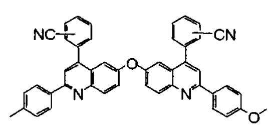

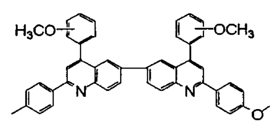 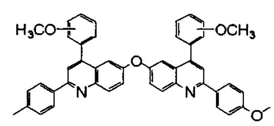 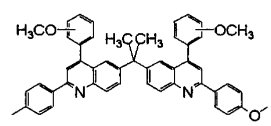 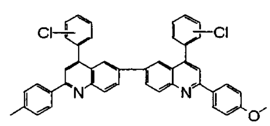

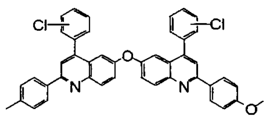
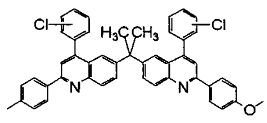
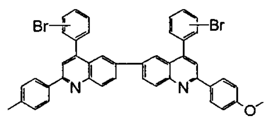
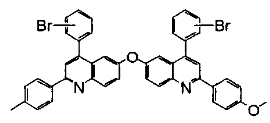

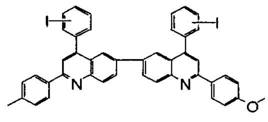
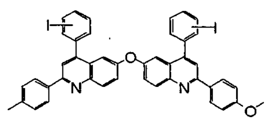
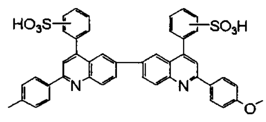
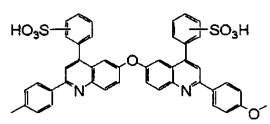

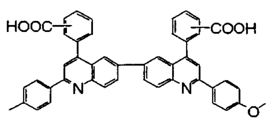
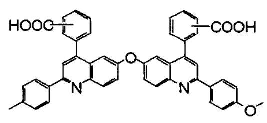
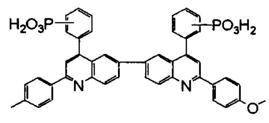
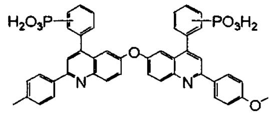

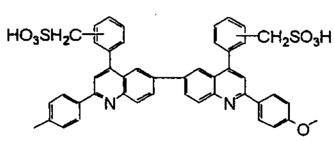
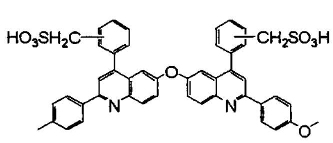

Formula (5)

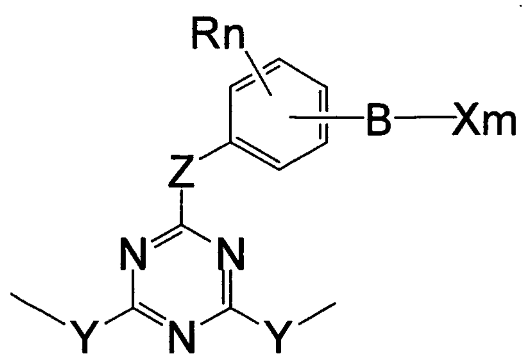

[in the formula, B is a direct bond or a methylene group. Y is a direct bond, -NH-, -N($CH_3$) -, -$NHC_6H_4O$-, -N($CH_3$) $C_6H_4O$-, or a $C_{1-6}$ alkylidene group. Z is -NH-, -N($CH_3$) -,-O-, -S-, -S(O) -, -S(O)$_2$-, -C(O) -, or a $C_{1-6}$ alkylidene group. R is hydrogen or a $C_{1-6}$ aliphatic group, a methoxy group, a phenyl group, a phenoxy group, a nitro group, a cyano group, an alkoxy group, chlorine, bromine, and iodine; X is a protonic acid group selected from $SO_3H$, COOH, and $PO_3H_2$. n represents the number of substituents, it is from 1 to 5; m represents the number of substituents, it is from 0 to (5-n)].

Examples of Formula (5) include:

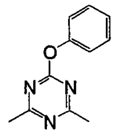 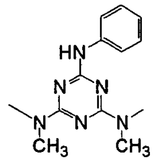 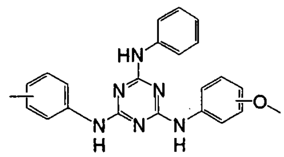 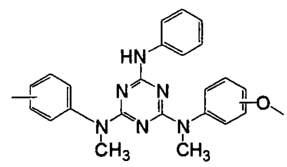 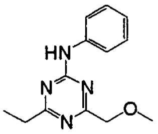

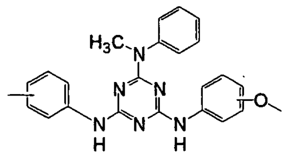 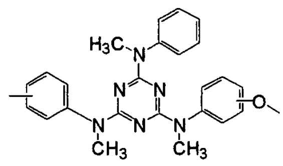 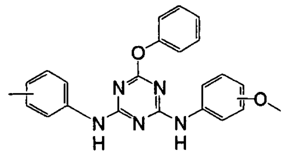 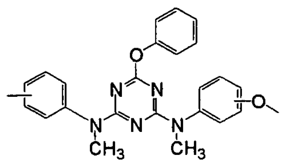

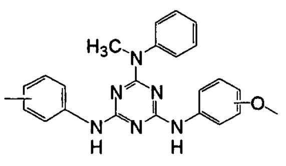 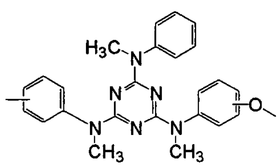 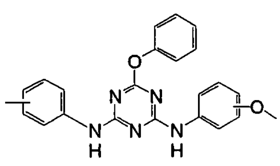 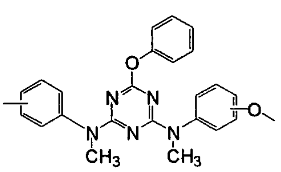

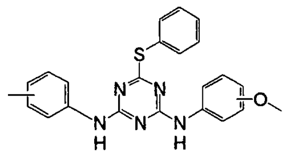 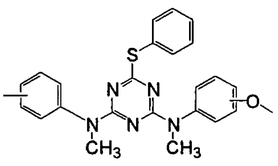 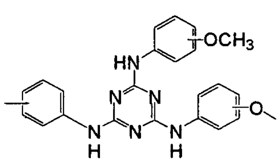 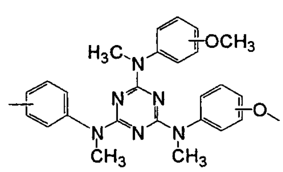

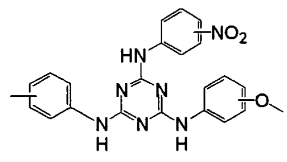 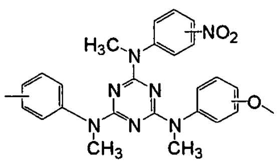 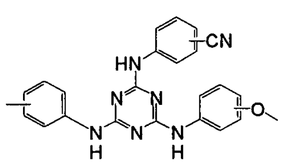 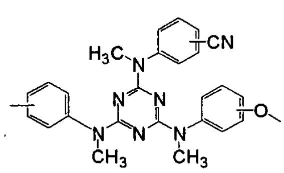

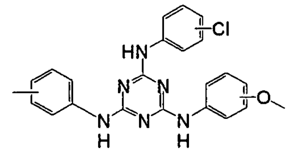 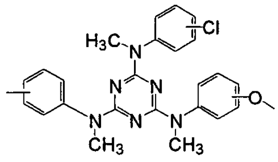 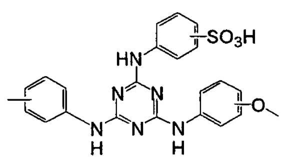 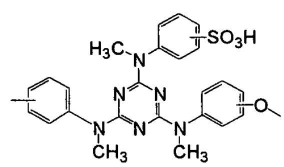

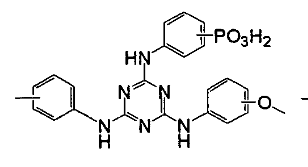 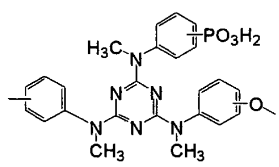 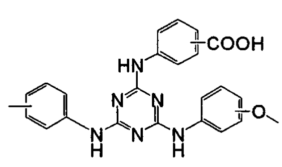 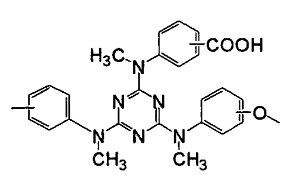

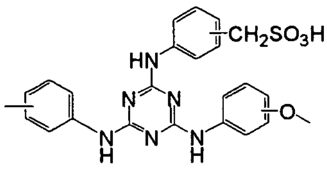
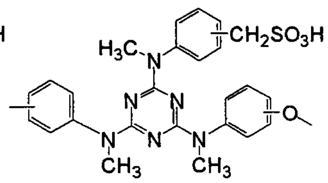

Formula (6)

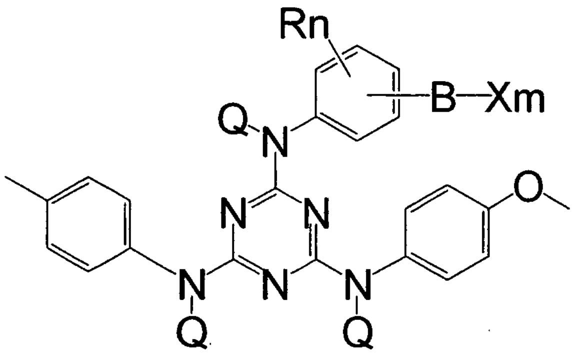

[In the formula, B is a direct bond or a methylene group. Q is hydrogen or a $C_{1-6}$ aliphatic group, a phenyl group, a nitrophenyl group, an alkoxyphenyl group, a fluorophenyl group, a chlorophenyl group, a bromophenyl group, an iodophenyl group, a cyanophenyl group, an acetophenyl group an -OH group, chlorine, bromine, and iodine; R is hydrogen or a $C_{1-6}$ aliphatic group, a methoxy group, a phenyl group, a phenoxy group, a nitro group, chlorine, bromine, and iodine; X is a protonic acid group selected from $SO_3H$, COOH, and $PO_3H_2$. n represents the number of substituents, it is from 1 to 5; m represents the number of substituents, it is from 0 to (5-n)].

Examples of Formula (6) include:

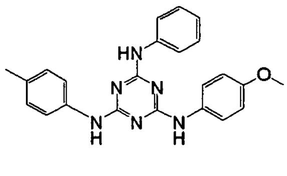
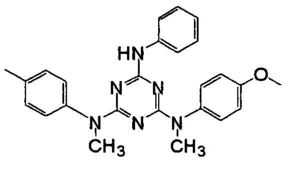
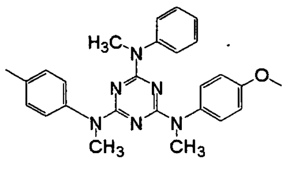
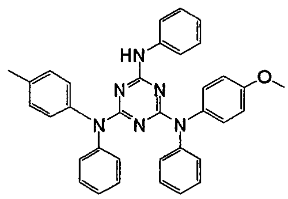
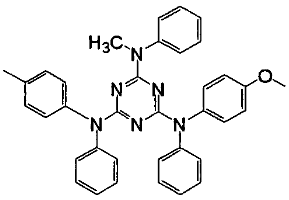
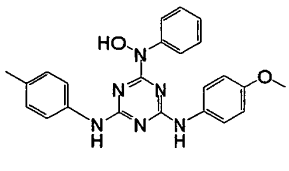
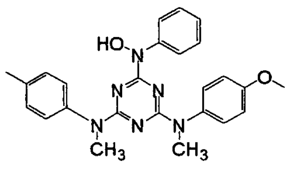
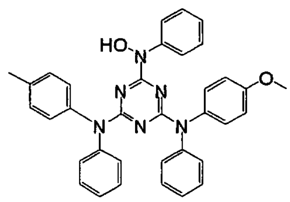

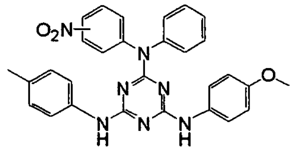
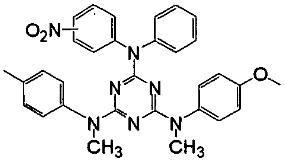
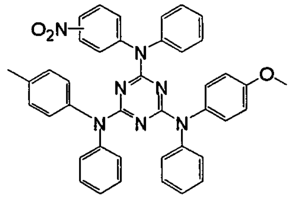
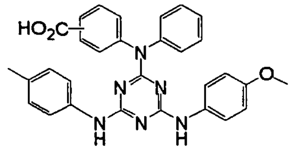
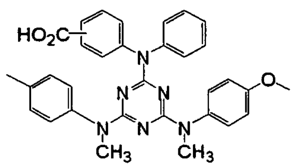
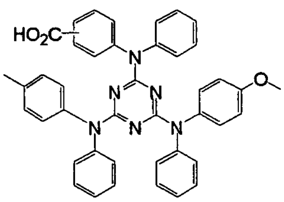
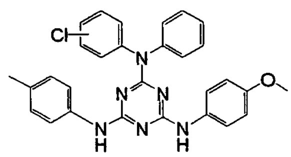
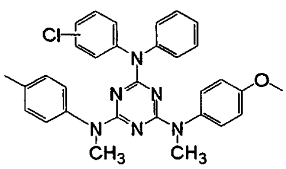
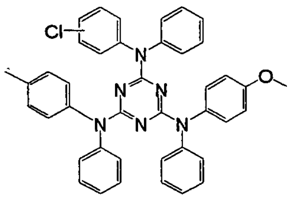
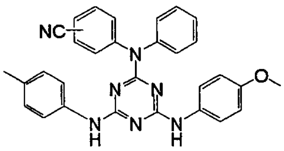
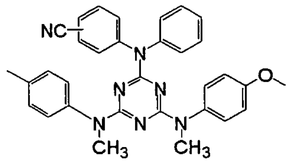
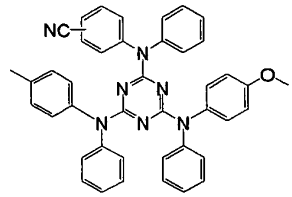
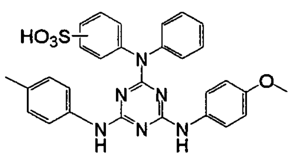
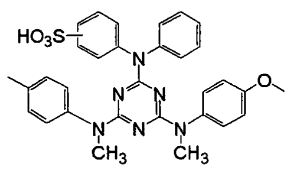
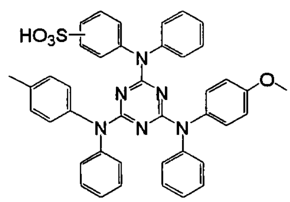
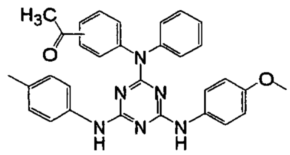
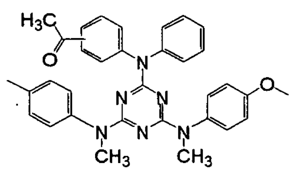
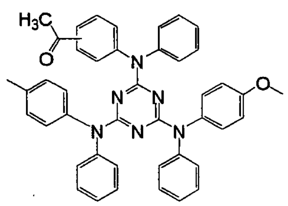
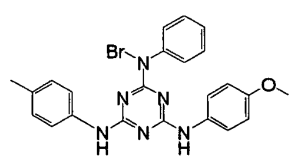
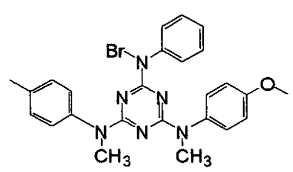
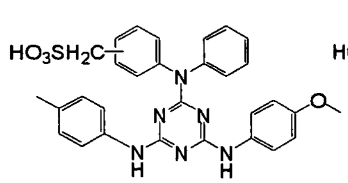
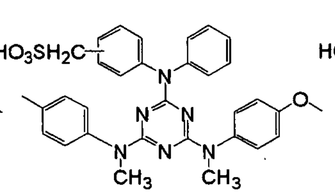
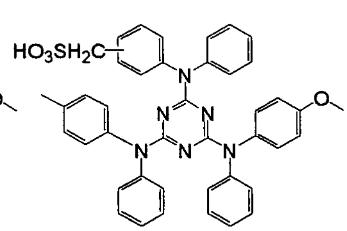

The $Ar_1$ structural unit of Formula (1) is not necessarily limited to group of one kind and may include structural units of two or more kinds. Further, a protonic acid group may be optionally introduced into the $Ar_1$ structural unit of Formula (1), and both the structural unit into which a protonic acid group has been introduced and the structural unit

into which a protonic acid group has not been introduced may be included.

Formula (7)

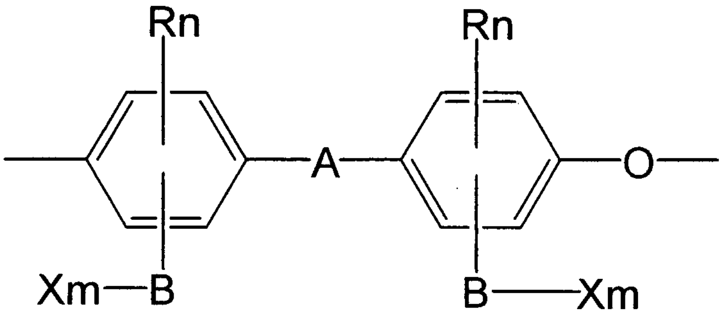

[In Formula (7), A is a direct bond, -O-, -S-, -S(O) -, $-S(O)_2-$, -C(O) -, $-P(O)(C_6H_5)-$, $-C(CH_3)_2-$, $-C(CF_3)_2-$, $-C_6H_4CC_6H_4-$ or a $C_{1-6}$ alkylidene group. B is a direct bond or a methylene group. R is hydrogen or a $C_{1-6}$ aliphatic group, a phenyl group, a nitro group, a cyano group, an alkoxy group, chlorine, bromine, and iodine; X is a protonic acid group selected from $SO_3H$, COOH, and $PO_3H_2$. n represents the number of substituents, it is from 1 to 4; m represents the number of substituents, it is from 0 to (4-n)].

Examples of Formula (7) include:

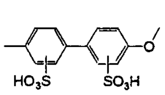 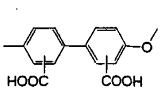 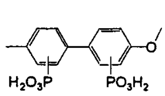 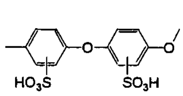 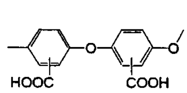 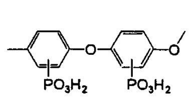

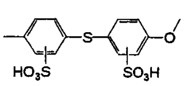 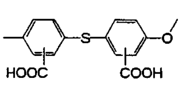 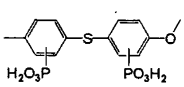 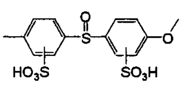 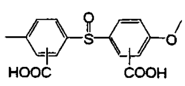 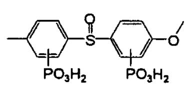

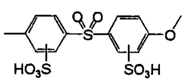 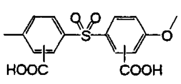 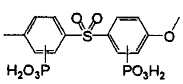 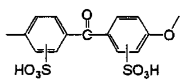 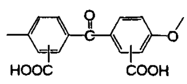 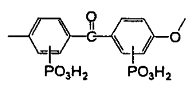

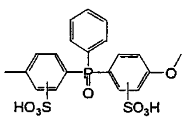 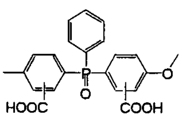 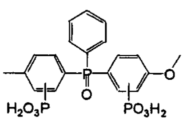 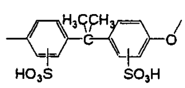 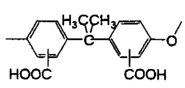 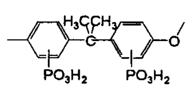

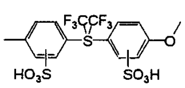 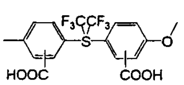 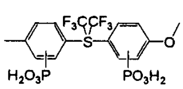 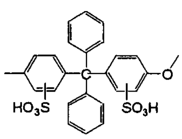 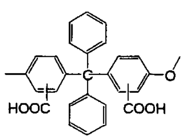 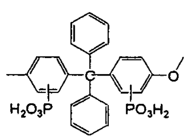

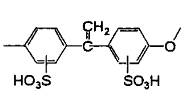 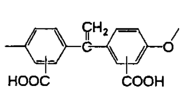 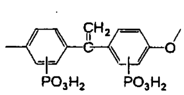 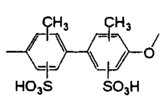 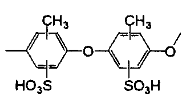 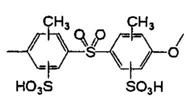

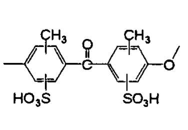 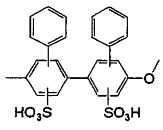 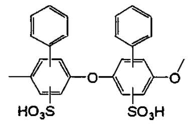 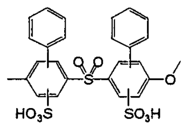 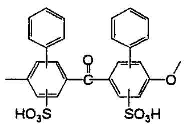 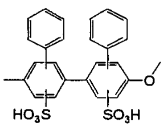

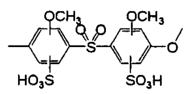 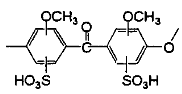 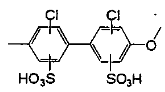 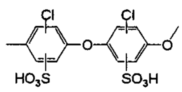 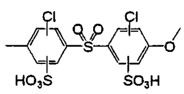 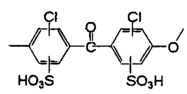

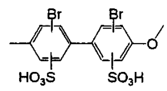 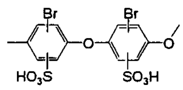 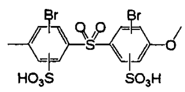 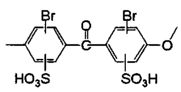 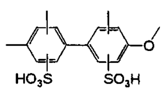 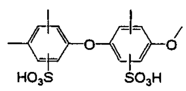

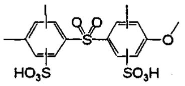 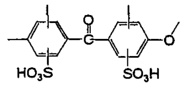 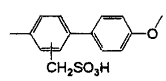 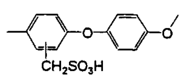 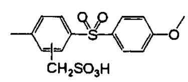 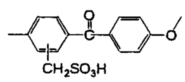

Formula (8)

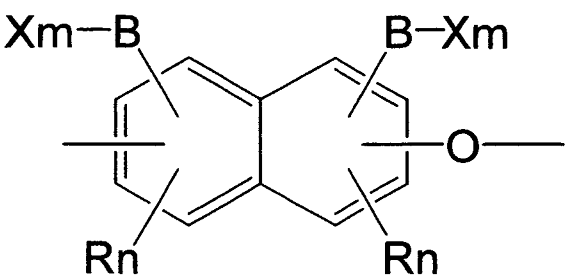 , 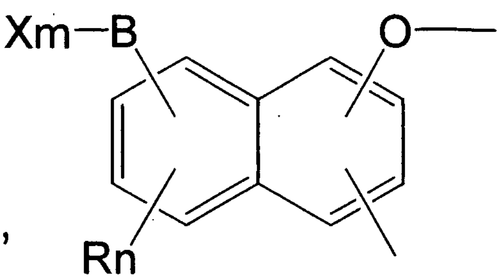

[In Formula (8), B is a direct bond or a methylene group. R is hydrogen or a $C_{1-6}$ aliphatic group, a phenyl group, a nitro group, a cyano group, an alkoxy group, chlorine, bromine, and iodine; X is a protonic acid group selected from $SO_3H$, COOH, and $PO_3H_2$. n represents the number of substituents, it is from 1 to 4; m represents the number of substituents, it is from 0 to (4-n)].

Examples of Formula (8) include:

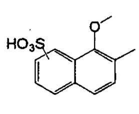 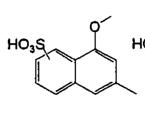 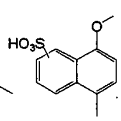 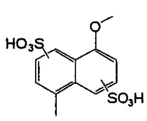 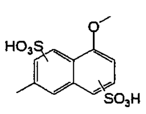 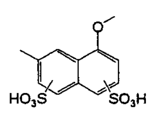 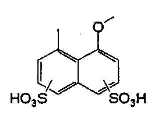 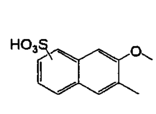

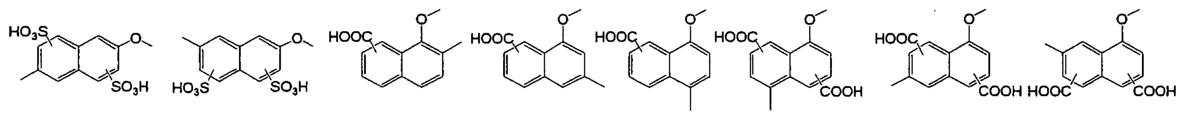

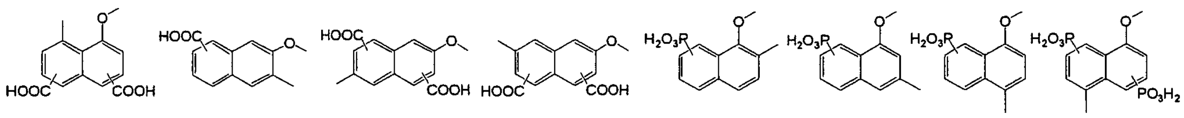

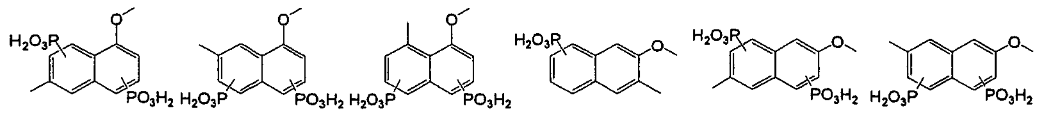

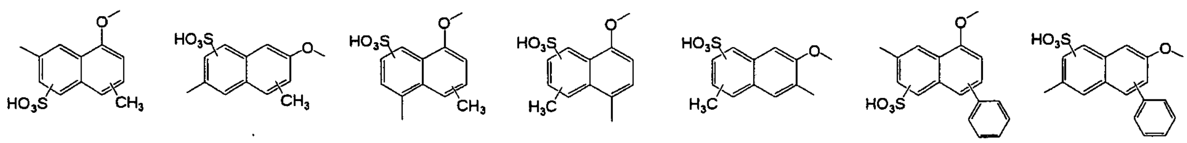

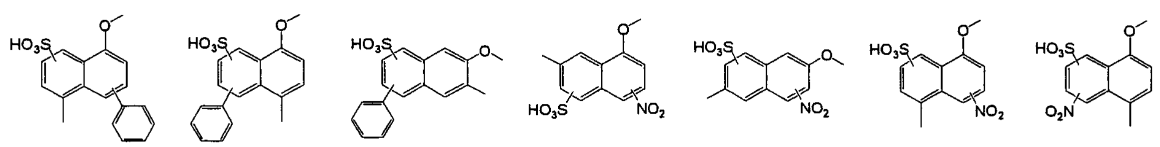

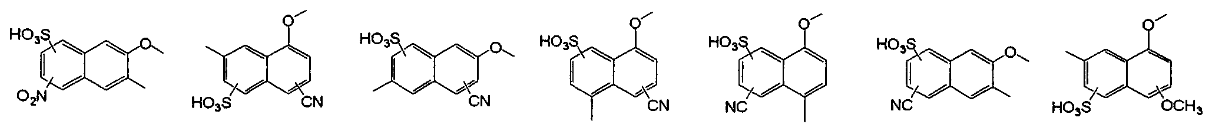

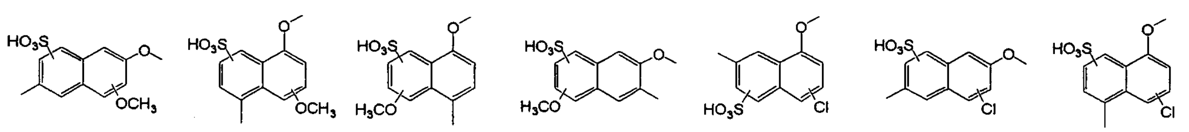

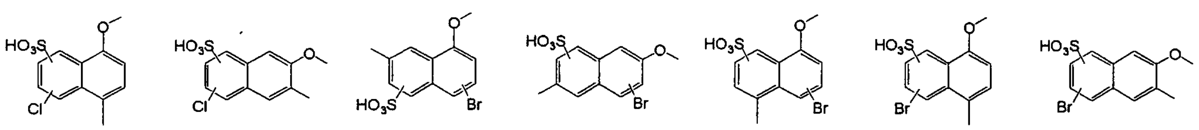

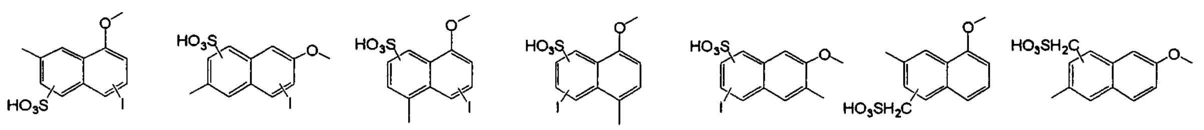

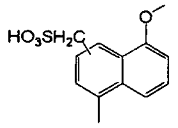 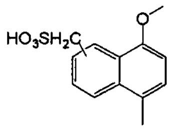 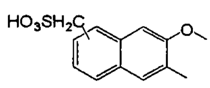

Here, the $Ar_2$ structural unit of Formula (2) may have any structure, provided that it is a structural unit represented by Formula (7) and/or Formula (8). Further, it is not necessarily limited to a structural unit of one kind and may include structural units of two or more kinds.

Formula (9)

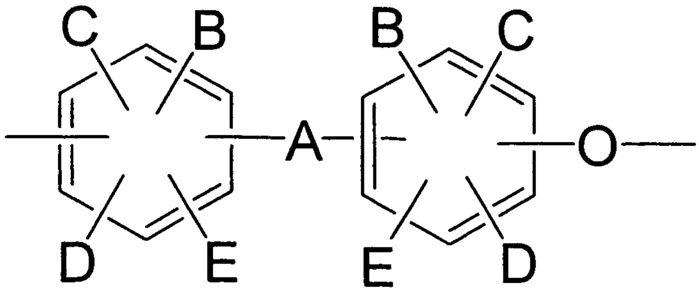

[In Formula (9), A is a direct bond, -O-, -S-, -S(O) -, $-S(O)_2-$, -C(O) -, $-P(O)(C_6H_5)-$, $-C(CH_3)_2-$, $-C(CF_3)_2-$, $-C_6H_4CC_6H_4-$ or a $C_{1-6}$ alkylidene group. B, C, D, E are each hydrogen or a $C_{1-6}$ aliphatic group, a phenyl group, a nitro group, a cyano group, an alkoxy group, chlorine, bromine, and iodine; at least two from among B, C, D, E are hydrogen].
Examples of Formula (9) include:

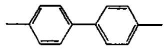 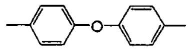 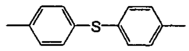 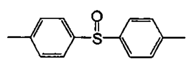 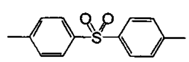 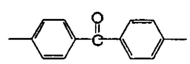

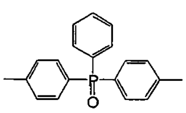 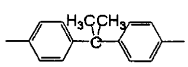 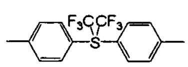 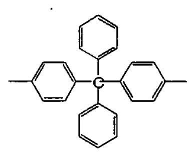 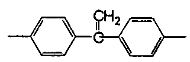

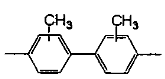 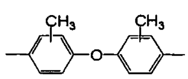 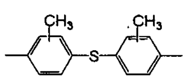 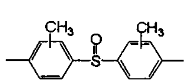 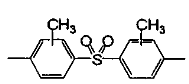 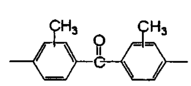

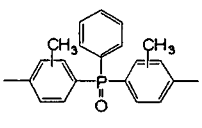 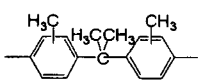 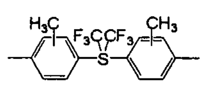 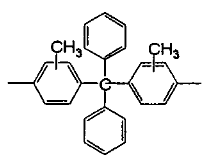 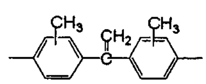

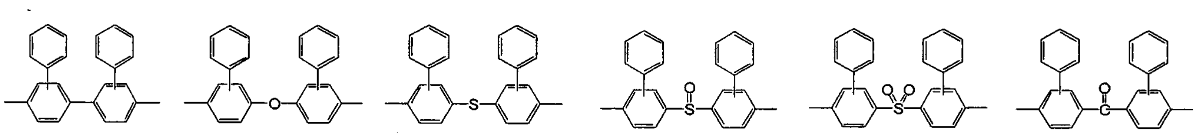

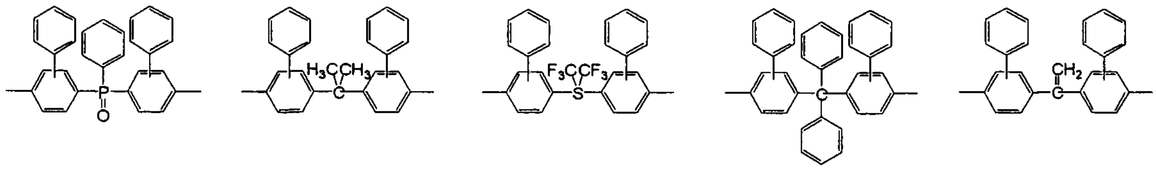

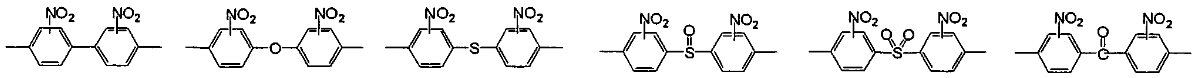

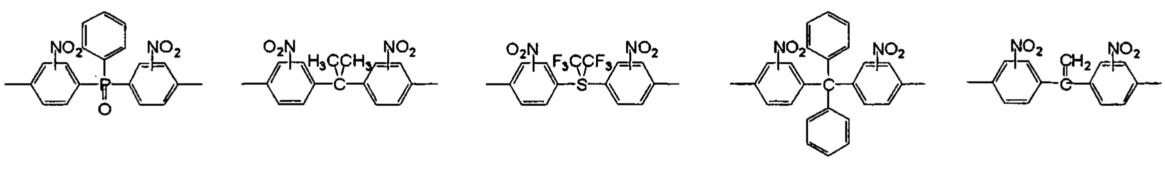

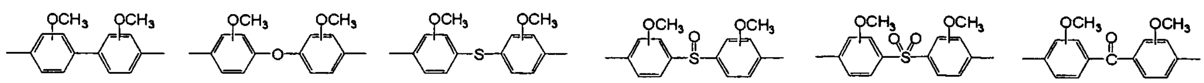

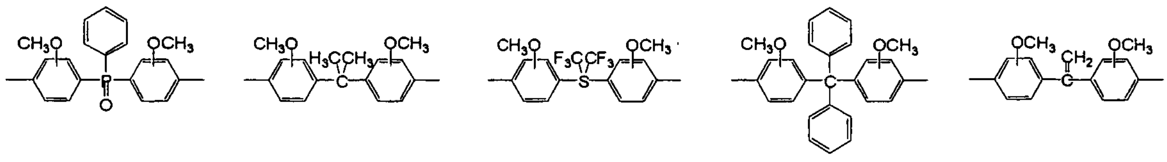

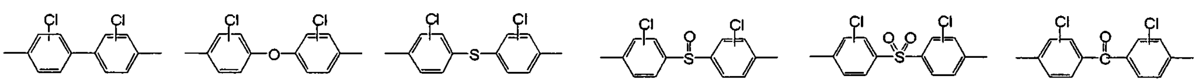

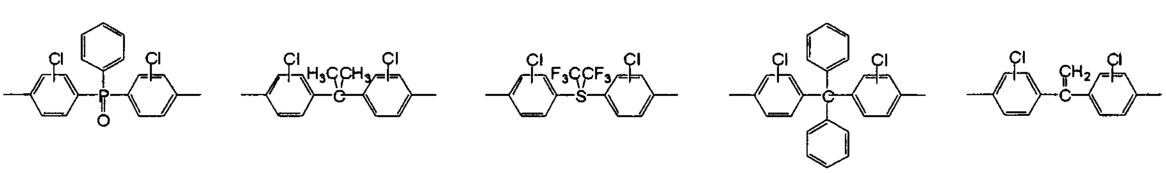

Formula (10)

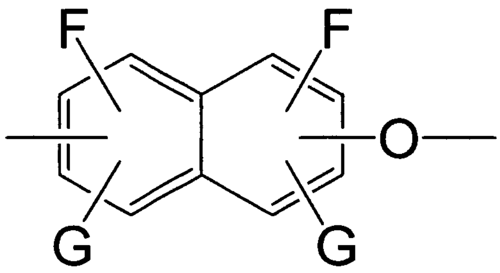

,

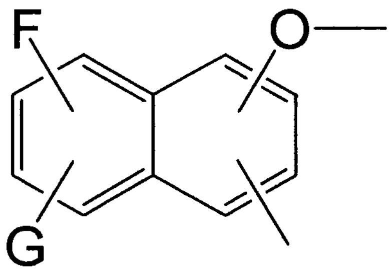

[In Formula (10), F, G are each hydrogen or a $C_{1-6}$ aliphatic group, a phenyl group, a nitro group, a cyano group, an alkoxy group, chlorine, bromine, and iodine; at least two from among B, C, D, E are hydrogen].

Examples of Formula (10) include:

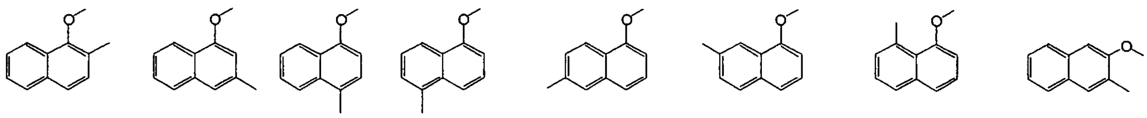

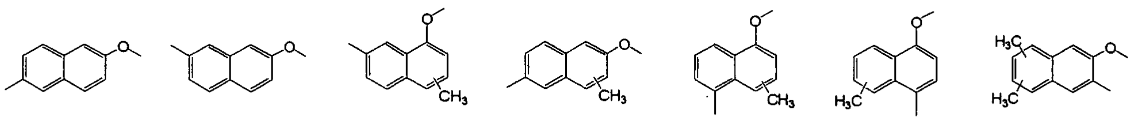

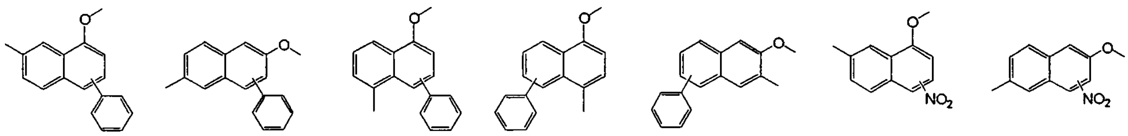

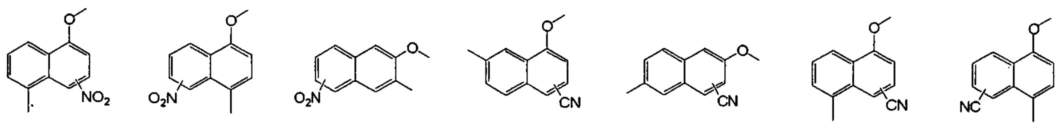

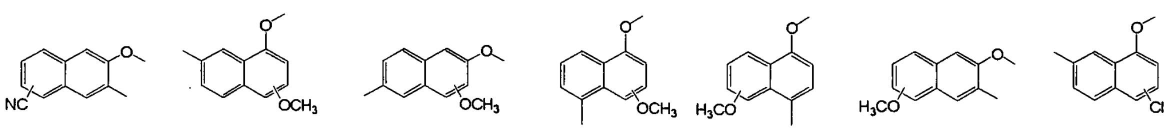

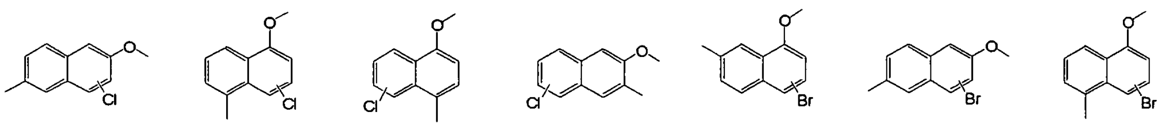

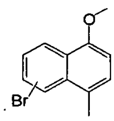 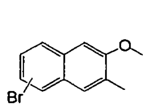 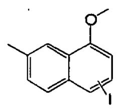 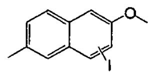 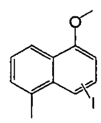 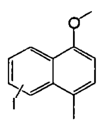 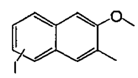

Here, the $Ar_3$ structural unit of Formula (3) may have any structure, provided it is a structural unit represented by Formula (9) and/or Formula (10). Further, it is not necessarily limited to a structural unit of one kind and may include structural units of two or more kinds.

The $Ar_1$ structural unit of Formula (1), $Ar_2$ structural unit of Formula (2), and $Ar_3$ structural unit of Formula (3) in accordance with the present invention may be bonded in a random copolymer form or a block copolymer form.

The electrolyte polymer (a) in accordance with the present invention may contain repeating units other than the components represented by Formulas (1), (2), (3) above. No specific limitation is placed on repeating units other than the components represented by Formulas (1), (2), (3) above, and examples thereof include alkylene ether such as ethylene oxide, propylene oxide, and tetramethylene oxide, and also perfluoroalkylene ethers, and aromatic ethers having a bond such as aromatic imides and amides.

The content of the $Ar_1$ structural unit of Formula (1), in the electrolyte polymer (a) in accordance with the present invention is preferably 1 to 50 mol%, more preferably 5 to 45 mol%, and especially preferably 10 to 40 mol%, based on the total amount of components represented by Formulas (1), (2), (3) above. Where the content of the $Ar_1$ structural unit of Formula (1) is 1 mol% or more, swelling caused by water and methanol can be sufficiently inhibited without decreasing the crosslinking density between the molecules. Further, where the content of the $Ar_1$ structural unit of Formula (1) is 50 mol% or less, good proton conductance can be maintained.

The content of the $Ar_2$ structural unit of Formula (2), in the electrolyte polymer (a) in accordance with the present invention is preferably 10 to 90 mol%, more preferably 20 to 80 mol%, and especially preferably 30 to 70 mol%, based on the total amount of components represented by Formulas (1), (2), (3) above. Where the content of the $Ar_2$ structural unit of Formula (2) is 10 mol% or more, proton conductance is not decreased, and where the content is 90 mol% or less, swelling caused by water and methanol can be sufficiently inhibited.

The content of the $Ar_3$ structural unit of Formula (3), in the electrolyte polymer (a) in accordance with the present invention is preferably 9 to 89 mol%, more preferably 15 to 75 mol%, and especially preferably 20 to 60 mol%, based on the total amount of components represented by Formulas (1), (2), (3) above. Where the content of the $Ar_3$ structural unit of Formula (3) is 9 mol% or more, the polymer electrolyte compound is not difficult to synthesize, and where the content is 60 mol% or less, proton conductance is not decreased.

<Method for introducing sulfonic acid group>

By causing a reaction of an appropriate sulfonating agent in an organic solvent with the object of introducing a sulfonic acid group into an aromatic ring represented by Formula (1) and/or Formula (2) in accordance with the present invention, it is possible to obtain a monomer comprising a sulfonic group that can be used in accordance with the present invention.

Here, no specific limitation is placed on a sulfonating agent for use in the manufacture of a monomer comprising a sulfonic group. Examples of sulfonating agents that can be advantageously used include concentrated sulfuric acid, fuming sulfuric acid, chlorosulfuric acid, anhydrous sulfuric acid complexes, sodium hydrogensulfite, and potassium thioacetate.

The monomer comprising a sulfonic group in accordance with the present invention can be manufactured using these reagents and selecting reaction conditions corresponding to the compound structure.

Further, in addition to these sulfonating agents, it is also possible to use sulfonating agents described in Japanese Patent No. 2,884,189, such as 1,3,5-trimethylbenzene-2-sulfonic acid, 1,3,5-trimethylbenzene-2,4-disulfonic acid, 1,2,4-trimethylbenzene-5-sulfonic acid, 1,2,4-trimethylbenzene-3-sulfonic acid, 1,2,3-trimethylbenzene-4-sulfonic acid, 1,2,3,4-tetramethylbenzene-5-sulfonic acid, 1,2,3,5-tetramethylbenzene-4-sulfonic acid, 1,2,4,5-tetramethylbenzene-3-sulfonic acid, 1,2,4,5-tetramethylbenzene-3,6-disulfonic acid, 1,2,3,4,5-pentamethylbenzene-6-sulfonic acid, 1,3,5-triethylbenzene-2-sulfonic acid, 1-ethyl-3,5-dimethylbenzene-2-sulfonic acid, 1-ethyl-3,5-dimethylbenzene-4-sulfonic acid, 1-ethyl-3,4-dimethylbenzene-6-sulfonic acid, 1-ethyl-2,5-dimethylbenzene-3-sulfonic acid, 1,2,3,4-tetraethylbenzene-5-sulfonic acid, 1,2,4,5-tetraethylbenzene-3-sulfonic acid, 1,2,3,4,5-pentaethylbenzene-6-sulfonic acid, 1,3,5-triisopropylbenzene-2-sulfonic acid, and 1-propyl-3,5-dimethylbenzene-4-sulfonic acid.

Among the aforementioned sulfonating agents, the compounds in which a lower alkyl is substituted to ortho positions at both sides of the sulfonic acid group, for example, 1,3,5-trimethylbenzene-2-sulfonic acid, 1,2,4,5-tetramethylbenzene-3-sulfonic acid, 1,2,3,5-tetramethylbenzene-4-sulfonic acid, 1,2,3,4,5-pentamethylbenzene-6-sulfonic acid,

1,3,5-triethylbenzene-2,4-disulfonic acid, and 1,3,5-triethylbenzene-2-sulfonic acid, are especially preferred, and 1,3,5-trimethylbenzene-2-sulfonic acid is the most preferred sulfonating agent.

When the monomer comprising a sulfonic acid group in accordance with the present invention is manufactured, these sulfonating agents are added preferably within a range of 30 to 5000 parts by weight, more preferably within a range of 50 to 2000 parts by weight per 100 parts by weight of the monomers. Where the amount of sulfonating agent added is 30 parts by weight or more, the sulfonating reaction sufficiently advances, and when the amount of sulfonating agent added is 5000 parts by weight or less, treatment of the sulfonating agent after the reaction is facilitated.

Further, no specific limitation is placed on the organic solvent for use in the manufacture of the monomer comprising a sulfonic acid group in accordance with the present invention, and any conventional well-known organic solvent can be used, provided that it produces no adverse effect on sulfonating reaction.

Specific examples of suitable solvents include halogenated aliphatic hydrocarbons such as chloroform, dichloromethane, 1,2-dichloroethane, trichloroethane, tetrachloroethane, trichloroethylene, and tetrachloroethylene, halogenated aromatic hydrocarbons such as dichlorobenzene and trichlorobenzene, nitro compounds such as nitromethane and nitrobenzene, alkylbenzenes such as trimethylbenzene, tributylbenzene, tetramethylbenzene, and pentamethylbenzene, heterocyclic compounds such as sulfolan, and straight-chain, branched, or cyclic aliphatic saturated hydrocarbons such as octane, decane, and cyclohexane. These solvents may be used individually or in mixtures of two or more thereof, and the amount thereof to be used is selected appropriately. It is usually preferred that the amount of the solvent be within a range of 100 to 2000 parts by weight per 100 parts by weight of the sulfonating agent. Where the amount of solvent is 100 parts by weight or more, the sulfonating reaction proceeds homogeneously, and when the amount of solvent is 2000 parts by weight or less, separation and recovery of the solvent and sulfonating agent after the reaction are facilitated.

The sulfonation reaction can be implemented at a reaction temperature within a range of from -20°C to 60°C for a reaction time within a range of 0.5 to 20 h. Where the reaction temperature is -20°C or more, the sulfonation reaction proceeds rapidly, and where the reaction temperature is 60°C or less, only the sulfonic acid group can be easily introduced into a specific aromatic ring.

Any conventional well-known purification method can be advantageously used for purifying the polymer electrolyte compound in accordance with the present invention. For example, when the obtained compound comprising a protonic acid group is in a solid form, the purification can be carried out by filtering, washing with a solvent and drying, when the compound is in the form of an oil, liquid separation can be used, and when the compound is dissolved in the reaction solution, the organic solvent can be removed by evaporation.

Alternatively, purification can be carried out by adding water to the reaction liquid comprising the polymer electrolyte compound in accordance with the present invention, optionally adding and dissolving an alkali component, separating a solvent phase and a water phase, causing precipitation from the water phase by using an acid or a salt, filtering, washing with a solvent, and drying.

When the reaction is performed only with a sulfonating agent such as concentrated sulfuric acid, recovery and purification can be also effectively performed by pouring the reaction liquid into water to precipitate the compound.

<Method for manufacturing the component (a)>

The electrolyte polymer that is the component (a) in accordance with the present invention can be manufactured by chemically bonding (copolymerizing) precursor monomers having structural units represented by Formulas (1), (2), (3) above.

No specific limitation is placed on a method for manufacturing the electrolyte polymer that is the component (a) in accordance with the present invention, and it is possible to use an adequate well-known method appropriate for the combination of monomers having respective structural units.

For example, an electrolyte polymer comprising structural units represented by Formulas (1), (2), (3) in accordance with the present invention can be synthesized by a condensation reaction of a precursor monomer (11) having at least two functional groups that can participate in substitution reaction and a precursor monomer (12) having at least two functional groups that can react with the aforementioned precursor monomer.

Examples of precursor monomers (represent the component (11)) having at least two functional groups that can participate in substitution reaction include dihalogen, trihalogen, and tetrahalogen compounds, wherein examples of halogens include fluorine, chlorine, bromine, and iodine. These halogenated monomers may be identical halogenated monomers or halogenated monomers of different types.

Examples of monomers (represent the component (12)) that have at least two functional groups that can participate in substitution reaction and can react with the aforementioned halogenated monomers include dihydroxy, trihydroxy, and tetrahydroxy compounds, dithiophenol, trithiophenol, and tetrathiophenol compounds, diamino, triamino, and tetramino compounds, dimonosubstituted amino, trimonosubstituted amino, and tetramonosubstituted amino. These monomers capable of reacting with the halogenated monomers may be identical or different compounds.

The polymer electrolyte compound in accordance with the present invention can be reacted in a solvent in the presence

of a catalyst.
Alkali catalysts such as potassium carbonate, calcium carbonate, and cerium carbonate, and metal halides such as cerium fluoride can be used as the catalyst. The amount of catalyst used can be within a range from 0.1 to 100-fold total molar amount of the monomers to be reacted.
An adequate reaction solvent can be selected from aprotic polar solvents such as N,N-dimethylacetamide, N,N-dimethylformamide, dimethylsulfoxide, N-methyl-2-pyrrolidone, hexamethylphosphonamide, and alcohols such as methanol and ethanol, but this list is not limiting. These solvents may be also used as a mixture of a plurality of solvents within an allowed range. The amount of solvent used is preferably within a range of 0.01 to 10-fold total weight of the monomers to be reacted and the solvent.
The reaction temperature is 0 to 350°C, preferably 40 to 260°C. The reaction can be conducted for 2 to 500 h.

The component (a) in accordance with the present invention can be also obtained by introducing an acid-generating group into the resin that has no acid-generating groups. For example, Japanese Patent Application Laid-open No. 2002-226575, Japanese Patent No. 2,809,685, and Japanese Patent Applications Laid-open No. H10-21943 and H10-45913 describe methods for obtaining electrolyte polymers by sulfonation of resins having an aromatic hydrocarbon in a main chain. Thus, the component (a) in accordance with the present invention can be obtained by sulfonating a resin having an aromatic hydrocarbon in a main chain by advantageously using concentrated sulfuric acid, fuming sulfuric acid, chlorosulfuric acid, anhydrous sulfuric acid complexes, and sodium hydrogensulfite. Further, Japanese Patent Applications Laid-open No. 2004-131662 describes a method for obtaining the component (a) in accordance with the present invention by sulfomethylation of resins having an aromatic hydrocarbon in a main chain. Thus, a sulfomethylated polyethersulfone can be obtained by chloromethylating a polyethersulfone by reaction with chloromethyl methyl ether in the presence of anhydrous tin (IV) chloride, then thioacetylating by reaction with potassium thioacetate, and oxidizing with hydrogen peroxide.
The component (a) in accordance with the present invention can be also obtained by reaction with a radical-polymerizable monomer having an acid-generating group. Examples of radical-polymerizable monomers having an acid-generating group in the component (a) in accordance with the present invention include acrylic carboxyl group-containing monomers such as acrylic acid and methacrylic acid, crotonic carboxyl group-containing monomers such as crotonic acid, maleic carboxyl group-containing monomers such as maleic acid and anhydride thereof, itaconic carboxyl group-containing monomers such as itaconic acid and anhydride thereof, citraconic carboxyl group-containing monomers such as citraconic acid and anhydride thereof, phosphoric acid group-containing monomers such as acid phosphoxyethyl methacrylate (trade name: Phosmer M, product of Unichemical Co., Ltd.), 3-chloro-2-acidophosphoxy propyl methacrylate (trade name: Phosmer CL, product of Unichemical Co., Ltd.), acid phosphoxy polyoxy ethylene glycol monomethacrylate (trade name: Phosmer PE, product of Unichemical Co., Ltd.), and methacroyloxyethyl acid phosphate monoethanolamine half salt (trade name: Phosmer MH, product of Unichemical Co., Ltd.), and sulfonic acid group-containing monomers such as 3-sulfopropyl methacrylate potassium salt, 3-sulfonic acid propyl methacrylate and salts thereof, 2-acrylamide-2-methylpropane sulfonic acid and salts thereof, and styrenesulfonic acid and salts thereof. The component (a) in accordance with the present invention that uses these radical-polymerizable monomers having acid-generating groups can be manufactured, for example, by a method described in Japanese Patent Applications Laid-open No. 2005-63690, 2005-71609, 2004-253336, and 2004-335119 by which a reaction is conducted in a mixture of 2-acrylamide-2-methylpropanesulfonic acid with other acrylic monomers and an initiator.

The component (a) in accordance with the present invention can be also obtained by synthesizing a polymer having a precursor functional group of an acid-generating group and then converting the precursor functional group into an acid-generating group. For example, in the method described in US Patent No. 3,282,875, a monomer comprising a sulfonyl fluoride group ($SO_2F$ group) and a perfluoroalkene monomer are polymerized and the polymer obtained is hydrolyzed.
The component (a) in accordance with the present invention may be of only one kind, or components of two or more kinds may be included.

<Ion-exchange equivalent weight of component (a)>

An ion-exchange equivalent weight (EW value) of component (a) in accordance with the present invention is preferably 300 to 1500, more preferably 350 to 1300, and even more preferably 400 to 1200. Here, the ion-exchange equivalent weight (EW value) represents the polymer dry weight per 1 mol of the acid-generating group contained in the polymer; the smaller is this value the higher is the content ratio of the acid-generating group. The ion-exchange equivalent weight (EW value) can be found, for example, in the following manner.
A sample is immersed for 12 h or more at room temperature in excess 10 wt.% aqueous solution of sulfuric acid, then washed with distilled water (washing is stopped when the pH of the washing liquid becomes 7), and dried for 3 h at 120°C under 133 Pa. A total of 0.05 g of the component (a) is dissolved in 20 mL of N-methyl pyrrolidone and then titration is performed with 0.05N KOH methanol solution by using an automatic titrator (HIRANUMA, COMTITE-900).

The ion-exchange equivalent weight is found using Calculation Formula (1) from a volume of the 0.05N KOH methanol solution required for neutralization. In the formula, F denotes a volume (mL) of the 0.05N KOH methanol solution required for neutralization.

Calculation Formula (1):

$$\text{Ion-exchange equivalent weight (g/mol)} = 0.05/\{0.05 \times F \times 0.001\}$$

Where the EW value is 300 or more, water resistance and methanol barrier property can be said to be high. Where the EW value is 1500 or less, a high proton conductance can be maintained.

<Content of components (a) and (b)>

The appropriate content of component (a) in the polymer electrolyte membrane in accordance with the present invention is, for example, 16.7 to 99 wt.%, preferably 30 to 95 wt.%, more preferably 40 to 90 wt.% based on the total amount of the components (a) and (b). Where the content is 16.7 wt.% or more, a high proton conductance can be maintained, and where the content is 99 wt.% or less, good water resistance and methanol barrier property can be maintained.
The content of component (b) in the polymer electrolyte membrane in accordance with the present invention is, for example, within a range of 1 to 83.3 wt.%, preferably 5 to 70 wt.%, more preferably 10 t o 60 wt.% based on the total amount of the components (a) and (b). Where the content is 1 wt.% or more, a sufficient effect of inhibiting the swelling of the component (a) can be demonstrated, and when the content is 83.3 wt.% or less, high proton conductivity can be maintained.

< Molecular weight of components (a) and (b)>

The appropriate weight-average molecular weight of the component (a) in the polymer electrolyte membrane in accordance with the present invention is, for example, 1000 to 1,000,000, preferably 10,000 to 500,000, and more preferably 100,000 to 300,000. Where the average molecular weight is 1000 or more, a sufficient strength of the polymer electrolyte membrane can be obtained. Where the molecular weight is 1,000,000 or less, processing does not become difficult.
The appropriate weight-average molecular weight of the component (b) in the polymer electrolyte membrane in accordance with the present invention is, for example, 1000 to 5,000,000, preferably 10,000 to 3,000,000, and more preferably 100,000 to 2,000,000. Where the average molecular weight is 1000 or more, a sufficient strength of the polymer electrolyte membrane can be obtained. Where the molecular weight is 5,000,000 or less, processing does not become difficult.

<Components other than (a) and (b)>

<Other resins>

The polymer electrolyte membrane in accordance with the present invention may contain a resin other than components (a) and (b) as a third component within a range in which properties of the polymer electrolyte membrane are not degraded significantly.
Examples of suitable resins include general use resins such as ABS resins and AS resins, thermoplastic resins such as polyacetals (POM), polyphenylene sulfide (PPS), polyketones (PK), polycyclohexane dimethanol terephthalate (PCT), polyallylates (PAR), and various liquid crystalline polymers (LCP), and thermosetting resins such as benzoguanamine resins, unsaturated polyester resins, and diallylphthalate resins, but these examples are not limiting.
Further, in some cases, the sum total of contents of components (a), (b) in accordance with the present invention is 50 wt.% or more to less than 100 wt.%, more preferably 70 wt.% or more to less than 100 wt.% based on the total weight of the resin composition.
Where the total content of components (a), (b) in accordance with the present invention is 50 wt.% or more based on the total weight of the polymer electrolyte membrane, good proton conductivity is obtained. Further, continuity of the domain phase composed of the component (a) can be maintained.

<Additives>

The polymer electrolyte membrane in accordance with the present invention may contain a variety of additives such as coupling agents, crosslinking agents, radical trapping agents, antioxidants, thermal stabilizers, lubricants, adhesion imparting agents, plasticizers, viscosity adjusting agents, antistatic agents, bactericidal agents, antifoaming agents, dispersants, and polymerization inhibitors within ranges in which properties of polymer electrolyte membrane are not degraded significantly. These additives can be used individually or in combination of a plurality thereof according to the object of application.

Examples of coupling agents that can be used in the polymer electrolyte membrane in accordance with the present invention include silane coupling agents such as vinyltrichlorosilane (trade name KA-1003, product of Shin-Etsu Chemical Co., Ltd.), vinyltrimethoxysilane (trade name KBM-1003, product of Shin-Etsu Chemical Co., Ltd.), vinyltriethoxysilane (trade name KBE-1003, product of Shin-Etsu Chemical Co., Ltd.), 2-(3-4-epoxycyclohexyl)ethyltrimethoxysilane (trade name KBM-303, product of Shin-Etsu Chemical Co., Ltd.), 3-glycidoxypropyltrimethoxysilane (trade name KBM-403, product of Shin-Etsu Chemical Co., Ltd.), 3-glycidoxypropylmethyldiethoxysilane (trade name KBE-402, product of Shin-Etsu Chemical Co., Ltd.), 3-glycidoxypropyltriethoxysilane (trade name KBE-403, product of Shin-Etsu Chemical Co., Ltd.), p-styryltrimethoxysilane (trade name KBM-1403, product of Shin-Etsu Chemical Co., Ltd.), 3-methacryloxypropylmethyldimethoxysilane (trade name KBM-502, product of Shin-Etsu Chemical Co., Ltd.), 3-methacryloxypropyltrimethoxysilane (trade name KBM-503, product of Shin-Etsu Chemical Co., Ltd.), 3-methacryloxypropylmethyldiethoxysilane (trade name KBE-502, product of Shin-Etsu Chemical Co., Ltd.), 3-methacryloxypropyltriethoxysilane (trade name KBE-503, product of Shin-Etsu Chemical Co., Ltd.), 3-acryloxypropyltrimethoxysilane (trade name KBM-5103, product of Shin-Etsu Chemical Co., Ltd.), N-2-(aminoethyl)-3-aminopropylmethyldimethoxysilane (trade name KBM-602, product of Shin-Etsu Chemical Co., Ltd.), N-2-(aminoethyl)-3-aminopropyltrimethoxysilane (trade name KBM-603, product of Shin-Etsu Chemical Co., Ltd.), N-2-(aminoethyl)-3-aminopropyltriethoxysilane (trade name KBE-603, product of Shin-Etsu Chemical Co., Ltd.), 3-aminopropyltrimethoxysilane (trade name KBM-903, product of Shin-Etsu Chemical Co., Ltd.), 3-aminopropyltriethoxysilane (trade name KBE-903, product of Shin-Etsu Chemical Co., Ltd.), 3-triethoxysilyl-N-(1,3-dimethyl-butylidene)propylamine (trade name KBE-9103, product of Shin-Etsu Chemical Co., Ltd.), N-phenyl-3-aminopropyltrimethoxysilane (trade name KBM-573, product of Shin-Etsu Chemical Co., Ltd.), N-(vinylbenzyl)-2-aminoethyl-3-aminopropyltrimethoxysilane hydrochloride (trade name KBM-575, product of Shin-Etsu Chemical Co., Ltd.), 3-ureidopropyltriethoxysilane (trade name KBE-585, product of Shin-Etsu Chemical Co., Ltd.), 3-chloropropyltrimethoxysilane (trade name KBM-703, product of Shin-Etsu Chemical Co., Ltd.), 3-mercaptopropylmethyldimethoxysilane (trade name KBM-802, product of Shin-Etsu Chemical Co., Ltd.), 3-mercaptopropyltrimethoxysilane (trade name KBM-803, product of Shin-Etsu Chemical Co., Ltd.), bis(triethoxysilylpropyl)tetrasulfide (trade name KBE-846, product of Shin-Etsu Chemical Co., Ltd.), 3-isocyanate propyltriethoxysilane and (trade name KBE-9007, product of Shin-Etsu Chemical Co., Ltd.), and it is preferred that 3-glycidoxypropyltrimethoxysilane (trade name KBM-403, product of Shin-Etsu Chemical Co., Ltd.), 3-methacryloxypropyltrimethoxysilane (trade name KBM-503, product of Shin-Etsu Chemical Co., Ltd.), and 3-aminopropyltrimethoxysilane (trade name KBM-903, product of Shin-Etsu Chemical Co., Ltd.) be used.

Examples of crosslinking agents for use in the polymer electrolyte membrane in accordance with the present invention include phenolic resins, epoxy resins, resole resins, melamine resins, benzoguanamine resins, polyfunctional acrylates, 4,4'-dihydroxy-3,3',5,5'-tetrahydroxymethylbiphenyl (trade name: TML-p,p'-BPF, product of Honshu Chemical Industries Co., Ltd.), and bis(4-hydroxy-3,5-dihydroxymethylphenyl)methane (trade name: TML- BP, product of Honshu Chemical Industries Co., Ltd.), and it is preferred that 4,4'-dihydroxy-3,3',5,5'-tetrahydroxymethylbiphenyl (trade name: TML-p,p'-BPF, product of Honshu Chemical Industries Co., Ltd.) and bis(4-hydroxy-3,5-dihydroxymethylphenyl)methane (trade name: TML- BP, product of Honshu Chemical Industries Co., Ltd.) be used.

No specific limitation is placed on a method for adding these additives, and a method of mixing with a solution comprising various components of the polymer electrolyte membrane in accordance with the present invention (varnish), a method of dipping an electrolyte membrane into an additive and/or a solution thereof (dip method), and a method of coating an additive and/or a solution thereof on an electrolyte membrane (coating method) can be used appropriately according to the object of application. The method of adding to a varnish will be described below in greater detail.

No specific limitation is placed on dipping time in the case an additive is added by the dipping method, but the dipping time is preferably 10 to 180 min, more preferably 15 to 150 min, and even more preferably 30 to 120 min. Where the dipping time is 10 min or more, the amount of the additive that is added is sufficient, and where the dipping time is 180 min or less, the amount added does not become tool large.

No specific limitation is placed on concentration of additive solution when the additive is added by the dip method, but this concentration is preferably 0.1 to 90%, more preferably 1 to 80%, and even more preferably 3 to 70%. Where the concentration is 0.1% or more, the amount of the additive that is added is sufficient, and where the concentration is 90% or less, the amount added does not become tool large.

No specific limitation is placed on a solvent used for the additive solution in the case an additive is added by the dip method or coating method, provided that the solvent does not dissolve the electrolyte membrane. An adequate solvent

can be selected from aprotic polar solvents such as N,N-dimethylacetamide, N,N-dimethylformamide, dimethylsulfoxide, N-methyl-2-pyrrolidone, hexamethylphosphonamide, γ-butyrolactone, diglyme, cellosolve acetates, and tetrahydrofuran, and alcohols such as methanol and ethanol, but this list is not limiting. These solvents may be also used as a mixture of a plurality of solvents within an allowed range.
No specific limitation is placed on temperature in the case an additive is added by the dip method or coating method, but this temperature is preferably from -20°C to 100°C, more preferably from 0°C to 80°C, and even more preferably from 5°C to 60°C. Where the temperature is -20°C or more, the amount added does not decrease, and when the temperature is 100°C or less, the additive itself does not react.
When an additive is added by the dip method, it is preferred that excess additive that adhered to the surface of the polymer electrolyte membrane dipped into the additive solution be removed. No specific limitation is placed on a method for removing the additive, and a method of immersing into a solvent and washing off, a method of spraying a solvent and washing off, a method of wiping with paper or cloth, and a method of blowing, e.g. with an air gun, can be used individually or in combination thereof according to the object of application.
Additives that adhered to the polymer electrolyte membrane in accordance with the present invention are fixed to the polymer electrolyte membrane surface. No specific limitation is placed on the fixing method, and heating, UV irradiation, microwave irradiation, and electron beam irradiation can be used appropriately according to the object of application.
When the added additives are fixed by heating, no specific limitation is placed on the heating temperature, but the temperature of 50 to 300°C is preferred, 80 to 250°C is more preferred, and 100 to 200°C is even more preferred. Where the temperature is 50°C or more, sufficient fixing proceeds, and
where the temperature is 300°C or less, the additive itself is not decomposed.
Further, no specific limitation is placed on the time required for heating, but the heating time of 1 to 300 min is preferred, 10 to 200 min is more preferred, and 20 to 150 min is even more preferred. Where the heating time is 1 min or more, sufficient fixing proceeds, and where the heating time is 300 min or less, the additive itself is not decomposed.

<Method for manufacturing electrolyte membrane>

A variety of well-known methods can be used for molding the polymer electrolyte membrane in accordance with the present invention, but the most preferred among them is a casting method. With the casting method, a solvent solution (varnish) comprising the component (a) and component (b) in accordance with the present invention and also optionally other resins and additives is prepared, this varnish is cast on a substrate, and the solvent is then removed. More specifically, the method for manufacturing the polymer electrolyte membrane in accordance with the present invention comprises the steps of:

(1) preparing a polymer mixed liquid (varnish) by melting the component (a) and the component (b) or dissolving the two components in a solvent; and
(2) producing a polymer electrolyte membrane by coating the polymer mixed liquid on a substrate and then drying.

<Method for preparing a varnish>

No specific limitation is placed on a method for preparing a varnish for use in the production of the polymer electrolyte membrane in accordance with the present invention. Examples of suitable methods include a varnish blend method and a one-pot method described below. With the varnish blend method, varnishes are prepared by individually dissolving components (a) and (b) and other resins and additives in solvents, and the varnishes are then mixed at a desired ratio. With the one-pot method the components (a) and (b) and other resins and additives are mixed together with a solvent and dissolved.
The advantage of the varnish blend method is that residues of components with low solubility can be removed, and the advantage of the one-pot method is that a procedure of preparing a plurality of varnishes is omitted. The appropriate preparation method can be selected according to the application. Furthermore, the varnish blend method and one-pot method can be used in combination. For example, the preparation of varnish can be completed with good efficiency by preparing in advance only varnishes of components with poor solubility and then mixing the prepared varnishes with components having good solubility by the one-pot method.
An adequate solvent for use in the preparation of varnish can be selected from aprotic polar solvents such as N,N-dimethylacetamide, N,N-dimethylformamide, dimethylsulfoxide, N-methyl-2-pyrrolidone, hexamethylphosphonamide, γ-butyrolactone, diglyme, cellosolve acetates, and tetrahydrofuran, and alcohols such as methanol and ethanol, but this list is not limiting.
Temperature in the preparation of varnish for use in the production of the polymer electrolyte membrane in accordance with the present invention is desirably such that dissolution of solute components is enhanced, but reaction or separation of solute components or evaporation of solvent does not occur. No specific limitation is placed on temperature during

the preparation of varnish for use in the production of the polymer electrolyte membrane in accordance with the present invention, but this temperature is preferably -20°C to 100°C, more preferably 0°C to 80°C, even more preferably 15 to 60°C. Where the temperature is -20°C or more, sufficient solubility can be maintained, and where the temperature is 100°C or less, neither reaction or separation of solute components nor evaporation of solvent occur.

Sufficient stirring would be appropriate during varnish preparation. The preferred stirring method ensures rapid and homogeneous mixing of solute components such as components (a) and (b).

No specific limitation is placed on the stirring method, and a method of stirring with a mechanical stirrer, a method of stirring with a magnetic stirrer, a method of stirring with a mix rotor, and a method of stirring with a stirring and defoaming device can be used appropriately according to the application.

If necessary, a method of stirring under reduced pressure can be also used. Conducting stirring under reduced pressure is effective in terms of removing dissolved gas present in the varnish and inhibiting the generation of voids occurring during manufacture of electrolyte membrane. No specific limitation is placed on the degree of pressure reduction, but a pressure level of 1.3-66661 Pa (0.01 to 500 mm Hg) is preferred, and a pressure level of 13.3 to 39996 Pa (0.1 to 300 mm Hg) is more preferred, and a pressure level of 133 to 13332 Pa (1 to 100 mm Hg) is still more preferred. Where the pressure is 1.3 Pa (0.01 mm Hg) or more, the change in concentration caused by solvent evaporation is small, and where the pressure is 66661 Pa (500 mm Hg) or less, the dissolved gas can be completely removed.

No specific limitation is placed on concentration of varnish for use in the production of the polymer electrolyte membrane in accordance with the present invention, but the content of resin fraction is preferably 0.1 to 90 wt.%, more preferably 5 to 50 wt.%, even more preferably 10 to 40 wt.% based on the weight of the entire varnish. Where the concentration is 0.1 wt.% or more, good membrane forming ability can be obtained, and where the concentration is 90 wt.% or less, processability is not degraded.

No specific limitation is placed on viscosity of varnish for use in the production of the polymer electrolyte membrane in accordance with the present invention, but the viscosity is preferably 0.1 to 1000 Pa·s, more preferably 1 to 500 Pa·s, and even more preferably 5 to 100 Pa·s. Where the viscosity is 0.1 Pa·s or more, the varnish is not repelled when the electrolyte membrane is manufactured (a state in which the varnish does not adhere to the substrate does not occur), and where the viscosity is 1000 Pa·s or less, no peaks or valleys occur on the membrane surface due to varnish threading during electrolyte membrane manufacture.

If necessary, the varnish for use in the production of the polymer electrolyte membrane in accordance with the present invention can be filtered. No specific limitation is placed on the filtration method, and pressure filtration, centrifugal filtration, and vacuum filtration can be used. No specific limitation is placed on the filter for use in filtration, provided the filter is from a material that is not dissolved in the varnish.

Viscosity and concentration of the varnish for use in the production of the polymer electrolyte membrane in accordance with the present invention can be adjusted by further adding a solvent. No specific limitation is placed on a solvent that can be used for adjusting viscosity and concentration. An adequate solvent can be selected from aprotic polar solvents such as N,N-dimethylacetamide, N,N-dimethylformamide, dimethylsulfoxide, N-methyl-2-pyrrolidone, hexamethylphosphonamide, γ-butyrolactone, diglyme, cellosolve acetates, and tetrahydrofuran, and alcohols such as methanol and ethanol, but this list is not limiting. These solvents may be also used as a mixture of a plurality of solvents within an allowed range.

No specific limitation is placed on pot life (interval in which the varnish can be used after all the components have been mixed) of the varnish for use in the production of the polymer electrolyte membrane in accordance with the present invention, but the pot life is preferably 6 h or more, more preferably 12 h or more, and even more preferably 24 h or more. Where the pot life is 6 h or more, no inconveniences are encountered during production of the polymer electrolyte membrane.

<Application of varnish>

The varnish is applied to a substrate by using, for example, a spin coater, a spray coater, an applicator, or a doctor blade. The application may be also performed, for example, by a method of applying the vanish to a constant thickness by using an applicator or a doctor blade, or a method of obtaining a constant cast surface area by using a glass laboratory dish and controlling the thickness by the amount or concentration of solution.

Examples of suitable substrates include glass, polyethylene, polypropylene, oriented polypropylene (OPP), polyethylene terephthalate (PET), polyethylene naphthalate (PEN), polyimides, Teflon®, aluminum, stainless steel, copper, and silicon wafers. When the viscosity of solution is high, if casting is performed at a high temperature upon heating the substrate or the varnish, the varnish viscosity decreases, thereby facilitating casting.

No specific limitation is placed on thickness of varnish during casting, but the thickness is preferably 10 to 1000 μm, more preferably 50 to 750 μm. Where the varnish thickness is 10 μm or more, the form of the polymer electrolyte membrane can be sufficiently maintained, and when the varnish thickness is 1000 μm or less, a uniform polymer electrolyte membrane can be obtained.

<Removal of solvent>

Solvent can be removed from the varnish by using a well-known conventional method.
For example, it is possible to use a method based on heating and/or vacuum drying and a method by which solvent is removed by dipping in a solvent that does not dissolve a compound and is miscible with a solvent that dissolves the compound. From the standpoint of uniformity of the electrolyte membrane, it is preferred that the solvent be distilled off by heating and/or vacuum drying.
In order to avoid decomposing or modifying the solvent or components such as the component (a) and component (b), the drying can be also conducted under vacuum at as low a temperature as possible.
A more uniform electrolyte membrane of the cast varnish can be obtained by regulating the solvent removal rate. For example, when heating is performed, the solvent removal rate is delayed by reducing temperature (room temperature to 80°C) at the initial stage to decrease evaporation rate. Further, when immersion in water or the like is performed to remove the solvent without evaporation, the solidification rate of components such as the component (a) and component (b) can be regulated by allowing the varnish to stay for an appropriate time (30 min to 3 h) in air or inactive gas.

<Properties of polymer electrolyte membrane>

The polymer electrolyte membrane in accordance with the present invention can be made to have any thickness according to the object of application, but from the standpoint of proton conductance, it is preferred that the polymer electrolyte membrane be as thin as possible. More specifically, a thickness of 1 to -200 μm is preferred, 5 to 75 μm is more preferred, and 5 to 50 μm is most preferred. Where the thickness of electrolyte membrane is 1 μm or more, the electrolyte membrane is easy to handle and short circuit of fuel cell is prevented. Where the thickness is 200 μm or less, the electric resistance of electrolyte substrate can be reduced and the fuel cell can demonstrate a sufficient power generation performance.
The proton conductance of the polymer electrolyte membrane in accordance with the present invention is preferably 0.01 S/cm or more.
Where the proton conductance is 0.01 S/cm or more, good output can be obtained in the fuel cell using the electrolyte membrane.
The electric resistance of the polymer electrolyte membrane in accordance with the present invention is preferably less than 500 mΩ$cm^2$. Where the electric resistance is less than 500 mΩ$cm^2$, good output can be obtained in the fuel cell using the electrolyte membrane.
The methanol permeation coefficient of the polymer electrolyte membrane in accordance with the present invention is preferably less than 2 $kg/m^2 \cdot h$. Where the methanol permeation coefficient is less than 2 $kg/m^2 \cdot h$, good output can be obtained.
The surface area swelling ratio of the polymer electrolyte membrane in accordance with the present invention is preferably less than 250%, more preferably less than 180%, and even more preferably less that 160%. Where the swelling ratio is less than 250%, output decrease in the fuel cell using the electrolyte membrane can be prevented.
The polymer electrolyte membrane in accordance with the present invention may be reinforced with a reinforcing material. A porous substrate is preferred as the reinforcing material, and the membrane can be fabricated by charging, fixing and retaining a resin comprising the components (a) and (b) in accordance with the present invention in cavities or pores of the porous substrate.
A nonwoven fabric or fiber sheet comprising glass fibers, polyester fibers, aramide fibers, or nylon fibers, a sheet comprising fibrillated polytetrafluoroethylene, or porous organic materials are preferred as the porous substrate. The thickness of the reinforced polymer electrolyte substrate obtained by charging, fixing and retaining the resin in cavities or pores of the porous substrate is preferably 5 to 200 μm, more preferably 5 to 100 μm. Generally, where the thickness is 5 μm or more, strength suitable for practical use can be maintained, and where the thickness is 200 μm or less, no problems are associated with handleability and operability. The porous substrate preferably has a porosity of 10 to 95%, more preferably 40 to 90%. Where the porosity is 10% or more, the filling amount of the resin comprising the components (a) and (b) in accordance with the present invention is sufficient and a sufficient ion conductance can be obtained. Further, where the porosity is 95% or less, a sufficient reinforcement effect can be obtained. The porous substrate preferably has an average pore diameter of 0.001 to 100 μm. Where the average pore diameter is 0.001 μm or more, the pores can be easily filled with a polymer compound or a resin composition comprising the polymer compound. Where the average pore diameter is 100 μm or less, a polymer compound or a resin composition comprising the polymer compound can be easily fixed.
Fiber sheets or nonwoven fabrics of general use that comprise polyester fibers, glass fibers, aramide fibers, or Nylon fibers can be used as the porous substrate, provided that the aforementioned conditions relating to thickness, porosity and average pore diameter thereof are satisfied.
Examples of porous organic materials include polyethylene, polypropylene, polyether ketones, polysulfides,

polyphosphazenes, polyphenylenes, polybenzimidazoles, polyether sulfones, polyphenylene oxide, polyesters, polycarbonates, polyurethanes, polyamides, polyimides, polyquinolines, polyquinoxalines, polyureas, polysulfones, polysulfonates, polybenzoxazoles, polybenzothiazoles, polythiazoles, polyphenylquinacridone, polyquinolines, polysiloxanes, polytriazinse, polydienes, polypyridine, polypyrimidyne, polyoxathiazoles, polytetrazapilene, polyoxazole, polyvinyl pyridine, polyvinyl imidazole, polypyrrolidone, polytetrafluoroethylene, polyvinylidene fluoride, polyacrylate derivatives, polymethacrylate derivatives, and polystyrene derivatives. Among these compounds, from the standpoint of heat resistance and resistance to electrolyte, polyesters, polysulfones, polyether sulfone, polyacrylates, polyamidoimides, polyetherimides, and polyimides are more preferred.
No specific limitation is placed on a method for loading the polymer compound or the resin composition including same into the porous substrate, and a method can be employed by which the polymer compound or the resin composition including same are impregnated in a state of dispersion in a solvent into the porous substrate and the solvent is then removed by drying. Further, a method may be also used by which a monomer and/or an oligomer component is impregnated to enable full loading into pores of the porous substrate, and a polymerization reaction is induced inside the pores. Further, it is preferred that impregnation be performed while degassing and reducing pressure so that the porous substrate be filled with the polymer compound or the resin composition including same at a higher filling ration. If necessary, a crosslinking agent may be introduced into the porous substrate. The membrane-like body obtained in the above-described manner can be subjected to conventional treatment such as sulfonation, chlorosulfonation, introduction of phosphonium group, or hydrolysis in order to introduce the desired cation-exchange group and obtain a cation-exchange resin membrane.

<Multilayer polymer electrolyte membrane>

A multilayer polymer electrolyte membrane in which two or more layers are laminated can be also obtained. Examples of methods suitable for obtaining a multilayer configuration include a lamination method by which polymer electrolyte membranes of different types are laminated and a coating method by which a varnish is additionally coated on the membrane and dried. The lamination method excels in that no additional solvent is used, and the advantage of the coating method is in high adhesivity of interface. The appropriate manufacturing method can be used according to the object of application.
Fluorine-containing polymer electrolyte membranes such as Nafion® and Flemion® are examples of membranes that can be used as the layers for lamination in addition to the electrolyte membrane in accordance with the present invention. No specific limitation is placed on the laminate structure in the manufacture of the multilayer configuration, and the electrolyte membrane in accordance with the present invention of at least one type may be contained therein. The adjacent layers in the laminated structure are preferably brought into contact and bonded together so that no gaps serving as electrically non-conductive portions be formed therebetween. Where independent gaps are present between the layers, the respective portions cause the increase in electric resistance of the cell. The total thickness of the multilayer electrolyte membrane is 5.0 to 200 μm, preferably 1.0 to 150 μm. Where the thickness is 5 μm or more, the multilayer electrolyte membrane is easy to handle, and no short circuit occurs when a fuel cell is fabricated. Where the total thickness is 200 μm or less, electric resistance of the multilayer electrolyte membrane can be inhibited and sufficient power generation capacity of the fuel cell can be demonstrated.
When electrolyte membranes of different kinds fabricated within the scope of the present invention are laminated to obtain a multilayer structure, the difference in exchange capacity between the electrolyte membrane of at least one kind and other electrolyte membranes is preferably 0.01 to 4.0 meq./g. Further, it is preferred that the maximum ion exchange capacity of the polymer electrolyte membrane be 4.5 meq./g.
The ion exchange capacity of the electrolyte membrane is preferably 0.03 to 4.5 meq./g. Where the ion exchange capacity is 0.03 meq./g or more, no significant increase in electric resistance of the cell is observed, and where the ion exchange capacity is 4.5 meq./g or less, sufficient mechanical strength of the electrolyte membrane can be maintained.

<Joint>

The electrode - polymer electrolyte membrane joint in accordance with the present invention is manufactured by providing the electrode on the electrolyte membrane. It is preferred that the catalyst layer side of the electrode be joined to the polymer electrolyte membrane. The following three methods can be used for manufacturing the electrode - polymer electrolyte membrane joint.

(1) A method by which a catalyst layer is formed by directly applying a catalytic substance onto the electrolyte membrane and then forming a gas diffusion layer on the catalyst layer thus formed. For example, with the method described in Japanese Patent Publication Tokuhyo No. 2000-516014, a catalytic substance comprising a perfluorocarbon polymer comprising an ion-exchange group, a platinum-group catalyst, an ultrafine carbon powder (carbon

black), and other additives is applied onto an electrolyte membrane by coating, spraying, printing, or the like to form a catalyst layer, and then a gas diffusion layer is thermally press bonded on the catalyst layer by thermal pressing or the like.

(2) A method by which a catalytic substance is applied onto a substrate in advance to form a catalyst layer, the catalyst layer thus obtained is transferred onto an electrolyte membrane, and then a gas diffusion layer is formed on the catalyst layer thus formed. For example, such method comprises the steps of uniformly mixing in advance polytetrafluoroethylene and platinum black synthesized by a Thomas method or the like, applying the mixture onto a Teflon® sheet substrate, pressure molding, and then transferring onto an electrolyte membrane, arranging a gas-diffusion layer, and pressure bonding the laminated body thus obtained.

(3) A method by which an electrode is fabricated in advance by immersing a gas-diffusion layer into a solution of a catalytic substance, and the electrode obtained is provided on an electrolyte membrane. For example, a gas-diffusion layer is immersed in a solution (paste) of a soluble platinum-group salt, and the soluble platinum-group salt is caused to be adsorbed on the gas-diffusion layer and inside thereof (ion exchange). A metal serving as a catalyst is then precipitated on the gas-diffusion layer by immersion in a solution of a reducing agent such as hydrazine and $Na_2BO_4$.

In a more preferred method for manufacturing a membrane - electrode joint in accordance with the present invention, an electrode material comprising a catalytic substance and a gas-diffusion layer material is directly applied onto an electrolyte membrane. More specifically, catalyst-supporting carbon particles that support a catalytic substance such as platinum - ruthenium (Pt-Ru) and platinum (Pt) are used as a catalytic substance, and a paste is produced by mixing the catalytic substance with a solvent such as water, a binder such as a solid polymer electrolyte, and optionally a water-repellent agent such as polytetrafluoroethylene (PTFE) particles that are used in the manufacture of a gas-diffusion layer. The paste is directly applied by coating or spraying on the electrolyte membrane in accordance with the present invention to form a film and then dried by heating to form a catalyst layer (in the case the water-repellent agent is contained, the layer formed comprises a water-repellent layer forming part of a gas-diffusion layer) on a polymer electrolyte. An electrode is fabricated by thermally pressing a gas-diffusion layer such as carbon paper optionally subjected to a water repellent treatment onto the catalyst layer.

The appropriate thickness of the catalyst layer in this process is, for example, 0.1 to 1000 μm, preferably 1 to 500 μm, and more preferably 2 to 200 μm.

The paste viscosity is preferably adjusted within a range of 0.1-1000 Pa·S. The viscosity can be adjusted by: (i) selecting different particle sizes, (ii) adjusting the composition of catalyst particles and the binder, (iii) adjusting the content of water, or (iv) advantageously adding a viscosity-adjusting agent, for example, carboxymethyl cellulose, methyl cellulose, hydroxyethyl cellulose and cellulose, or polyethylene glycol, polyvinyl alcohol, polyvinyl pyrrolidone, sodium polyacrylate, and polymethylvinyl ether.

<Electrode>

The electrode in accordance with the present invention comprises a gas-diffusion layer and a catalyst layer provided on the gas-diffusion layer or inside thereof.

<Gas-diffusion layer>

A well-known substrate having gas permeability, for example, a carbon fiber fabric and carbon paper can be used as the gas-diffusion layer. It is preferred that such substrates be subjected to water repellent treatment. The water repellent treatment can be performed by immersing the substrate into an aqueous solution of a water-repellent agent comprising a fluororesin such as polytetrafluoroethylene and tetrafluoroethylene - hexafluoropropylene copolymer, drying, and baking.

<Catalyst layer>

Examples of catalytic substances for use in the catalyst layer include platinum-group metals such as platinum, rhodium, ruthenium, iridium, palladium, and osmium and alloys thereof. These catalytic substances or salts of catalytic substances may be used individually or in a mixture. Among them, metal salts or complexes, in particular ammine complexes represented by $[Pt(NH_3)_4]X_2$ or $[Pt(NH_3)_6]X_4$ (X is a monovalent anion) are preferred. Further, when a metal compound is used as the catalyst, a mixture of several compounds may be used and a complex salt may be also used. For example, when a mixture of a platinum compound and a ruthenium compound is used, a platinum-ruthenium alloy can be expected to be formed by a reduction process.

No specific limitation is placed on the particle size of the catalyst, but from the standpoint of an appropriate size that increases catalytic activity, an average particle size of 0.5 to 20 nm is preferred. In the research conducted by K. Kinoshita

et al. (J. Electrochem. Soc., 137, 845 (1990)), a particle size of platinum that ensures high activity with respect to reduction of oxygen is reported to be about 3 nm.

An auxiliary catalyst can be added to the catalyst used in accordance with the present invention. An ultrafine carbon powder is an example of such auxiliary catalyst. An ultrafine carbon powder that has high activity is preferred as the co-present catalyst. For example, when a compound of a platinum-group metal is used as the catalyst, acetylene black such as Denka Black, Valcan XC-72, and Black Pearl 200 is suitable as the catalyst.

The amount of catalyst differs depending on the attachment method and the like, but the suitable amount attached to the surface of the gas-diffusion layer is, for example, within a range of about 0.02 to about 20 mg/cm$^2$, preferably within a range of 0.02 mg/cm$^2$ to about 20 mg/cm$^2$. Further, a suitable amount of the catalyst present is, for example, 0.01 to 10 wt.%, preferably 0.3 to 5 wt.% based on the total weight of the electrode.

<Adhesive>

The electrode in accordance with the present invention preferably has an adhesive inside the electrode and/or on the surface thereof. The adhesive enhances bonding of the gas-diffusion layer and the catalyst layer and also bonding of the electrode and the polymer electrolyte membrane. All the polymers that can be used in accordance with the present invention and also solid polymer electrolytes such as fluorine-containing systems such as Nafion® and Flemion® can be used as the adhesive.

<Properties of electrolyte>

The polymer obtained is a porous material. A suitable average pore diameter of the electrode is, for example, 0.01 to 50 μm, preferably 0.1 to 40 μm. A suitable porosity of the electrode is, for example, 10 to 99%, preferably 10 to 60%.

(3) Fuel cell

The fuel cell in accordance with the present invention uses the above-described electrode - polymer electrolyte membrane. Examples of fuel cells in accordance with the present invention include polymer electrolyte fuel cells (PEFC) and direct methanol fuel cells (DMFC).

A method for manufacturing the fuel cell in accordance with the present invention includes a step of disposing the above-described polymer electrolyte membrane between two electrodes and obtaining an electrode - polymer electrolyte membrane joint.

More specifically, a fuel cell is fabricated, for example, by attaching catalyst layers to each surface of the polymer electrolyte membrane in accordance with the present invention, then providing a gas-diffusion layer to obtain the electrode - polymer electrolyte membrane joint, disposing or clamping two electrodes (anode and cathode) on each surface of the joint, disposing a fuel chamber capable of retaining hydrogen gas under normal pressure or pressurized hydrogen gas, pressurized methanol gas, or aqueous methanol solution on one surface of the laminate obtained, and disposing a gas chamber capable of retaining oxygen or air under normal pressure or pressurized oxygen or air on the other surface of the laminate. The fuel cell thus fabricated outputs electric energy generated by the reaction of hydrogen or methanol with oxygen.

Further, in order to take out the necessary power, a large number of units may be arranged in serial or parallel, one unit being the electrode - polymer electrolyte membrane joint or laminate.

[Example]

The present invention will be described below in greater details with reference to Examples thereof, but the present invention is not limited to the Examples.

<Measurement methods and evaluation methods>

(1) Evaluation of swelling ratio under effect of water and methanol

As for the swelling ratio, a polymer electrolyte membrane cut to a size of 2 cm × 2 cm was dipped for 1 to 12 h in an aqueous methanol solution (concentration 0 wt.% to 50 wt.%) at a temperature of 40°C to 60°C, and the change in the surface area of the membrane in this process was found by the equation presented below. The surface area after dipping was found by lightly wiping the electrolyte membrane surface with a paper towel, sandwiching the membrane between two transparent glass plated, picking up an image of the membrane with a scanner, and counting the number of pixels in the membrane portion by image analysis.

$$\lambda(\%) = \{(p - p_0)/p\} \times 100,$$

λ: surface area swelling ratio (%),
$p_o$: number of pixels of the polymer electrolyte membrane before swelling,
p: number of pixels of the polymer electrolyte membrane after swelling.

(2) Evaluation of methanol barrier property

a) Cells for evaluation
Cells (glass cells A, B) for evaluation shown in FIG. 1 were fabricated to measure methanol permeability.
b) Measurement method
A total of 180 g of pure water was added to the left cell and 200 g of pure water was added to the right cell, and the evaluation cells were placed in a thermostat (30°C) and allowed to stay therein for 30 min. Then, 20 g of methanol was added to the left cell, and the contents was stirred at 200 to 800 rpm, Concentration of methanol in the right cell was quantitatively determined by gas chromatography after 30, 60, 90, 120, 150, and 180 min, and methanol permeability was plotted against the time elapsed. A methanol flow velocity J was obtained from the slope of the plot. A methanol permeation coefficient p was calculated by the following Equation (I) that takes into account the electrolyte membrane thickness.

$$P = J \times l \qquad \text{Equation (I)}$$

P: methanol permeation coefficient (kgμm/m$^2$h),
J: methanol permeation flow velocity (kg/m$^2$h),
1: membrane thickness (μm).

(3) Measurement of proton conductance and calculation of electric resistance of membrane

a) Cell for evaluation
A cell for evaluation shown in FIG. 2 was fabricated to measure the proton conductance. Platinum electrodes were used and the distance between the electrodes was set to 1 cm. The measurements were conducted with the cell immersed into a beaker containing pure water so that the electrolyte portion was in a genuine submerged state.
b) Measurement method
Electric resistance of the electrolyte membrane was measured and calculated by an AC impedance method. The cell for evaluation was connected by four terminals to 1260 FREQUENCY RESPONSE ANALYZER manufactured by SOLARTRON Co. The real number component and imaginary number component of a total impedance detected when the AC frequency was changed at random from 1.0 Hz to 0.1 Hz were plotted on a complex plane to obtain a Cole-Cole plot, and the electric resistance of the electrolyte membrane was calculated from the plot. Proton conductance was calculated by performing curve fitting with respect to the number of linear portions of the Cole-Cole plot and substituting the resistance value of the electrode membrane obtained from the segments into the following equation.

$$\sigma = L/(R \times S) \qquad \text{Equation (I)}$$

σ : proton conductance (S/cm)
L: distance between electrodes (cm)
R: resistance (Q)
S: cross-section area of membrane (cm$^2$)

Electric resistance of the membrane was calculated by using the following Equation (III) from the conductance thus obtained and the thickness of the polymer electrolyte membrane.

$$R_m = 0.1 \times l/\sigma \qquad \text{Equation (III)}$$

$R_m$: membrane resistance ($m\Omega cm^2$)
l: membrane thickness ($\mu m$)
$\sigma$: proton conductance (S/cm)

<(a) Synthesis of electrolyte polymer>

[Synthesis Example 1] 4,4'-Dichlorodiphenylsulfone-3,3'-disulfonic acid sodium salt monohydrate (25.463 g, 0.05 mol), 4,4'-dichlorodiphenylsulfone (14.358 g, 0.05 mol), 4,4'-dihydroxydiphenyl ether (20.212 g, 0.10 mol), potassium carbonate (16.6 g, 1.2 mol), N-methyl pyrrolidone, 120 mL, and toluene, 36 mL, were added to a four-neck round-bottom flask with a capacity of 500 mL equipped with a Dean-Stark trap, a condenser, a stirrer, and a nitrogen feed tube. Heating to 160°C and refluxing for 4 h were performed to distill off the toluene, and the temperature was then raised to 200°C and stirring was conducted for 96 h. Upon cooling, the solution was poured into 2000 mL of water and a compound was precipitated. The precipitate was filtered and thoroughly washed with distilled water. Subsequent vacuum drying for 12 h at room temperature yielded electrolyte polymer (a) that is the target product (sulfonated polyethersulfone; structural formula 1, n : m = 50 : 50).
Yield: 50.0 g, yield ratio: 88.7%, weight-average molecular weight 180,000, dispersivity: 2.4, ion exchange equivalent weight value (EW value): 430.

Structural Formula 1:

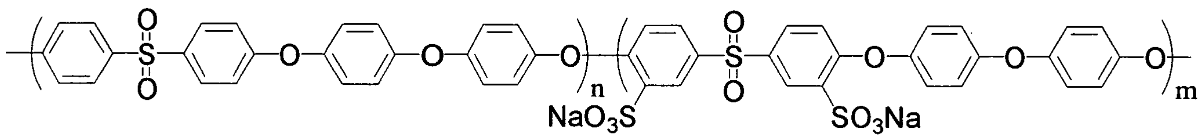

The polymer electrolyte compound, 25 g, and N-methyl pyrrolidone, 46.5 g, were added to the four-neck round-bottom flask with a capacity of 200 mL equipped with a condenser, a stirrer, and a nitrogen feed tube, followed by heating at 160°C and dissolution. A varnish (resin fraction 35%) of the electrolyte polymer (a) was thus obtained.

[Synthesis Example 2]

An electrolyte polymer (a) (sulfonated polyethersulfone; structural formula 2, n : m = 70 : 30) that is the target product and a varnish (resin fraction 35%) of the electrolyte polymer (a) were obtained in absolutely the same manner as in Synthesis Example 1, except that 4,4'-dichlorodiphenylsulfone-3,3'-disulfonic acid sodium salt monohydrate (15.278 g, 0.03 mol) and 4,4'-dichlorodiphenylsulfone (20.101 g, 0.07 mol) were used. Yield: 43.1 g, yield ratio: 90.2%, weight-average molecular weight 175,000, dispersivity: 2.5, ion exchange equivalent weight value (EW value): 630.

Structural Formula 2:

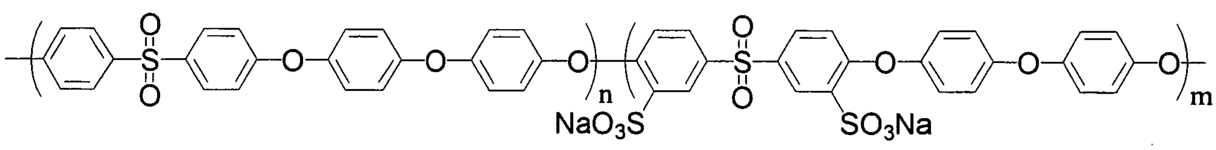

[Synthesis Example 3]

Polyphenylene ether sulfone (trade name: Polyphenylsulfone, product of Aldrich Co., number-average molecular weight determined by gel permeation chromatography (GPC) 28,500), 30 g, and tetrachloroethane, 250 mL, were added to a four-neck round-bottom flask with a capacity of 500 mL equipped with a stirrer, a thermometer, and a reflux cooler connected to a calcium chloride pipe. Then, after chloromethyl methyl ether, 30 mL was further added, a mixed solution of tin (IV) chloride anhydride, 1 mL, and tetrachloroethane, 20 mL, was dropwise added, followed by heating to 80°C and stirring for 90 min under heating. Then, the reaction solution was dropwise added to 1 L of methanol and a polymer was precipitated. The precipitate was crushed with a mixer and washed with methanol till the acid component was removed. Subsequent heating and drying produced 32 g of chloromethylated polyphenylene polyether sulfone. The compound obtained was identified by nuclear magnetic resonance (NMR). The chemical shift of the methylene proton of the chloromethyl group was 4.64 ppm. The introduction ratio of chloromethyl groups calculated from a proton integration ratio of NMR was 28%.

The chloromethylated polyphenylene polyether sulfone thus obtained was added to a four-neck round-bottom flask with a capacity of 1000 mL equipped with a stirrer, a thermometer and a reflux cooler connected to a calcium chloride pipe, and N-methyl pyrrolidone, 600 mL, was added. A solution of potassium thioacetate, 7 g, and n-methyl pyrrolidone (NMP), 50 mL, was added into the flask, the flask was heated to 80°C, and stirring was conducted for 3 h under heating. The reaction liquid was then dropwise added to 1 L of water and the polymer was precipitated. The precipitate was crushed with a mixer, washed with water and then heated and dried to obtain 29 g of thioacetylated polyphenylene ether sulfone.
The obtained thioacetylated polyphenylene ether sulfone, 20 g, was added to a four-neck round-bottom flask with a capacity of 500 mL equipped with a stirrer, a thermometer and a reflux cooler connected to a calcium chloride pipe, and acetic acid, 300 mL, was then added. Aqueous hydrogen peroxide, 20 mL, was then added, followed by heating to 45°C and stirring for 4 h under heating. The reaction solution was then added under cooling to 1 L of a 6N aqueous solution of sodium hydroxide and the components were stirred for some time. The polymer was filtered and washed with water till the alkali component was removed. The polymer was thereafter added to 300 mL of 1N hydrochloric acid and stirred for some time. The polymer was filtered and washed with water till the acid component was removed, followed by vacuum drying. As a result, sulfomethylated polyphenylene ether sulfone (structural formula 3, n : m = 72 : 28) was obtained.
Yield: 19.0 g, yield ratio: 95%, weight-average molecular weight 246,000, dispersivity: 3.5, ion exchange equivalent weight value (EW value): 720.

Structural Formula 3;

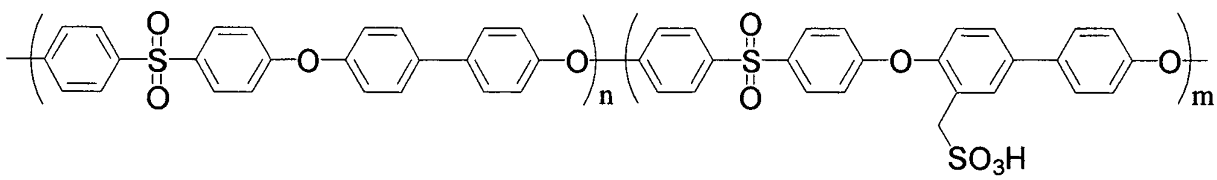

The synthesized sulfomethylated polyether sulfone, 17 g, and N-methyl pyrrolidone, 31.6 g, were added to the four-neck round-bottom flask with a capacity of 200 mL equipped with a condenser, a stirrer, and a nitrogen feed tube, followed by heating at 160°C and dissolution. A varnish (resin fraction 35%) of the electrolyte polymer (a) was thus obtained.

[Synthesis Example 4]

An electrolyte polymer (a) (sulfomethylated polyethersulfone; structural formula 4, n : m = 67 : 33) was synthesized in the same manner as in Synthesis Example 1, except that chloromethyl methyl ether, 33 mL, and potassium thioacetate, 7.4 g, were used.
Yield: 17.0 g, yield ratio: 85%, weight-average molecular weight 246,000, dispersivity: 3.5, ion exchange equivalent weight value (EW value): 600.

Structural Formula 4:

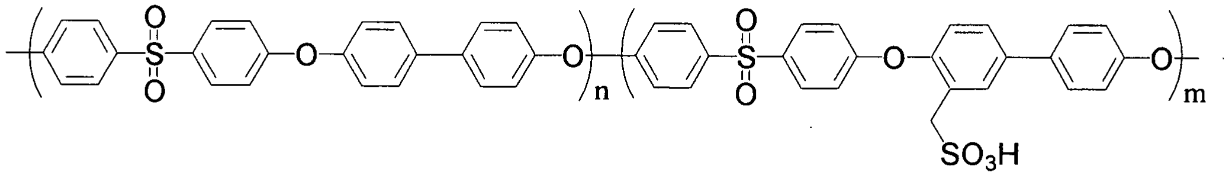

The synthesized sulfomethylated polyether sulfone, 17 g, and N-methyl pyrrolidone, 31.6 g, were added to the four-neck round-bottom flask with a capacity of 200 mL equipped with a condenser, a stirrer, and a nitrogen feed tube, followed by heating at 160°C and dissolution. A polymer electrolyte compound varnish (resin fraction 35%) was thus obtained.

[Synthesis Example 5]

An electrolyte polymer (a) (sulfomethylated polyethersulfone; structural formula 5, n : m = 61 : 39) was synthesized in the same manner as in Synthesis Example 3, except that chloromethyl methyl ether, 43 mL, and potassium thioacetate, 9.8 g, were used.
Yield: 15.0 g, yield ratio: 75%, weight-average molecular weight 246,000, dispersivity: 3.5, ion exchange equivalent weight value (EW value): 500.

Structural Formula 5:

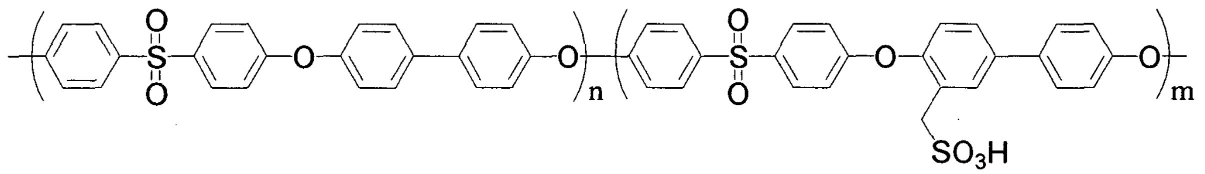

The synthesized sulfomethylated polyether sulfone, 15 g, and N-methyl pyrrolidone, 27.6 g, were added to the four-neck round-bottom flask with a capacity of 200 mL equipped with a condenser, a stirrer, and a nitrogen feed tube, followed by heating at 160°C and dissolution. A polymer electrolyte compound varnish (resin fraction 35%) was thus obtained.

<(b) Synthesis example of polymer that suppresses swelling of component (a)>

[Synthesis example 6]

A reaction liquid was prepared by charging acrylonitrile (45.0 g, 0.848 mol; product of Wako Pure Chemical Industries, Ltd.), methoxytriethylene glycol acrylate (6.04 g, 0.0277 mol; product of Aldrich Co.), acrylic acid (3.33 g, 0.0462 mol; product of Wako Pure Chemical Industries, Ltd.), potassium persulfate as a polymerization initiator (1.175 mg, 0.0043 mol, 0.47 mol%; product of Wako Pure Chemical Industries, Ltd.), $\alpha$-methyl styrene dimer as a chain-transfer agent (product of Wako Pure Chemical Industries, Ltd.), 135 mg, and purified water (product of Wako Pure Chemical Industries, Ltd.), 450 mL, under a nitrogen atmosphere into a separable flask with a capacity 1000 mL that had a stirrer, a thermometer, and a cooling pipe mounted thereon. The reaction liquid was stirred for 3 h at 60°C and for 3 h at 80°C under vigorous stirring. After cooling to room temperature, the reaction liquid was suction filtered and the precipitated resin was separated by filtration. The separated resin was washed with 300 mL of purified water (product of Wako Pure Chemical Industries, Ltd.). The washed resin was dried for 24 h in a vacuum tube drier at 60°C/133 Pa (1 mm Hg), and a polymer (b) (polyacrylonitrile copolymer) was obtained. Yield: 51.7 g, yield ratio: 95.0%, mass-average molecular weight 1,100,000, dispersivity 9.6, and glass transition temperature 115°C.
Further, the obtained polyacrylonitrile copolymer, 25 g, and N-methyl pyrrolidone, 225 g, were then added to a four-neck round-bottom flask with a capacity of 200 mL equipped with a condenser, a stirrer, and a nitrogen feed tube, heating and dissolution were performed at 120°C, and a varnish (resin fraction 10%) of polymer (b) was obtained.

<Examples 1 to 13>

The varnishes of polymer (a) prepared in Synthesis Examples 1 to 4 and the varnish of polymer (b) prepared in Synthesis Example 6 were homogenously mixed at ratios shown in Table 1, the content of resin fraction was adjusted to 15 wt.% with N-methyl pyrrolidone (NMP), and then pressure filtration was performed by using a 1000-mesh steel filter. Then, stirring was conducted for 5 min at room temperature (varnish viscosity 2.5 Pa·s to 4.5 Pa·s, pot life 72 h or more) under reduced pressure (133 Pa (1 mm Hg)) by using a stirring defoaming device (trade name: Awatori Rentaro, product of Thinky Corp., rotation speed 600 rpm, revolution speed 1800 rpm). The varnishes obtained were cast on glass plates with an applicator (gap 300 to 500 μm) and then dried in a blow drier for 0.5 h at 120°C, for 1 h at 160°C, for 1 h at 180°C, and then for 0.25h at 200°C to obtain membranes with a thickness of about 40 μm. The membranes were impregnated for 2 h with a 10% aqueous solution of sulfuric acid at a temperature of 70°C, washed with distilled water, and dried naturally to obtain polymer electrolyte membranes of Examples 1 to 13.

<Examples 14 to 20>

The varnishes of polymer (a) prepared in Synthesis Examples 3 and 4 and the varnish of polymer (b) prepared in Synthesis Example 6 were homogenously mixed at ratios shown in Table 1, the content of resin fraction was adjusted to 15 wt.% with N-methyl pyrrolidone, and then pressure filtration was performed by using a 1000-mesh steel filter. Then, stirring was conducted for 5 min at room temperature (varnish viscosity 2.5 Pa·s to 4.5 Pa·s, pot life 72 h or more) under reduced pressure (133 Pa (1 mm Hg)) by using a stirring defoaming device (trade name: Awatori Rentaro, product of Thinky Corp., rotation speed 600 rpm, revolution speed 1800 rpm). The varnishes obtained were cast on glass plates with an applicator (gap 120 μm), a polyethylene porous membrane (trade name: High-Pore, product of Asahi Chemical Co., Ltd., membrane thickness 25 μm, pore diameter 0.5 μm) was placed on the cast layer, and the varnish was then cast on the polyethylene porous membrane with an applicator (gap 220 μm). The resultant structure was dried in a blow drier for 1 h at 100°C, for 1 h at 120°C, for 0.5 h at 140°C, for 0.25 h at 160°C, for 0.25 h at 180°C, and then for 0.25h at 200°C to obtain membranes with a thickness of about 40 μm. The membranes were impregnated for 2 h with a 10% aqueous solution of sulfuric acid at a temperature of 70°C, washed with distilled water, and dried naturally to obtain polymer electrolyte membranes of Examples 14 to 20.

<Examples 21 to 25>

The varnishes of polymer (a) prepared in Synthesis Examples 3 and 4 and the varnish of polymer (b) prepared in Synthesis Example 6 were homogenously mixed at ratios shown in Table 1, the content of resin fraction was adjusted to 15 wt.% with N-methyl pyrrolidone, and then pressure filtration was performed by using a 1000-mesh steel filter (varnish viscosity 2.5 Pa·s to 4.5 Pa·s, pot life 72 h or more). The varnishes were allowed to stay for 12 h at room temperature, and the varnishes obtained were coated on a PET film and dried thereon with a coating apparatus (line speed: 0.2 m/min, drying furnace 1: furnace length 1 m, 100°C, blow rate 5 m/sec, drying furnace 2: furnace length 1 m, 120°C, blow rate 6.5 m/sec, gap 500 μm). The membranes obtained were peeled off from the PET film and immersed for 1 h at room temperature in a toluene-methanol mixed solution (concentration 50%, solvent mixing ratio 1 : 1) of 3-glycidoxypropyltrimethoxysilane (trade name: KBM-403; product of Shin-Etsu Chemical Co., Ltd.). Then, the 3-glycidoxypropyltrimethoxysilane solution that adhered to the surface was washed off with toluene, and the membranes fixed to a stainless steel frame were heated for 1 h at 160°C in a blow drier to obtain membranes with a thickness of about 45 μm. The membranes were removed from the frame, immersed for 2 h into a 10% aqueous solution of sulfuric acid at 70°C and then washed with distilled water and dried naturally to obtain polymer electrolyte membranes of Examples 21 to 25.

<Examples 26 to 30>

The varnishes of polymer (a) prepared in Synthesis Examples 3 and 4, the varnish of polymer (b) prepared in Synthesis Example 6, and 4,4'-dihydroxy-3,3',5,5'-tetrahydroxymethylbiphenyl (trade name: TML-p,p'-BPF, product of Honshu Chemical Industries Co., Ltd.) were homogenously mixed at ratios shown in Table 1, the content of resin fraction was adjusted to 15 wt.% with N-methyl pyrrolidone, and then pressure filtration was performed by using a 1000-mesh steel filter. Then, stirring was conducted for 5 min at room temperature (varnish viscosity 2.5 Pa·s to 4.5 Pa·s, pot life 72 h or more) under reduced pressure (1 mm Hg) by using a stirring defoaming device (trade name: Awatori Rentaro, product of Thinky Corp., rotation speed 600 rpm, revolution speed 1800 rpm). The varnishes obtained were cast on glass plates with an applicator (gap 300 to 500 μm) and then dried in a blow drier for 1 h at 200°C to obtain membranes with a thickness of about 50 μm. The membranes were impregnated for 2 h with a 10% aqueous solution of sulfuric acid at a temperature of 70°C, washed with distilled water, and dried naturally to obtain polymer electrolyte membranes of

Examples 26 to 30.

<Comparative Example 1>

Nafion 117 (Du Pont Corp.) was uses in a Comparative Example 1.

<Comparative Example 2>

A membrane was fabricated in the same manner as in Examples 1 to 15, except that only the varnish prepared in Synthesis Example 1 was used, and a membrane with a thickness of about 75 μm was obtained.

<Fabrication of electrode - polymer electrolyte membrane joint>

<Example 31>

A total of 0.72 g of catalyst-supporting carbon particles (TEC10V30E, product of Tanaka Precious Metals Co., Ltd.) with a content ratio of supported platinum of 30 wt.% was wetted with water and then homogeneously mixed and dispersed with 8.6 g of Nafion® solution (5% Nafion® solution, product of Du Pont Corp.) to prepare a catalyst paste A (viscosity 3.0 Pa·s). The catalyst paste A was coated with an applicator on one surface of a Teflon® film and dried to form a catalyst layer $A_1$ on the Teflon® film. Then, 0.72 g of catalyst-supporting carbon particles (TEC61V33E, product of Tanaka Precious Metals Co., Ltd.) with a content ratio of supported platinum of 33 wt.% was wetted with water and then homogeneously mixed and dispersed with 8.6 g of Nafion® solution (5% Nafion® solution, product of Du Pont Corp.) to prepare a catalyst paste B (viscosity 3.5 Pa·s). The catalyst paste B was coated with an applicator on one surface of a Teflon® film and dried to form a catalyst layer $B_1$ on the Teflon® film. The catalyst layers $A_1$ and $B_1$ were then disposed so as to be in contact with the polymer electrolyte membrane C obtained in Example 1 between press plates of a flat-plate press and clamped for 3 min under conditions of 160°C, 5 MPa. The Teflon® film was then peeled off the polymer electrolyte membrane C, thereby transferring the catalyst layer onto the polymer electrolyte membrane C. Carbon paper subjected to water repellent treatment was then placed on both surfaces and hot pressing was again conducted for 3 min under conditions of 160°C, 5 MPa, thereby producing an electrode - polymer electrolyte membrane joint $C_1$ (thickness of catalyst layer $A_1$ is 150 μm, thickness of catalyst layer $B_1$ is 150 μm).

<Example 32>

An electrode - polymer electrolyte membrane joint $D_1$ was fabricated in the same manner as in Example 31, except that the polymer electrolyte membrane D obtained in Example 2 was used instead of the polymer electrolyte membrane C.

<Example 33>

An electrode - polymer electrolyte membrane joint $E_1$ was fabricated in the same manner as in Example 31, except that the polymer electrolyte membrane E obtained in Example 3 was used instead of the polymer electrolyte membrane C.

<Example 34>

An electrode - polymer electrolyte membrane joint $F_1$ was fabricated in the same manner as in Example 31, except that the polymer electrolyte membrane F obtained in Example 4 was used instead of the polymer electrolyte membrane C.

<Example 35>

An electrode - polymer electrolyte membrane joint $G_1$ was fabricated in the same manner as in Example 31, except that the polymer electrolyte membrane G obtained in Example 5 was used instead of the polymer electrolyte membrane C.

<Comparative Example 3>

An electrode - polymer electrolyte membrane joint P was fabricated in the same manner as in Example 31,

except that the polymer electrolyte membrane Nafion® 117 used in Comparative Example 1 was used instead of the polymer electrolyte membrane C.

<Comparative Example 4>

An electrode - polymer electrolyte membrane joint T was fabricated in the same manner as in Example 31, except that the polymer electrolyte membrane obtained in Comparative Example 2 was used instead of the polymer electrolyte membrane C.

<Fabrication of fuel cell>

<Example 36>

Teflon® sheets for fuel leak prevention, an anode cell, a cathode cell, and collector plates were arranged as shown in FIG. 3 on both sides of the electrode - polymer electrolyte membrane joint $C_1$ obtained in Example 31. Finally, the entire structure was fixed with a special bolt, and a fuel cell $C_2$ (FC0501SP-REF, electrode surface area 5 $cm^2$, average pore diameter in electrode 2 μm, gap between electrodes 40%, serpentine flow; product of Electrochem., Inc.) was thus fabricated.

<Example 37>

A fuel cell $D_2$ was fabricated in the same manner as in Example 36, except that the electrode - polymer electrolyte membrane joint $D_1$ obtained in Example 32 was used.

<Example 38>

A fuel cell $E_2$ was fabricated in the same manner as in Example 36, except that the electrode - polymer electrolyte membrane joint $E_1$ obtained in Example 33 was used.

<Example 39>

A fuel cell $F_2$ was fabricated in the same manner as in Example 36, except that the electrode - polymer electrolyte membrane joint $F_1$ obtained in Example 34 was used.

<Example 40>

A fuel cell $G_2$ was fabricated in the same manner as in Example 36, except that the electrode - polymer electrolyte membrane joint $G_1$ obtained in Example 35 was used.

<Comparative Example 5>

A fuel cell $P_1$ was fabricated in the same manner as in Example 36, except that the electrode - polymer electrolyte membrane joint P obtained in Comparative Example 3 was used.

<Comparative Example 6>

A fuel cell $T_1$ was fabricated in the same manner as in Example 36, except that the electrode - polymer electrolyte membrane joint T obtained in Comparative Example 4 was used.

Methanol permeability evaluation results for the membranes obtained in Examples 1 to 30 and Comparative Examples 1 to 2 are shown in Table 1. Methanol permeability of the membranes of Examples 1 to 30 is clearly less than that of the membranes of Comparative Examples 1 to 2.

[Table 1]

| Item | Compounded amounts (g) | | | | | | | | (a)/(b) ratio | Membrane properties | | | |
|---|---|---|---|---|---|---|---|---|---|---|---|---|---|
| | Varnish of Synthesis Example 1 | Varnish of Synthesis Example 2 | Varnish of Synthesis Example 3 | Varnish of Synthesis Example 4 | Varnish of Synthesis Example 5 | Varnish of Synthesis Example 6 | TML-p,p'-BPF | NMP for adjustment of resin fraction | (a)/(b) | Proton conductance (S/cm) @ 25°C, RH 100% | Membrane resistance ($m\Omega cm^2$)@ 25°C, RH 100% | Methanol permeation coefficient ($kg\mu m/m^2h$)@ 60/10% | Membrane thickness ($\mu m$) |
| Example 1 | 20 | | | | | 30 | | 16.7 | 80/20 | 0.0667 | 75 | 25.8 | 50 |
| Example 2 | 18 | | | | | 27 | | 15.0 | 70/30 | 0.0449 | 89 | 18.0 | 40 |
| Example 3 | 15 | | | | | 35 | | 8.3 | 60/40 | 0.0270 | 148 | 13.4 | 40 |
| Example 4 | 4.3 | | | | | 15.05 | | 0.7 | 50/50 | 0.0150 | 266 | 2.0 | 40 |
| Example 5 | | 20 | | | | 17.5 | | 20.8 | 80/20 | 0.0241 | 178 | 30.1 | 43 |
| Example 6 | | 18 | | | | 27 | | 15.0 | 70/30 | 0.0168 | 250 | 3.3 | 42 |
| Example 7 | | | 20 | | | 17.5 | | 20.8 | 80/20 | 0.0240 | 171 | 28.7 | 41 |
| Example 8 | | | 21 | | | 24.5 | | 19.8 | 75/25 | 0.0266 | 150 | 24.0 | 40 |
| Example 9 | | | 18 | | | 27 | | 15.0 | 70/30 | 0.0180 | 244 | 2.2 | 44 |
| Example 10 | | | 15 | | | 35 | | 8.3 | 60/40 | 0.0130 | 346 | 2.3 | 45 |

(continued)

| Item | Compounded amounts (g) | | | | | | | | (a)/(b) ratio | Membrane properties | | | |
|---|---|---|---|---|---|---|---|---|---|---|---|---|---|
| | Varnish of Synthesis Example 1 | Varnish of Synthesis Example 2 | Varnish of Synthesis Example 3 | Varnish of Synthesis Example 4 | Varnish of Synthesis Example 5 | Varnish of Synthesis Example 6 | TML-p,p'-BPF | NMP for adjustment of resin fraction | (a)/(b) | Proton conductance (S/cm) @ 25°C, RH 100% | Membrane resistance ($m\Omega cm^2$)@ 25°C, RH 100% | Methanol permeation coefficient ($kg\mu m/m^2h$)@ 60/10% | Membrane thickness ($\mu m$) |
| Example 11 | | | 10 | | | 35 | | 1.7 | 50/50 | 0.0110 | 381 | 2.1 | 42 |
| Example 12 | | | | 15 | | 35 | | 8.3 | 60/40 | 0.0210 | 243 | 70.9 | 51 |
| Example 13 | | | | 10 | | 35 | | 1.7 | 50/50 | 0.0080 | 538 | 12.9 | 43 |
| Example 14 | | | 27 | | | 10.5 | | 32.5 | 90/10 | 0.0135 | 296 | 3.5 | 40 |
| Example 15 | | | 20 | | | 17.5 | | 20.8 | 80/20 | 0.0102 | 381 | 1.9 | 39 |
| Example 16 | | | | 27 | | 10.5 | | 32.5 | 90/10 | 0.0283 | 120 | 11.6 | 34 |
| Example 17 | | | | 20 | | 17.5 | | 20.8 | 80/20 | 0.0154 | 260 | 5.2 | 40 |
| Example 18 | | | | | 27 | 10.5 | | 32.5 | 90/10 | 0.0590 | 70 | 48.9 | 41 |
| Example 19 | | | | | 20 | 17.5 | | 20.8 | 80/20 | 0.0312 | 128 | 47.6 | 40 |
| Example 20 | | | | | 18 | 27 | | 15.0 | 70/30 | 0.0133 | 300 | 7.2 | 40 |
| Example 21 | 20 | | | | | 17.5 | | 20.8 | 80/20 | 0.0384 | 125 | 2.4 | 48 |

(continued)

| Item | Compounded amounts (g) | | | | | | | | (a)/(b) ratio | Membrane properties | | | |
|---|---|---|---|---|---|---|---|---|---|---|---|---|---|
| | Varnish of Synthesis Example 1 | Varnish of Synthesis Example 2 | Varnish of Synthesis Example 3 | Varnish of Synthesis Example 4 | Varnish of Synthesis Example 5 | Varnish of Synthesis Example 6 | TML-p,p'-BPF | NMP for adjustment of resin fraction | (a)/(b) | Proton conductance (S/cm) @ 25°C, RH 100% | Membrane resistance (m$\Omega$cm$^2$)@ 25°C, RH 100% | Methanol permeation coefficient (kg$\mu$m/m$^2$h )@ 60/10% | Membrane thickness ($\mu$m) |
| Example 22 | | 20 | | | | 17.5 | | 20.8 | 80/20 | 0.0234 | 197 | 2.3 | 46 |
| Example 23 | | | 20 | | | 17.5 | | 20.8 | 80/20 | 0.0281 | 167 | 2.4 | 47 |
| Example 24 | | | | 20 | | 17.5 | | 20.8 | 80/20 | 0.0433 | 104 | 4.5 | 45 |
| Example 25 | | | | | 20 | 17.5 | | 20.8 | 80/20 | 0.0517 | 89 | 13.8 | 46 |
| Example 26 | 20 | | | | | 17.5 | 0.7 | 20.8 | 80/20 | 0.0201 | 224 | 11.6 | 45 |
| Example 27 | | 20 | | | | 17.5 | 0.7 | 20.8 | 80/20 | 0.0106 | 396 | 14.7 | 42 |
| Example 28 | | | 20 | | | 17.5 | 0.7 | 20.8 | 80/20 | 0.0102 | 392 | 14.0 | 40 |
| Example 29 | | | | 20 | | 17.5 | 0.7 | 20.8 | 80/20 | 0.0267 | 150 | 24.0 | 40 |
| Example 30 | | | | | 20 | 17.5 | 0.7 | 20.8 | 80/20 | 0.0569 | 72 | 49.2 | 41 |
| Comparative Example 1 | | | | | | | | | | 0.0781 | 64 | 234.0 | 50 |

(continued)

| Item | Compounded amounts (g) | | | | | | | | (a)/(b) ratio | Membrane properties | | | |
|---|---|---|---|---|---|---|---|---|---|---|---|---|---|
| | Varnish of Synthesis Example 1 | Varnish of Synthesis Example 2 | Varnish of Synthesis Example 3 | Varnish of Synthesis Example 4 | Varnish of Synthesis Example 5 | Varnish of Synthesis Example 6 | TML-p,p'-BPF | NMP for adjustment of resin fraction | (a)/(b) | Proton conductance (S/cm) @ 25°C, RH 100% | Membrane resistance (mΩcm$^2$)@ 25°C, RH 100% | Methanol permeation coefficient (kgμm/m$^2$h)@ 60/10% | Membrane thickness (μm) |
| Comparative Example 2 | 30 | | | | | | | | 100 | 0.1000 | 75 | 510.0 | 75 |

Swelling ratio evaluation results for membranes obtained in Examples 2, 3, 5 to 7, 16 and Comparative Example 1 are shown in Table 2. The swelling ratio of the membranes of Examples 2, 3, 5 to 7, 16 is clearly less than that of the membrane of Comparative Example 1.

[Table 2]

| Item | Methanol concentration (%) | Temperature (°C) | Time (h) | Surface area swelling ratio (%) |
|---|---|---|---|---|
| Example 2 | 0 | 50 | 3 | 116 |
| | 0 | 50 | 6 | 118 |
| Example 3 | 10 | 40 | 1 | 112 |
| | 30 | 40 | 1 | 116 |
| | 50 | 40 | 1 | 123 |
| Example 5 | 10 | 60 | 6 | 126 |
| | 10 | 60 | 12 | 113 |
| | 20 | 60 | 6 | 134 |
| | 20 | 60 | 12 | 133 |
| Example 6 | 10 | 40 | 1 | 107 |
| | 30 | 40 | 1 | 109 |
| | 50 | 40 | 1 | 115 |
| Example 7 | 10 | 40 | 1 | 105 |
| | 30 | 40 | 1 | 105 |
| | 50 | 40 | 1 | 109 |
| Example 16 | 10 | 60 | 6 | 114 |
| | 10 | 60 | 12 | 114 |
| | 20 | 60 | 6 | 113 |
| | 20 | 60 | 12 | 113 |
| | 30 | 60 | 6 | 118 |
| | 30 | 60 | 12 | 115 |
| Comparative Example 1 | 10 | 40 | 1 | 123 |
| | 30 | 40 | 1 | 137 |
| | 50 | 40 | 1 | 144 |

Electrochemical evaluation of fuel cells $C_2$, $D_2$, $E_2$, $F_2$, $G_2$, $P_1$, $T_1$ obtained in Examples 36 to 40 and Comparative Examples 5 to 6 was conducted under conditions of a cell temperature of 35°C and natural diffusion of 20 wt.% aqueous solution of methanol at 6 mL/min to the anode side and air to the cathode side. The results are shown in FIG. 4.
The results shown in FIG. 4 clearly demonstrate that the fuel cells of Examples 37 to 40 have higher output than the fuel cells of Comparative Examples 5 to 6.

<Reference Example 1: Observations of phase-separated structure of polymer electrolyte membranes>

In order to confirm that the polymer electrolyte membrane in accordance with the present invention has a phase-separated structure in which a plurality of domain phases (electrolyte polymer (a)) are dispersed in a matrix phase (polymer (b)), the domain phases (electrolyte polymer (a)) were etched and removed from the polymer electrolyte membrane and the structure of the matrix phase of the remaining polymer (b) was observed.
More specifically, the polymer electrolyte membranes obtained in Examples 1 to 4 were cut to 2 cm 2 cm squares, dried for 60 min with a blow drier at 120°C, immersed in a solution (Fenton reagent) prepared by adding 5 ppm $FeSO_4$ to 3%

hydrogen peroxide water in a pressure-resistance hermetic container, and held for 4 h at 80°C. The samples were washed with distilled water and dried for 30 min with a blow drier at 120°C, and the front surface and cleavage surface (cross section) of the samples were obtained under a scanning electron microscope (SEM). The results are shown in FIGS. 5 to 12.

| | Example 1 | Example 2 | Example 3 | Example 4 |
|---|---|---|---|---|
| Front surface | FIG. 5 | FIG. 6 | FIG. 7 | FIG. 8 |
| Cross section (membrane thickness direction) | FIG. 9 | FIG. 10 | FIG. 11 | FIG. 12 |
| Pore size (μm) | 3.1 | 0.77 | 0.34 | 0.17 |
| Porosity (%) | 80 | 70 | 60 | 50 |

(in the scale in the lower right side of each figure, 1 point = 0.3 μm)
The figures demonstrate that an infinite number of pores with a diameter from several micron to a submicron order are present. There are apparently pores that appeared due to leaching of the electrolyte polymer (a) in accordance with the present invention. Therefore, the structure observed under SEM clearly demonstrates a phase separated structure of the polymer electrolyte membrane in accordance with the present invention.

<Reference example 2: Measurement of elastic modulus of polymer electrolyte membrane>

Elastic modulus of polymer electrolyte membranes of Examples 2 and 4 were measured with a viscoelastic analyzer RSA-2 manufactured by Rheometrix Inc. (sample size: width 8 mm × length 3.5 cm × thickness 1 mm, temperature rise rate: 5°C/min, measurement frequency: 10 Hz). The results are shown in FIG. 13 (Example 2) and FIG. 14 (Example 4).
In the figures, E' (Pa) is an elastic modulus (upper curve in the figures). Tan δ is an index indicating the amount of energy that is absorbed by a material when the material is deformed. This index is automatically obtained with the viscoelastic analyzer RSA-2. More specifically, this index is a ratio (E"/E') of storage elastic modulus (E' (Pa)) and loss elastic modulus (E" (Pa)) and is called "loss tangent" (loss coefficient). Because tan δ has two peaks, it is clear that the component (a) and component (b) are present independently from each other. This results demonstrates the membrane hardness (elastic modulus) and that the component (a) and component (b) are phase separated.

BRIEF DESCRIPTION OF THE DRAWINGS

FIG. 1 is a schematic drawing illustrating a cell for measuring methanol permeation ratio.
FIG. 2 is a schematic drawing illustrating an evaluation cell for measuring proton conductivity.
FIG. 3 is a schematic drawing of a fuel cell in accordance with the present invention.
FIG. 4 illustrates the relationship between current density and output in Examples 36 to 40, Comparative Example 5, and Comparative Example 6.
FIG. 5 is a SEM image of the front surface of Example 1.
FIG. 6 is a SEM image of the cross section of Example 1.
FIG. 7 is a SEM image of the front surface of Example 2.
FIG. 8 is a SEM image of the cross section of Example 2.
FIG. 9 is a SEM image of the front surface of Example 3.
FIG. 10 is a SEM image of the cross section of Example 3.
FIG. 11 is a SEM image of the front surface of Example 4.
FIG. 12 is a SEM image of the cross section of Example 4.
FIG. 13 shows results obtained in measuring elastic modulus in Example 2.
FIG. 14 shows results obtained in measuring elastic modulus in Example 4.

## Claims

1. A polymer electrolyte membrane comprising two phases: a domain phase comprising an electrolyte polymer (a) and a matrix phase comprising a polymer (b) that inhibits swelling of said component (a), wherein the membrane

has a substantially continuous three-dimensional structure in the domains of (a).

**2.** The polymer electrolyte membrane according to claim 1, wherein said component (b) comprises a resin having resistance to methanol and/or resistance to water.

**3.** The polymer electrolyte membrane according to claim 1, wherein said component (b) comprises a resin having a glass transition temperature (Tg) and/or a melting point of -30°C to 400°C.

**4.** The polymer electrolyte membrane according to claim 1, wherein said component (b) comprises at least one selected from the group consisting of polyimides, polyamides, polyesters, polyurethanes, polycarbonates, polyethers, polyphenylenes, polybenzimidazole, polyetherketones, polyethersulfones, silicone resins, fluororesins, poly(vinylidene fluoride), phenolic resins, epoxy resins, melamine resins, urea resins, furan resins, alkyd resins, acrylic resins, polyethylene, polypropylene, polystyrene, and/or copolymers thereof.

**5.** The polymer electrolyte membrane according to claim 1, wherein said component (b) comprises poly(meth)acrylonitrile and/or reaction products obtained by heating poly(meth)acrylonitrile.

**6.** The polymer electrolyte membrane according to claim 1, wherein said component (b) comprises poly(meth)acrylonitrile and/or resins having a cyclic structure obtained by heating poly(meth)acrylonitrile.

**7.** The polymer electrolyte membrane according to claim 1, wherein said component (a) is a polymer comprising a sulfonic acid group and/or a phosphoric acid group and/or a carboxyl group.

**8.** The polymer electrolyte membrane according to claim 1, further comprising an additive.

**9.** The polymer electrolyte membrane according to claim 8, wherein said additive is a silane coupling agent or a crosslinking agent.

**10.** The polymer electrolyte membrane according to claim 1, wherein a weight-average molecular weight of said component (a) is 1000-1,000,000, and a weight-average molecular weight of said component (b) is 1000-5,000,000.

**11.** The polymer electrolyte membrane according to claim 1, wherein a membrane thickness is 1-200 μm.

**12.** The polymer electrolyte membrane according to claim 1, wherein a size of said domain phase appearing on a surface of said polymer electrolyte membrane is 0.05-30 μm, as an average value of diameter thereof.

**13.** The polymer electrolyte membrane according to claim 1, wherein a content ratio of said component (b) to said component (a) is 1-500%.

**14.** The polymer electrolyte membrane according to claim 1, wherein ion-exchange equivalent weight (EW value) of said component (a) is 300-1500.

**15.** A method for manufacturing the polymer electrolyte membrane according to claim 1, comprising the steps of:

(1) preparing a polymer mixed liquid by melting said component (a) and said component (b) or dissolving the two components in a solvent; and
(2) producing a polymer electrolyte membrane by coating said polymer mixed liquid on a substrate and then drying.

**16.** A multilayer polymer electrolyte membrane comprising two or more layers of the polymer electrolyte membrane according to claim 1.

**17.** An electrode - polymer electrolyte membrane joint comprising an electrode and the polymer electrolyte membrane according to claim 1 that is disposed on said electrode.

**18.** A fuel cell using the electrode - polymer electrolyte membrane joint according to claim 17.

**19.** A polymer electrolyte membrane having a plurality of domain phases comprising an electrolyte polymer (a) and a

matrix phase comprising a polymer (b) that inhibits swelling of said electrolyte polymer, wherein at the surface of said polymer electrolyte membrane, said domain phases are separated from each other and dispersed in said matrix phase, and said domain phases are present so as to link one surface of said polymer electrolyte membrane with another surface thereof.

FIG.1

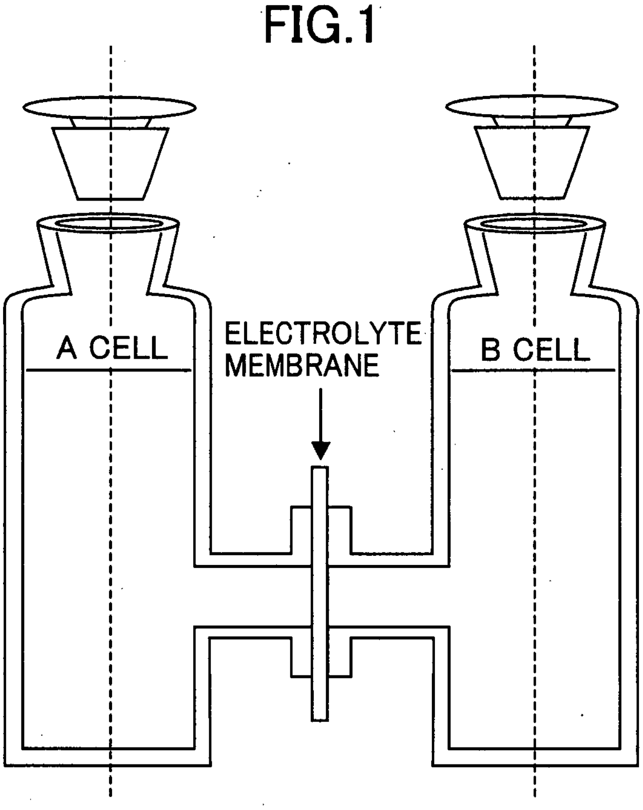
A CELL
ELECTROLYTE
MEMBRANE
B CELL

FIG.2

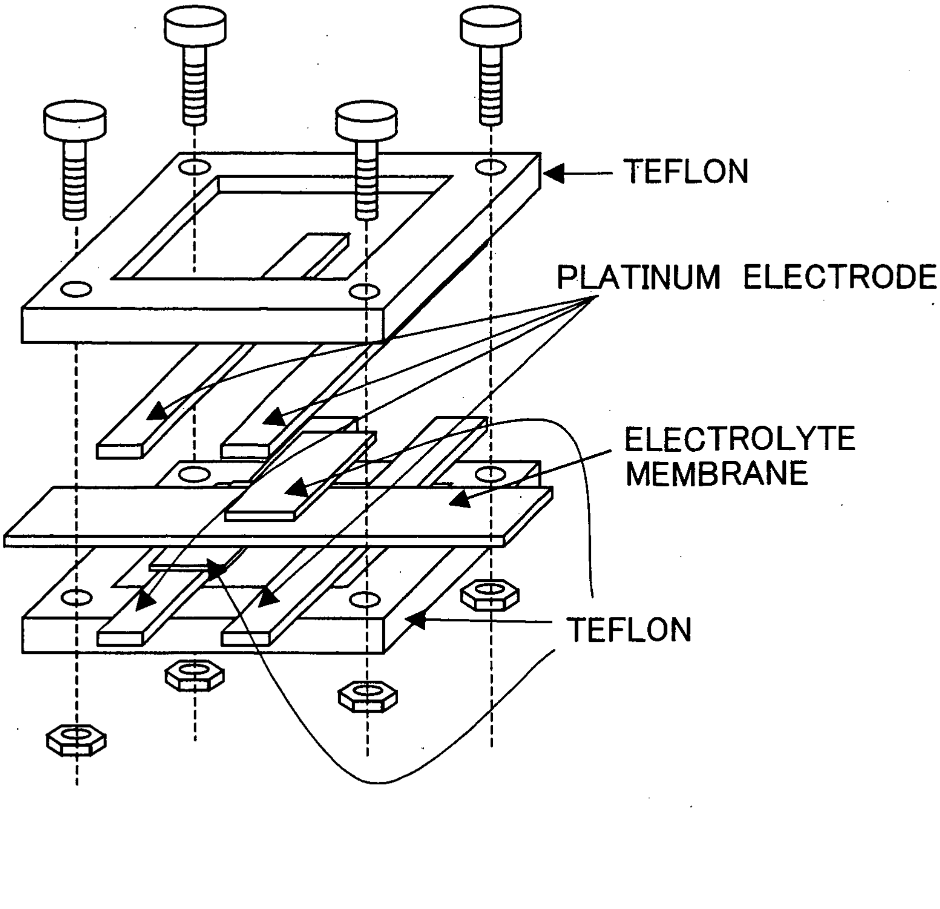
TEFLON
PLATINUM ELECTRODE
ELECTROLYTE
MEMBRANE
TEFLON

FIG.3

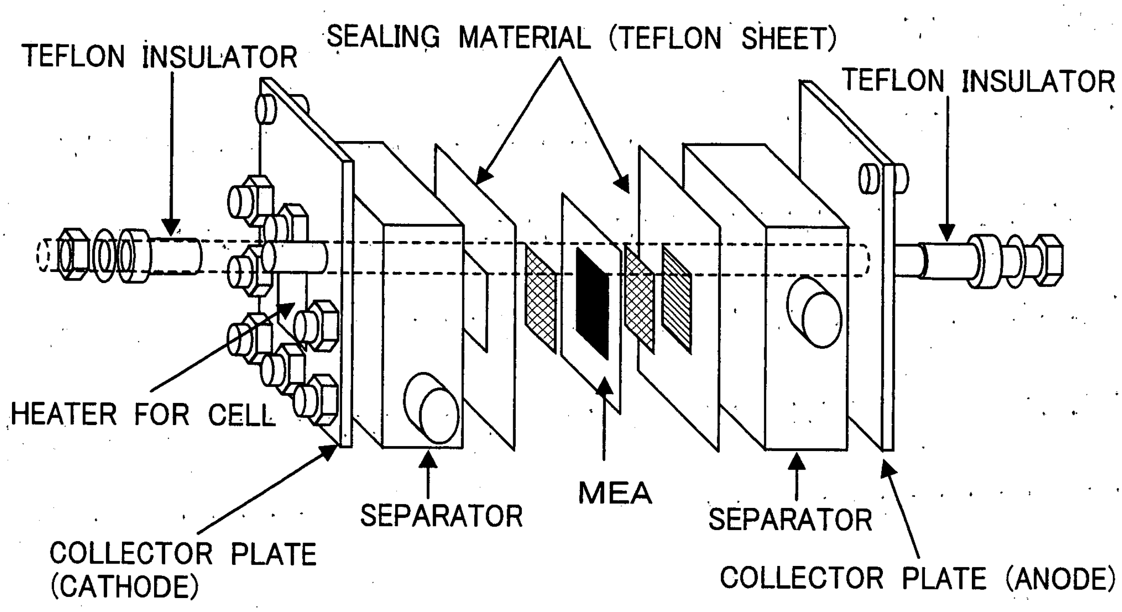
TEFLON INSULATOR
SEALING MATERIAL (TEFLON SHEET)
TEFLON INSULATOR
HEATER FOR CELL
SEPARATOR
MEA
SEPARATOR
COLLECTOR PLATE (CATHODE)
COLLECTOR PLATE (ANODE)

FIG.4

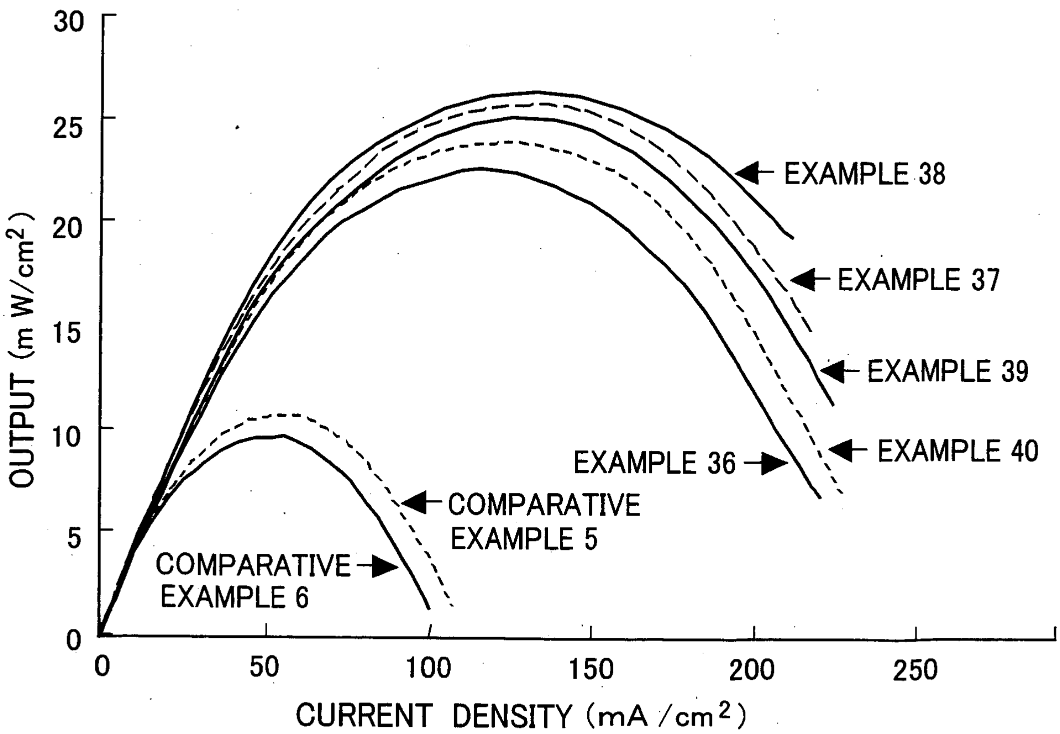
30
25
20
15
10
5
0
OUTPUT (m W/cm²)
0
50
100
150
200
250
CURRENT DENSITY (mA /cm²)
EXAMPLE 38
EXAMPLE 37
EXAMPLE 39
EXAMPLE 36
EXAMPLE 40
COMPARATIVE EXAMPLE 5
COMPARATIVE EXAMPLE 6

FIG.5

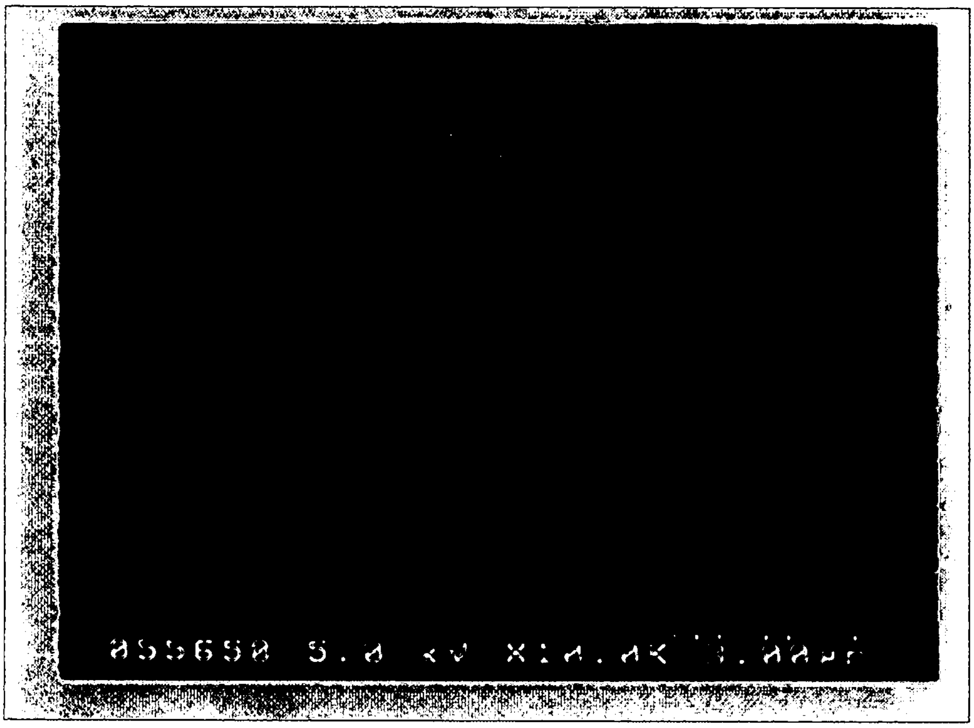

FIG.6

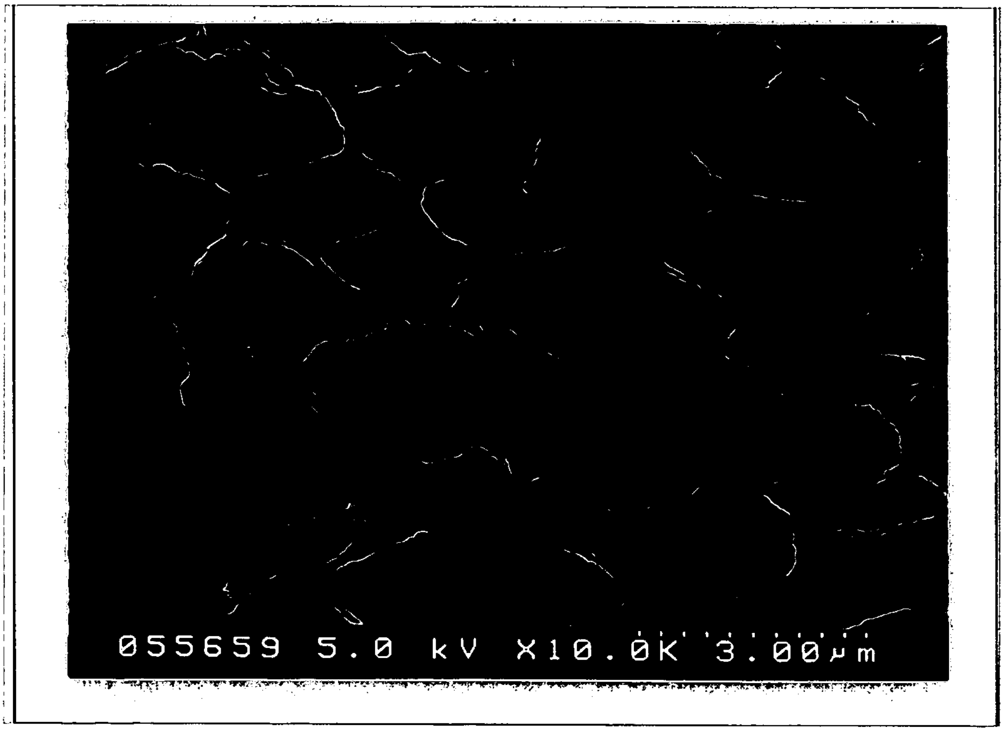

FIG.7

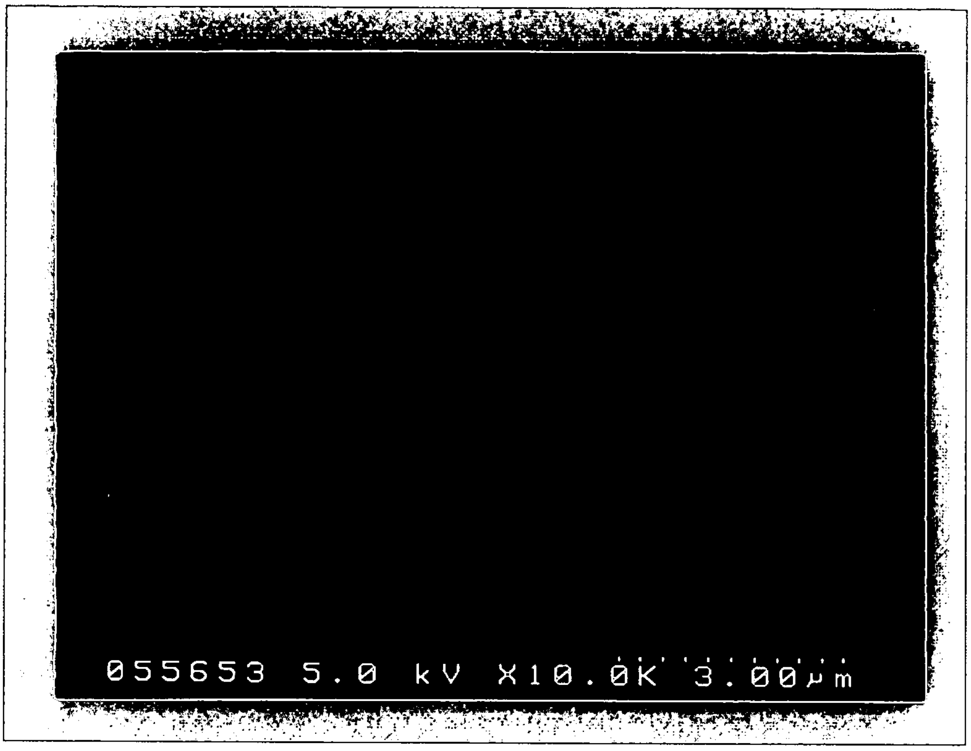


FIG.8

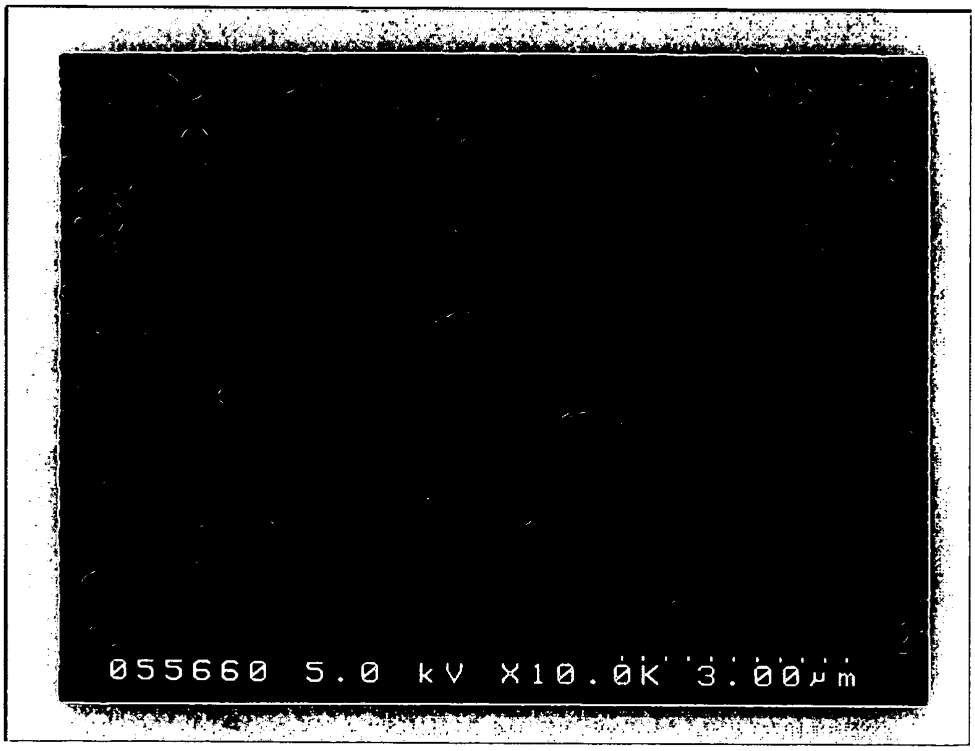

FIG.9

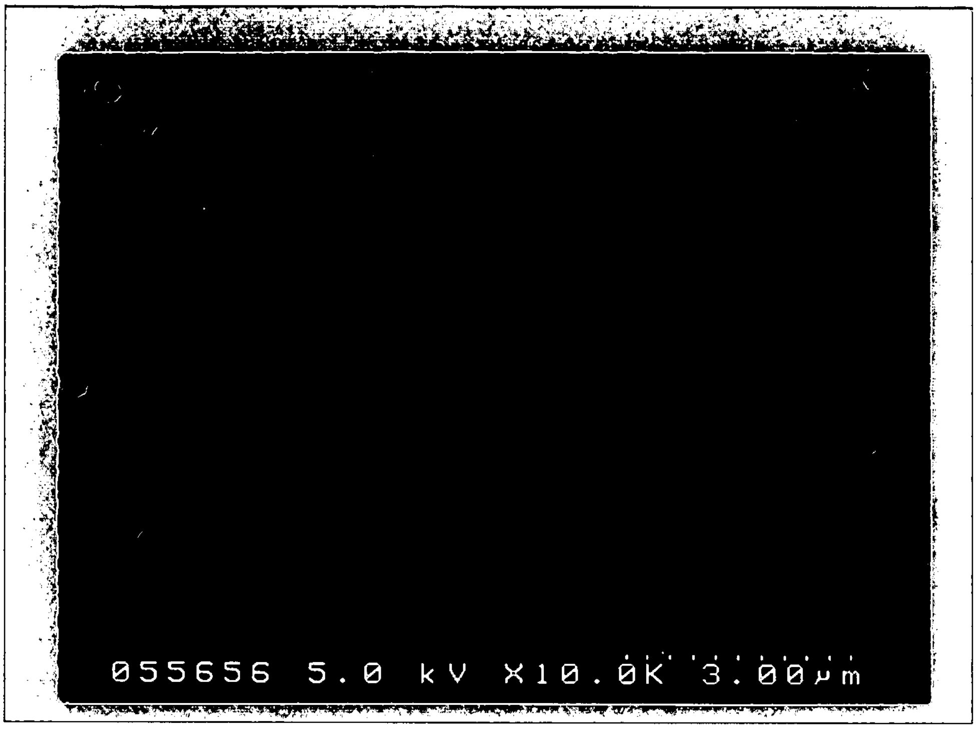


FIG.10

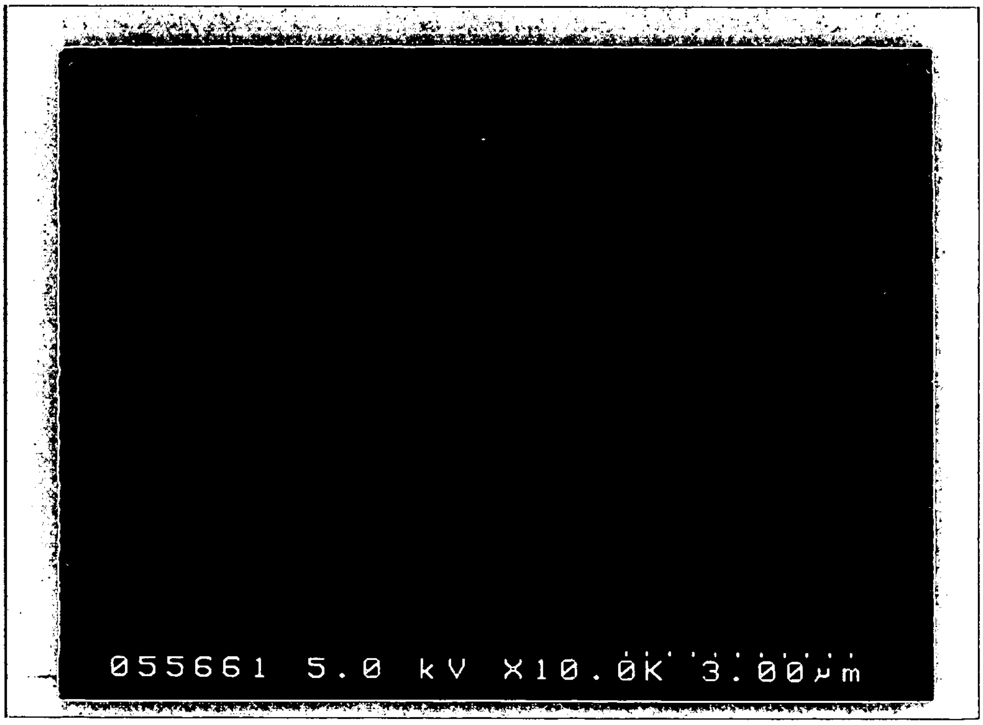

FIG.11

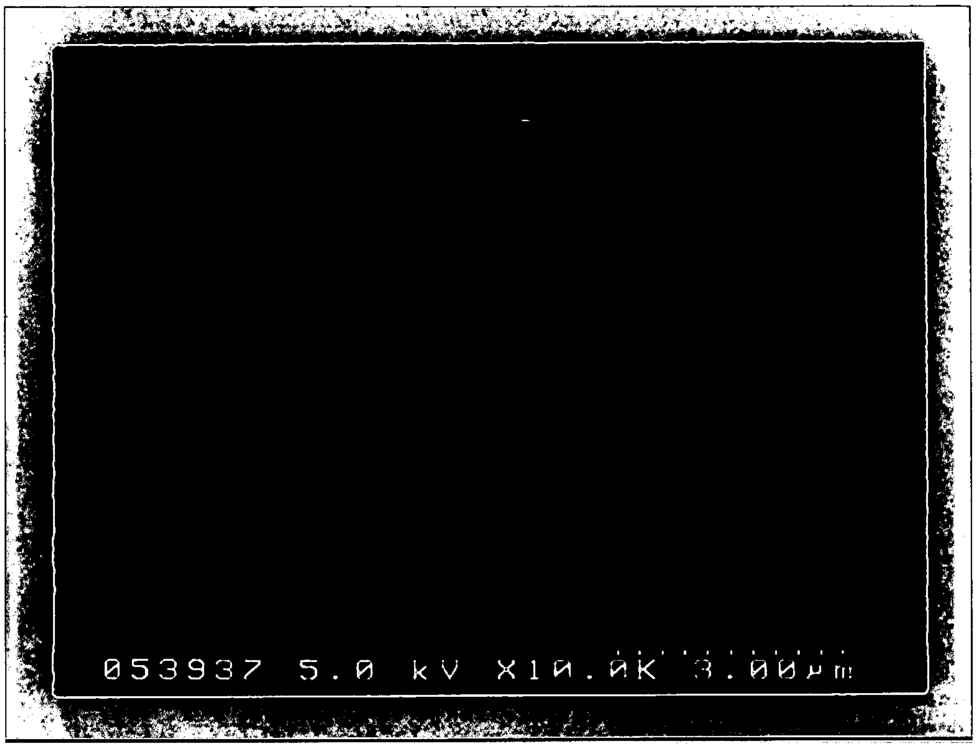


FIG.12

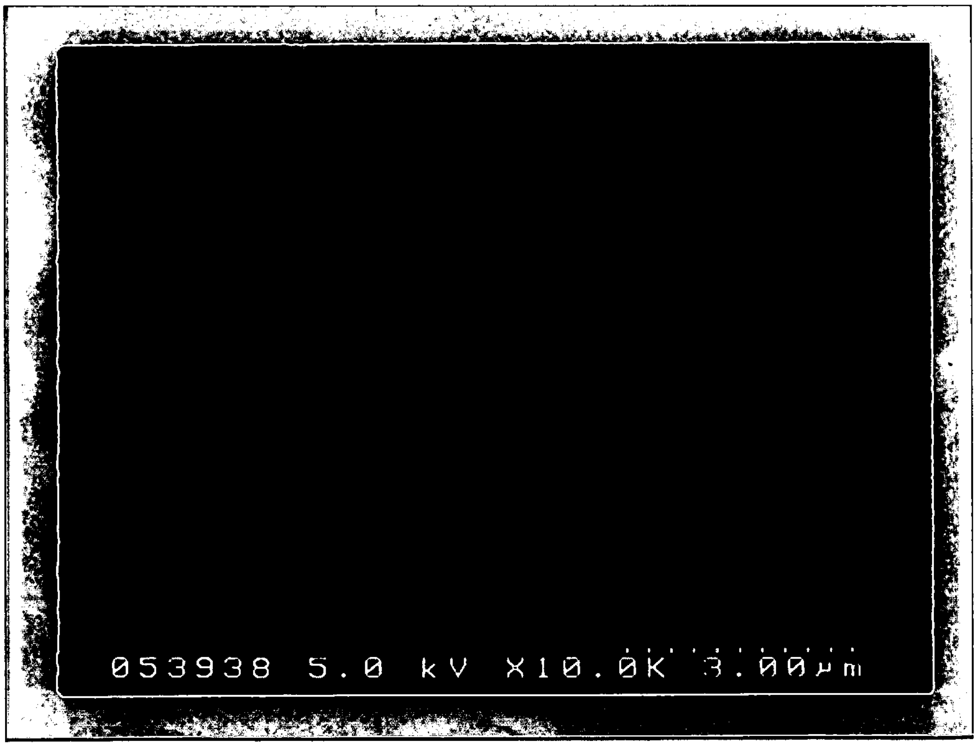

FIG.13

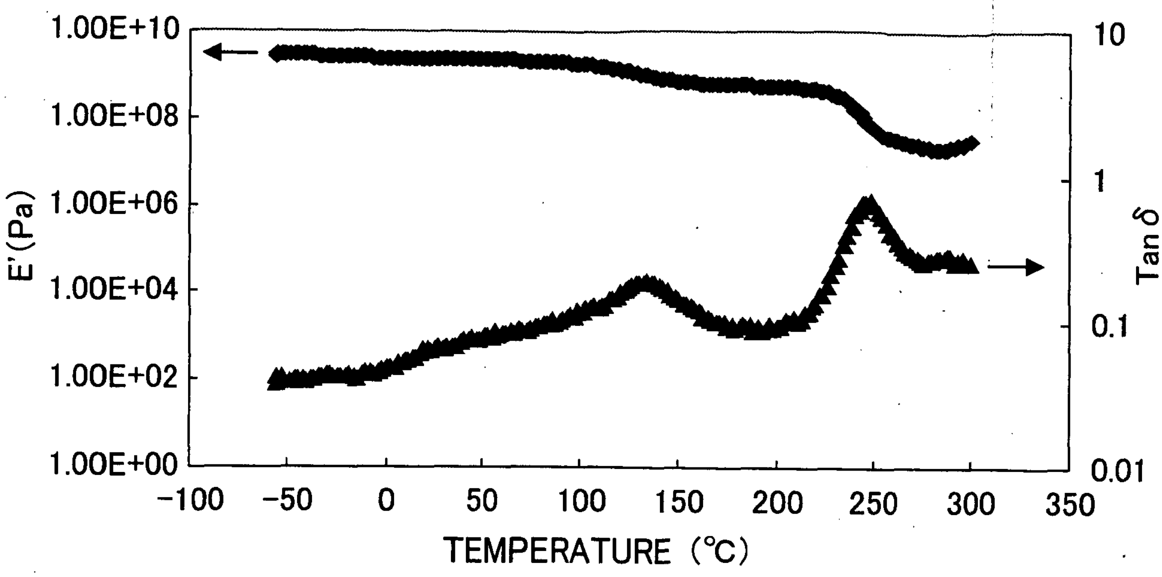
1.00E+10
1.00E+08
1.00E+06
1.00E+04
1.00E+02
1.00E+00
E'(Pa)
10
1
0.1
0.01
Tan δ
−100
−50
0
50
100
150
200
250
300
350
TEMPERATURE (℃)

FIG.14

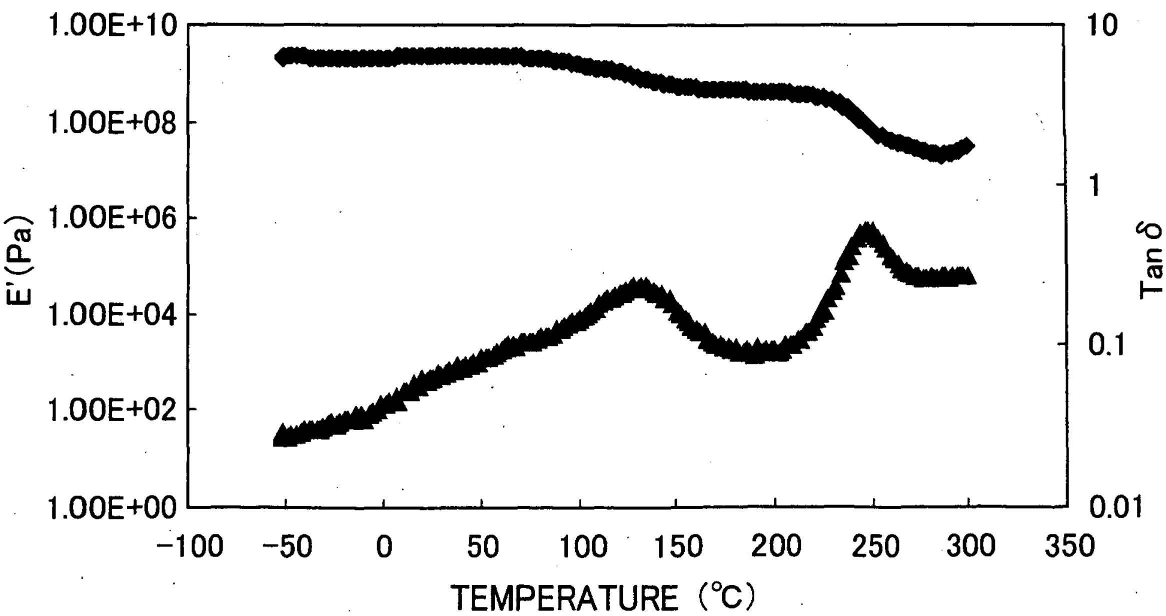
1.00E+10
1.00E+08
1.00E+06
1.00E+04
1.00E+02
1.00E+00
E'(Pa)
10
1
0.1
0.01
Tan δ
−100
−50
0
50
100
150
200
250
300
350
TEMPERATURE (℃)

**INTERNATIONAL SEARCH REPORT**

International application No.
PCT/JP2006/300007

A. CLASSIFICATION OF SUBJECT MATTER
***H01M8/02***(2006.01), ***H01B1/06***(2006.01), ***H01B13/00***(2006.01), ***H01M8/10***
(2006.01)

According to International Patent Classification (IPC) or to both national classification and IPC

B. FIELDS SEARCHED

Minimum documentation searched (classification system followed by classification symbols)
H01B1/06, H01B13/00, H01M8/02, H01M8/10

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)
WPI/L

C. DOCUMENTS CONSIDERED TO BE RELEVANT

| Category* | Citation of document, with indication, where appropriate, of the relevant passages | Relevant to claim No. |
|---|---|---|
| X<br>Y | JP 2003-535940 A (SRI International),<br>02 December, 2003 (02.12.03),<br>Claims; Par. Nos. [0017], [0021] to [0025],<br>[0035] to [0038], [0081]t o [0082]<br>& US 2002/0127454 A1<br>Claims; Par. Nos. [0023], [0027] to [0033],<br>[0043] to [0046], [0102] to [0103]<br>& EP 1290068 A | 1-7,11-19<br>8-10 |
| Y | JP 2004-362905 A (Nippon Telegraph And Telephone Corp.),<br>24 December, 2004 (24.12.04),<br>Par. Nos. [0017] to [0019]<br>(Family: none) | 8-9 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>22 March, 2006 (22.03.06) | Date of mailing of the international search report<br>04 April, 2006 (04.04.06) |
| Name and mailing address of the ISA/<br>Japanese Patent Office<br>Facsimile No. | Authorized officer<br><br>Telephone No. |

Form PCT/ISA/210 (second sheet) (April 2005)

**INTERNATIONAL SEARCH REPORT**

International application No.
PCT/JP2006/300007

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2004-6142 A (Nippon Shokubai Co., Ltd.), 08 January, 2004 (08.01.04), Claims (Family: none) | 8-9 |
| Y | JP 2004-355832 A (JSR Corp.), 16 December, 2004 (16.12.04), Par. Nos. [0010], [0027] (Family: none) | 10 |
| Y | JP 2004-335237 A (Toray Industries, Inc.), 25 November, 2004 (25.11.04), Par. No. [0067] (Family: none) | 10 |
| Y | JP 2004-319442 A (Toray Industries, Inc.), 11 November, 2004 (11.11.04), Par. No. [0024] (Family: none) | 10 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H693114 A
- JP 2003338298 A
- JP 2002083612 A
- WO 0054351 A
- WO 9954389 A
- JP 2003535940 A
- JP 2884189 B
- JP 2002226575 A
- JP 2809685 B
- JP H1021943 A
- JP H1045913 A
- JP 2004131662 A
- JP 2005063690 A
- JP 2005071609 A
- JP 2004253336 A
- JP 2004335119 A
- US 3282875 A
- JP 2000516014 A


### Non-patent literature cited in the description


- **K. KINOSHITA et al.** *J. Electrochem. Soc.,* 1990, vol. 137, 845